# EUROPEAN PATENT SPECIFICATION

(11) **EP 1 897 740 B1**
(45) Date of publication and mention of the grant of the patent: **20.03.2019**
(21) Application number: 07115601.2
(22) Date of filing: 04.09.2007
(51) Int. Cl.: B60K 7/00

(54) **WHEEL MOTOR DEVICE**
RADMOTORVORRICHTUNG
DISPOSITIF DE MOTEUR DE ROUE

(30) Priority: 05.09.2006 JP 2006240092; 05.09.2006 JP 2006240093; 05.09.2006 JP 2006240091; 03.10.2006 JP 2006271463
(43) Date of publication of application: 12.03.2008
(73) Proprietor: KANZAKI KOKYUKOKI MFG. CO., LTD., Amagasaki-shi, Hyogo 661-0981 (JP)
(72) Inventor: Yasuda, Toshifumi, Amagasaki-shi Hyogo 661-0981 (JP); Sasahara, Kengo, Amagasaki-shi Hyogo 661-0981 (JP); Ishii, Norihiro, Amagasaki-shi Hyogo 661-0981 (JP)
(74) Representative: Isarpatent

(56) References cited:
- EP-A1- 1 584 510
- EP-A2- 1 186 458
- US-A- 3 655 004
- US-B1- 6 672 058

## Description

### BACKGROUND OF THE INVENTION

### Field of the Invention

The present invention relates to a wheel motor device according to claim 1.

### Related Art

A wheel motor device equipped with a hydraulic motor main body which forms an HST in cooperation with a hydraulic pump main body operatively driven by a driving power source, a speed reduction gear mechanism for reducing a speed of a rotational output of the hydraulic motor main body, an output member for outputting the rotational output whose speed has been reduced by the speed reduction gear mechanism towards the corresponding driving wheel, and a casing for accommodating the hydraulic motor main body and the speed reduction gear mechanism is conventionally known (see , for example, US Patent No. 6,811,510, hereinafter referred to as a prior document 1).

The wheel motor device can be arranged close to the corresponding driving wheel. Accordingly, the working vehicle equipped with the wheel motor device could secure a free space between a pair of driving wheels thereby enhancing the degree of freedom in designing the working vehicle in comparison with a working vehicle including a mechanical differential gear device for differentially transmitting a power to a pair of driving wheels.

The hydraulic motor main body is driven by a pressurized hydraulic fluid from the hydraulic pump main body, and the temperature rises in the hydraulic pump main body and the hydraulic motor main body due to influence of friction or the like. Such temperature rise of the hydraulic motor main body leads to temperature rise or the like of the HST hydraulic fluid, thereby worsening the transmission efficiency of the HST.

In this regards, the prior document 1 discloses a configuration where a motor case for accommodating the hydraulic motor main body is arranged with a single drain port for opening the internal space, and the single drain port is fluidly connected to a fluid tank serving as a charge fluid source of the HST, which is formed by the hydraulic pump main body and the hydraulic motor main body, by way of an oil cooler.

That is, the wheel motor device disclosed in the prior document 1 is configured so as to cool the fluid overflowing from the motor case out of the fluid leaked from the hydraulic motor main body and stored in the motor case by means of the oil cooler and then flows the fluid, which has been cooled by the oil cooler, into the fluid tank.

However, in such configuration, the motor case is always filled with HST hydraulic fluid, which has a relatively high temperature, leaked from the hydraulic motor main body, and cannot sufficiently cool the hydraulic motor main body.

Further, the wheel motor device disclosed in the prior document 1 is configured so that a motor space for accommodating the hydraulic motor main body and a gear space for accommodating the speed reduction gear mechanism are fluidly connected by a fluid passage, resulting in a problem in that a lubricating fluid for the speed reduction gear mechanism and the HST hydraulic fluid cannot be distinguished, whereby a fluid having viscosity suited for the respective fluid cannot be used.

As disclosed in the prior document 1, a hydraulic drive working vehicle in which a front side hydraulic motor main body for operatively driving the front side driving wheel and a rear side hydraulic motor main body for operatively driving a rear side driving wheel are fluidly connected in series with respect to a single common hydraulic pump main body operatively driven by a driving power source is conventionally known.

Such hydraulic drive working vehicle has an advantage in that even if one of the front side driving wheel or the rear side driving wheel falls into a groove and the like so that the corresponding hydraulic motor main body is in a no-load or low-load state, the HST hydraulic fluid appropriately could be flown to the other high-load side hydraulic motor main body, while hydraulically driving both the front side and rear side hydraulic motor main bodies with the single hydraulic pump main body

However, the conventional hydraulic drive working vehicle is not sufficiently considered in a transmission efficiency at converting the hydraulic driving force input from the hydraulic pump main body to a mechanical rotational driving force output from the front side and rear side hydraulic motor main bodies, and thus HST transmission efficiency still needs to be improved.

In the wheel motor device disclosed in the prior document 1, the casing is formed with first and second kidney ports opened to a motor contacting surface to which the hydraulic motor main body slidably contacts, and first and second hydraulic fluid passages fluidly connected to the first and second kidney ports, respectively.

The first and second hydraulic fluid passages have ends opened to an outer surface of the casing to form connection ports (hydraulic fluid ports) through which the cooperating hydraulic pump main body is fluidly connected to the hydraulic motor main body.

However, in the conventional configuration, the first and second hydraulic fluid passages both have a single hydraulic fluid port, resulting in lowering the degree of freedom of design in arranging external conduits for fluidly connecting the hydraulic fluid ports and the hydraulic pump main body.

In some cases according to a specification, a pair of wheel motor devices arranged so as to respectively drive a pair of left and right driving wheels are hydraulically driven by a single hydraulic pump main body.

In such configuration, it is needed to fluidly connect first hydraulic fluid passages in both of the pair of wheel motor devices to a discharge side of the single hydraulic pump main body, and to fluidly connect second hydraulic fluid passages in both of the pair of wheel motor devices to a suction side of the single hydraulic pump main body. Another example for a wheel motor device is known by document US6672058 comprising an integrated-type hydrostatic transmission (HST), which integrally includes a hydraulic pump and a hydraulic motor.

In order to respond to the specification with using the conventional wheel motor device, it is necessary to provide a conduit having a first end fluidly connected to the discharge side of the hydraulic pump main body and a T-shaped joint having one end connected to a second end of the conduit and the other two ends fluidly connected to the first hydraulic fluid passages of the pair of left and right wheel motor devices. It is also necessary to provide a first conduit having a first end fluidly connected to the second hydraulic fluid port in one of the wheel motor devices, a second conduit having a first end fluidly connected to the second hydraulic fluid port in the other wheel motor device and a T-shaped joint having two ends fluidly and respectively connected to second ends of the first and second conduits and the remaining one end fluidly connected to the suction side of the hydraulic pump main body, resulting in a lower workability in piping.

Furthermore, as disclosed in the prior document 1, the motor-side first and second hydraulic fluid passages are fluidly connected to pump-side first and second hydraulic fluid passages in a pump unit cooperating with the wheel motor device by way of hydraulic fluid conduits fluidly connected to the respective hydraulic fluid port.

Meanwhile, the HST hydraulic fluid leaks out from the hydraulic motor main body itself as well as the contacting portion at which the hydraulic motor main body slidably contacts to the port block. The leakage fluid from the hydraulic motor main body is normally stored in the motor space in order to prevent the leakage fluid from leaking outside. Accordingly, the leakage fluid will flow out from the motor space unless some discharge configuration is arranged.

In this regards, the wheel motor device disclosed in the prior document 1 is configured so that the casing is provided with a drain port for opening the motor space outward, and the stored fluid in the motor space is discharged to a fluid reservoir such as an external tank via a drain conduit fluidly connected to the drain port.

However, since the conventional configuration requires the drain conduit in addition to the hydraulic fluid conduit, the number of external conduits in the entire working vehicle increases thereby deteriorating the degree of freedom of design and lowering the assembly work efficiency.

### SUMMARY OF THE INVENTION

In view of the prior art, it is the object of a first aspect of the present invention to provide a wheel motor device according to claim 1.

The following aspects are not part of the invention.

Further, it is another object of the first aspect of the present invention to provide a working vehicle including a wheel motor device with a hydraulic motor main body, a speed reduction gear mechanism for reducing a speed of a rotational output of the hydraulic motor main body, an output member for outputting the rotational output whose speed has been reduced by the speed reduction gear mechanism to a corresponding driving wheel, and a casing for accommodating the hydraulic motor main body and the speed reduction gear mechanism, the working vehicle capable of efficiently cooling the hydraulic motor main body, and also capable of using one fluid having viscosity suitable for a hydraulic fluid of an HST formed by the hydraulic motor main body and a hydraulic pump main body and using the other fluid having viscosity suitable for a lubricating fluid of the speed reduction gear mechanism

In view of the prior art, it is an object of a second aspect of the present invention to provide a hydraulic drive working vehicle in which front-side and rear-side hydraulic motor main bodies for operatively and respectively driving front-side and rear-side driving wheels are fluidly connected in series with respect to a single common hydraulic pump main body operatively driven by a driving power source, the working vehicle capable of enhancing the transmission efficiency of an HST formed by the hydraulic pump main body and the front-side and rear-side hydraulic motor main bodies while having a simplified structure.

In view of the prior art, it is an object of a third aspect of the present invention to provide a wheel motor device including a hydraulic motor main body that forms an HST in cooperation with a hydraulic pump main body operatively driven by a driving power source, a motor shaft for supporting the hydraulic motor main body in a relatively non-rotatable manner, and a casing with a motor space for accommodating the hydraulic motor main body; the motor shaft operatively driving a corresponding driving wheel; the wheel motor device capable of enhancing a degree of freedom of design regarding a conduit structure for fluidly connecting between the hydraulic motor main body and the hydraulic pump main body.

In view of the prior art, it is an object of a fourth aspect of the present invention to provide a wheel motor device capable of preventing the fluid, which is leaked from a hydraulic motor main body and stored in a casing for accommodating the motor main body, from flowing out without arranging an external drain conduit.

The first aspect of the present invention provides a wheel motor device including a hydraulic motor main body that forms an HST in cooperation with a hydraulic pump main body operatively driven by a driving power source, a speed reduction gear mechanism for reducing a speed of a rotational output of the hydraulic motor main body, an output member for outputting the rotational output whose speed has been reduced by the speed reduction gear mechanism to a corresponding driving wheel, and a casing for accommodating the hydraulic motor main body and the speed reduction gear mechanism, wherein the casing has a motor space for accommodating the hydraulic motor main body and a gear space for accommodating the speed reduction gear mechanism, the motor space being capable of storing fluid in a state of being liquid-tightly separate from the gear space; and the casing is provided with a flow-in port for introducing fluid into the motor space and a flow-out port for discharging fluid outward from the motor space.

According to the wheel motor device of the first aspect of the present invention, since the motor space is liquid-tightly separate from the gear space, it is possible to effectively prevent a lubricating fluid for the reduction gear mechanism from mixing with an HST hydraulic fluid so that one fluid having viscosity suitable for the HST hydraulic fluid and the other fluid having viscosity suitable for the lubricating fluid could be used.

Furthermore, since the casing accommodating the hydraulic motor main body and the speed reduction gear mechanism is provided with the flow-in port for introducing fluid into the motor space and the flow-out port for discharging fluid from the motor space, it is possible to prevent the fluid, which is leaked from the hydraulic motor main body and stored in the motor space, from retaining in the motor space, thereby enhancing the cooling efficiency of the hydraulic motor main body.

In one embodiment, the wheel motor device may further include a hydraulic motor unit having the hydraulic motor main body, a motor case that forms the motor space and a motor shaft that supports the hydraulic motor main body in a relatively non-rotatable manner; and a reduction gear unit having the reduction gear mechanism and a gear case connected to the motor case so as to form the gear space. The motor case is formed with a pass-through hole for allowing the motor shaft to be inserted into the gear space. An oil sealing member is arranged between an inner circumferential surface of the pass-through hole and an outer circumferential surface of the motor shaft.

The first aspect of the present invention also provides a working vehicle including a wheel motor device with a hydraulic motor main body forming an HST in cooperation with a hydraulic pump main body operatively driven by a driving power source, a speed reduction gear mechanism reducing a speed of a rotational output of the hydraulic motor main body, an output member outputting the rotational output whose speed has been reduced by the speed reduction gear mechanism to a corresponding driving wheel and a casing accommodating the hydraulic motor main body and the speed reduction gear mechanism; and an auxiliary pump main body operatively driven by the driving power source; wherein the casing has a motor space for accommodating the hydraulic motor main body and a gear space for accommodating the speed reduction gear mechanism, the motor space being capable of storing fluid in a state of being liquid-tightly separate from the gear space; and at least a part of the fluid, which is discharged from the auxiliary pump main body, returns to a suction side of the auxiliary pump main body through the motor space.

According to the working vehicle of the first aspect of the present invention, it is possible to effectively prevent a lubricating fluid for the reduction gear mechanism from mixing with an HST hydraulic fluid so that one fluid having viscosity suitable for the HST hydraulic fluid and the other fluid having viscosity suitable for the lubricating fluid could be used. Furthermore, it is possible to actively circulate the fluid stored in the motor space, thereby preventing the fluid that is leaked from the motor main body and stored in the motor space from retaining in the motor space to enhance the cooling efficiency of the motor main body.

Preferably, the auxiliary pump main body is directly or indirectly driven by a pump shaft that is operatively connected to the driving power source so as to drive the hydraulic pump main body.

Preferably, the working vehicle further includes an external tank functioning as a fluid source of the auxiliary pump main body, a circulation line forming a circulating path that includes the external tank, the auxiliary pump main body and the motor space, and an oil cooler interposed in the circulation line.

According to such preferred configuration, it is possible to further enhance the cooling efficiency of the hydraulic motor main body.

In one embodiment, the circulation line includes a suction line having a first end fluidly connected to the external tank and a second end fluidly connected to a suction side of the auxiliary pump main body, a discharge line having a first end fluidly connected to a discharge side of the auxiliary pump main body and a second end fluidly connected to the motor space, and a return line having a first end fluidly connected to the motor space and a second end fluidly connected to the external tank. The discharge line is configured so as to supply an operation fluid to a hydraulic actuator and supply a returned fluid, which has been returned from the hydraulic actuator, to the motor space.

According to the one embodiment, it is possible to enhance the cooling efficiency of the hydraulic motor main body by effectively utilizing the hydraulic fluid from the auxiliary pump main body.

In the one embodiment, the discharge line is preferably configured so as to supply a surplus fluid of the hydraulic actuator to the motor space, in addition to the returned fluid.

In another embodiment, the circulation line includes a suction line having a first end fluidly connected to the external tank and a second end fluidly connected to a suction side of the auxiliary pump main body, a discharge line having a first end fluidly connected to a discharge side of the auxiliary pump main body and a second end fluidly connected to the motor space, and a return line having a first end fluidly connected to the motor space and a second end fluidly connected to the external tank. The discharge line is configured so as to supply an operation fluid to a hydraulic actuator and supply a surplus fluid of the hydraulic actuator to the motor space.

According to the embodiment, it is also possible to enhance the cooling efficiency of the hydraulic motor main body by effectively utilizing the hydraulic fluid from the auxiliary pump main body.

In the above various embodiments, the oil cooler is preferably interposed in the return line, and the circulation line preferably further includes a bypass line having a first end fluidly connected to the discharge line and a second end fluidly connected to the return line on a downstream side of a fluid flowing direction than the oil cooler, and a relief valve interposed in the bypass line so as to regulate a maximum hydraulic pressure of the discharge line.

According to the configuration, it is possible to effectively prevent an excessive hydraulic pressure from acting on the oil cooler even if the hydraulic pressure in the motor space rises, thereby effectively preventing the oil cooler from being damaged.

In the above various embodiments, the wheel motor device includes, for example, a pair of right and left wheel motor devices for respectively driving a pair of right and left driving wheels. In the configuration, the discharge line includes a first discharge line having a first end fluidly connected to the discharge side of the auxiliary pump main body and a second end fluidly connected to the motor space of one of the pair of right and left wheel motor devices, and a second discharge line for fluidly connecting the motor space of the one wheel motor device to the motor space of the other wheel motor device; and the return line is configured so as to fluidly connect the motor space of the other wheel motor device to the external tank.

The second aspect of the present invention provides a hydraulic drive working vehicle including a driving power source, front-side and rear-side driving wheels respectively arranged on a front side and a rear side of the vehicle, a front-side hydraulic motor main body arranged on the front side of the vehicle, a rear-side hydraulic motor main body arranged on the rear side of the vehicle, and a common hydraulic pump main body operatively driven by the driving power source and forming an HST in cooperation with the front-side and rear-side hydraulic motor main bodies, the front-side and rear-side driving wheels being operatively and respectively driven by rotational outputs of the front-side and rear-side hydraulic motor main bodies; wherein the front-side hydraulic motor main body and the rear-side hydraulic motor main body are fluidly connected in series with respect to the hydraulic pump main body; and the hydraulic moor main body, which is positioned on an upstream side in a flowing direction of HST hydraulic fluid at forward movement of the vehicle, out of the front-side and rear-side hydraulic motor main bodies has pistons whose free ends engage to a corresponding swash plate with shoes.

According to the hydraulic drive working vehicle, it is possible to effectively enhance the transmission efficiency of the HST formed by the hydraulic pump main body and both of the hydraulic motor main bodies.

Preferably, the hydraulic motor main body, which is positioned on a downstream side in the flowing direction of the HST hydraulic fluid at forward movement of the vehicle, out of the front-side and rear-side hydraulic motor main bodies has pistons whose free ends engage to a corresponding swash plate without shoes.

According to the preferred configuration, it is possible to enhance the transmission efficiency of the HST while preventing the cost from increasing as much as possible.

In a case where the hydraulic drive working vehicle includes a working machine that is operatively driven by the driving power from the driving power source, the working machine being arranged on an outer side in a longitudinal direction of the vehicle than either one of the front-side hydraulic motor main body or the rear-side hydraulic motor main body, the hydraulic motor main body on a side close to the working machine out of the front-side and rear-side hydraulic motor main bodies is preferably positioned on the upstream side in the flowing direction of the HST hydraulic fluid at forward movement of the vehicle.

According to the configuration, it is possible to effectively prevent the transmission efficiency of the hydraulic motor main body on a side to which the load caused by the working machine greatly acts from deteriorating.

In one embodiment, the hydraulic drive working vehicle further includes au auxiliary pump main body operatively driven by a rotational power from the driving power source. At least one of the front-side and rear-side hydraulic motor main bodies forms a wheel motor device in cooperation with a reduction gear mechanism for reducing a speed of a rotational output of the one hydraulic motor main body, an output member for outputting the rotational output whose speed has been reduced by the speed reduction gear mechanism to a corresponding driving wheel and a casing for accommodating the one hydraulic motor main body and the speed reduction gear mechanism.

In the embodiment, the casing has a motor space for accommodating the hydraulic motor main body and a gear space for accommodating the speed reduction gear mechanism, the motor space being capable of storing fluid in a state of being liquid-tightly separate from the gear space. At least a part of the fluid, which is discharged from the auxiliary pump main body, returns to a suction side of the auxiliary pump main body through the motor space.

According to the configuration, it is possible to effectively prevent a lubricating fluid for the reduction gear mechanism from mixing with an HST hydraulic fluid so that one fluid having viscosity suitable for the HST hydraulic fluid and the other fluid having viscosity suitable for the lubricating fluid could be used. Furthermore, it is possible to actively circulate the fluid stored in the motor space, thereby preventing the fluid that is leaked from the motor main body and stored in the motor space from retaining in the motor space to enhance the cooling efficiency of the motor main body.

In the one embodiment, the hydraulic drive working vehicle preferably further includes an external tank functioning as a fluid source of the auxiliary pump main body; a circulation line forming a circulating path that includes the external tank, the auxiliary pump main body and the motor space; and an oil cooler interposed in the circulation line.

According to the configuration, it is possible to further enhance the cooling efficiency of the hydraulic motor main body.

For example, the circulation line includes a suction line having a first end fluidly connected to the external tank and a second end fluidly connected to a suction side of the auxiliary pump main body, a discharge line having a first end fluidly connected to a discharge side of the auxiliary pump main body and a second end fluidly connected to the motor space, and a return line having a first end fluidly connected to the motor space and a second end fluidly connected to the external tank.

Preferably, the discharge line is configured so as to supply an operation fluid to a hydraulic actuator and to supply a returned fluid that has been returned from the hydraulic actuator and/or a surplus fluid of the hydraulic actuator to the motor space.

According to the configuration, it is possible to enhance the cooling efficiency of the hydraulic motor main body by effectively utilizing the hydraulic fluid from the auxiliary pump main body.

The oil cooler may be interposed in the return line. In the configuration, the circulation line preferably further includes a bypass line having a first end fluidly connected to the discharge line and a second end fluidly connected to the return line on a downstream side of a fluid flowing direction than the oil cooler, and a relief valve interposed in the bypass line so as to regulate a maximum hydraulic pressure of the discharge line.

According to the configuration, it is possible to effectively prevent an excessive hydraulic pressure from acting on the oil cooler even if the hydraulic pressure in the motor space rises, thereby effectively preventing the oil cooler from being damaged.

In the above various configurations, the common hydraulic pump main body is of a variable displacement type; one of the front-side and rear-side hydraulic motor main bodies is of a fixed displacement type cooperating with a fixed swash plate, and the other is of a variable displacement type cooperating with a movable swash plate. A motor case, which accommodates the hydraulic motor main body of a variable displacement type, is arranged with a supporting shaft, a swinging arm having a proximal end supported by the supporting shaft in a relatively non-rotatable manner and a distal end engaging with a side part of the movable swash plate, a biasing member for operatively biasing the movable swash plate to one side about its swing center, and a reference-position setting member for defining a swinging end on the one side about the swing center of the movable swash plate that is biased by the biasing member.

Preferably, the reference-position setting member is configured so as to change a position of the swinging end on the one side about the swing center of the movable swash plate according to an operation from outsides of the motor case.

Preferably, the supporting shaft has an outer end on a side opposite to an end supporting the swinging arm, the outer end extending outward of the motor case; and the movable swash plate is capable of being operated to the other side around the swing center against a biasing force of the biasing member through the outer end of the supporting shaft.

The third aspect of the present invention provides a wheel motor device including a hydraulic motor main body that forms an HST in cooperation with a hydraulic pump main body operatively driven by a driving power source, a motor shaft for supporting the hydraulic motor main body in a relatively non-rotatable manner, and a casing including a motor space for accommodating the hydraulic motor main body. The casing includes a first fluid porting opened to a motor contacting surface to which the hydraulic motor main body slidably contacts, a second fluid porting opened to the motor contacting surface on a side opposite to the first fluid porting with the motor shaft in between, a first hydraulic fluid passage fluidly connected to the first fluid porting, and a second hydraulic fluid passage fluidly connected to the second fluid porting. At least one of the first and second hydraulic fluid passages includes a plurality of hydraulic fluid ports opened to an outer surface of the casing.

According to the wheel motor device, it is possible to enhance a degree of freedom of design regarding a connecting structure of hydraulic fluid conduits for fluidly connecting between the hydraulic motor main body in the wheel motor device and the hydraulic pump main body spaced apart from the wheel motor.

Furthermore, in the vehicle in which the pair of left and right wheel motor devices are driven by a single hydraulic pump main body, it is possible to fluidly connect the hydraulic pump main body to the left and right hydraulic motor main bodies without arranging a flow dividing structure such as a T-shaped joint in the hydraulic fluid conduits, thereby enhancing the workability in piping the conduits.

Preferably, both of the first and second hydraulic fluid passages include the plurality of hydraulic fluid ports.

More preferably, the plurality of hydraulic fluid ports of the first hydraulic fluid passage face directions that are orthogonal to the motor shaft and that are different one another, and the plurality of hydraulic fluid ports of the second hydraulic fluid passage face directions that are orthogonal to the motor shaft and that are different one another.

More preferably, the first hydraulic fluid passage includes a first hydraulic fluid port facing a first direction and a second hydraulic fluid port facing a second direction orthogonal to the first direction, and the second hydraulic fluid passage includes a first hydraulic fluid port facing the first direction and a second hydraulic fluid port facing a direction opposite to the second direction.

More preferably, both of the first and second hydraulic fluid passages further include third hydraulic fluid ports facing a direction opposite to the first direction.

In the above various configurations, the casing may include a motor case main body having an opening that has a size for allowing the hydraulic motor main body to be inserted therethrough, and a port block detachably connected to the motor case main body so as to close the opening to form the motor space. The first and second fluid portings, and the first and second hydraulic fluid passages are formed in the port block. The port block is capable of being connected to the motor case main body at a first position about an axial line of the motor shaft and at a second position displaced about the axial line of the motor shaft from the first position.

The third aspect of the present invention also provides a wheel motor device including a hydraulic motor main body that forms an HST in cooperation with a hydraulic pump main body operatively driven by a driving power source, a motor shaft for supporting the hydraulic motor main body in a relatively non-rotatable manner, and a casing including a motor space for accommodating the hydraulic motor main body. The casing includes a motor case main body with an opening that has a size for allowing the hydraulic motor main body to be inserted therethrough, and a port block detachably connected to the motor case main body so as to close the opening. The port block includes a first fluid porting opened to a motor contacting surface to which the hydraulic motor main body slidably contacts, a second fluid porting opened to the motor contacting surface on a side opposite to the first fluid porting with the motor shaft in between, a first hydraulic fluid passage fluidly connected to the first fluid porting, and a second hydraulic fluid passage fluidly connected to the second fluid porting. The first hydraulic fluid passage includes a main fluid passage extending in a direction orthogonal to the motor shaft and having a first end opened to an outer surface to form a first hydraulic fluid port, and a branched fluid passage branched from the main fluid passage so as to extend in a direction orthogonal to both the main fluid passage and the motor shaft and have a distal end opened to the outer surface to form a second hydraulic fluid port. The second hydraulic fluid passage includes a main fluid passage extending substantially parallel to the main fluid passage of the first hydraulic fluid passage with the motor shaft in between and having a first end opened to the outer surface to form a first hydraulic fluid port.

According to the wheel motor device, it is possible to enhance a degree of freedom of design regarding a connecting structure of hydraulic fluid conduits for fluidly connecting between the hydraulic motor main body in the wheel motor device and the hydraulic pump main body spaced apart from the wheel motor.

Furthermore, in the vehicle in which the pair of left and right wheel motor devices are driven by a single hydraulic pump main body, it is possible to fluidly connect the hydraulic pump main body to the left and right hydraulic motor main bodies without arranging a flow dividing structure such as a T-shaped joint in the hydraulic fluid conduits, thereby enhancing the workability in piping the conduits.

Preferably, the second hydraulic fluid passage include a branched fluid passage branched from the main fluid passage of the second hydraulic fluid passage on the same side as the branched fluid passage of the first fluid passage with the motor shaft as the reference, the branched fluid passage of the second hydraulic fluid passage extending in a direction opposite to the branched fluid passage of the first hydraulic passage and having a distal end opened to the outer surface to form a second hydraulic fluid port.

Preferably, the main fluid passage of the first hydraulic fluid passage has a second end on a side opposite to the first end, the second end being opened to the outer surface to form a third hydraulic fluid port; and the main fluid passage of the second hydraulic fluid passage has a second end on a side opposite to the first end, the second end being opened to the outer surface to form a third hydraulic fluid port.

In the above various configurations, the port block is preferably formed with a bypass fluid passage extending in a direction substantially orthogonal to the main fluid passages of the first and second hydraulic fluid passages so as to fluidly connect between the main fluid passages on a side opposite to the branched fluid passage of the first hydraulic fluid passage with the motor shaft as the reference, the bypass fluid passage having at least one end opened to the outer surface; and a bypass valve inserted into the bypass fluid passage through the opened end, the bypass valve selectively communicating or shutting off the bypass fluid passage.

More preferably, the port block is capable of being connected to the motor case main body at a first position about an axial line of the motor shaft and at a second position displaced by 180 degree about the axial line of the motor shaft from the first position. In the configuration, the bypass fluid passage includes first and second ends that are opened so as to face opposite directions to each other. The bypass valve is inserted into the bypass fluid passage through one of the both ends, and the other end is closed by a plug.

The fourth aspect of the present invention provides a wheel motor device including a hydraulic motor main body that forms an HST in cooperation with a hydraulic pump main body operatively driven by a driving power source; a motor shaft for supporting the hydraulic motor main body in a relatively non-rotatable manner; and a casing including a motor space for accommodating the hydraulic motor main body, the casing being capable of storing fluid; wherein the casing is provided with a first fluid porting opened to a motor contacting surface to which the hydraulic motor main body slidably contacts, a second fluid porting opened to the motor contacting surface on a side opposite to the first fluid porting with the motor shaft in between, a first hydraulic fluid passage fluidly connected to the first fluid porting, a second hydraulic fluid passage fluidly connected to the second fluid porting, a self-suction fluid passage having a first end opened into the motor space and a second end fluidly connected to at least one of the first and the second hydraulic fluid passages, and a check valve interposed in the self-suction fluid passage so as to allow the fluid to flow from the motor space to the one of the hydraulic fluid passages while preventing the reverse flow.

According to the configuration, it is possible to prevent the fluid that is leaked from the hydraulic main body and stored in the motor space from flowing out from the casing without arranging an external drain conduit in the casing.

Furthermore, it is possible to prevent a free wheel phenomenon that may occur, for example, at the time when the working vehicle is parked on a hill or the like in a state that an engine is stopped with the HST in a neutral state. In particular, since the self-suction fluid passage and the check valve are arranged in the casing for accommodating the hydraulic motor main body, it is possible to more effectively prevent the free wheel phenomenon in comparison with the conventional configuration in which the self-suction configuration is arranged in the hydraulic pump unit spaced apart from the wheel motor device.

In one embodiment, the casing includes a motor case main body with an opening that has a size for allowing the hydraulic motor main body to be inserted therethrough, and a port block detachably connected to the motor case main body so as to close the opening to form the motor space. The first hydraulic fluid passage is formed in the port block so as to extend in a direction orthogonal to the motor shaft and have a first end opened to an outer surface to form a first hydraulic fluid port. The second hydraulic fluid passage is formed in the port block so as to extend substantially parallel to the first hydraulic fluid passage on a side opposite to the first hydraulic fluid passage with the motor shaft in between and have a first end opened to the outer surface in the same direction as the first hydraulic fluid port of the first hydraulic fluid passage to form a first hydraulic fluid port. The self-suction fluid passage includes a branched self-suction fluid passage extending in a direction orthogonal to the motor shaft so as to fluidly connect between the first and second hydraulic fluid passages, and a common self-suction fluid passage having a first end opened into the motor space and a second end fluidly connected to the branched self-suction fluid passage. The check valve includes a first check valve allowing fluid to flow from the branched self-suction fluid passage to the first hydraulic fluid passage while preventing the reverse flow, and a second check valve allowing fluid to flow from the branched self-suction fluid passage to the second hydraulic fluid passage while preventing the reverse flow.

In the one embodiment, the port block is preferably further provided with a bypass fluid passage for fluidly connecting between the first and second hydraulic fluid passages on a side opposite to the branched self-suction passage with the motor shaft as the reference, and a bypass valve capable of being externally operated for selectively communicating or shutting off the bypass fluid passage.

More preferably, the branched self-suction fluid passage extends in a direction substantially orthogonal to the first and second hydraulic fluid passages on the same side as the first hydraulic fluid ports of the first and second hydraulic fluid passages with the motor shaft as the reference, and has both ends opened to opposite directions to each other. The first and second check valves are inserted into the branched self-suction fluid passage through one end and the other end of the branched self-suction fluid passage. The bypass fluid passage extends in a direction substantially orthogonal to the first and second hydraulic fluid passages on a side opposite to the first hydraulic fluid ports of the first and second hydraulic fluid passages with the motor shaft as the reference.

More preferably, the casing is further formed with a drain fluid passage having a first end opened into the motor space.

In the configuration, the bypass valve may be a rotary valve including a fluid passage configured so that the drain fluid passage is fluidly disconnected to the bypass fluid passage when the bypass valve shuts off the bypass fluid passage and so that the drain fluid passage is fluidly connected to the bypass fluid passage when the bypass valve communicates the bypass fluid passage.

In the above various configurations of the one embodiment, the first hydraulic fluid passage preferably includes a main fluid passage extending in a direction orthogonal to the motor shaft and having a first end opened to an outer surface to form a first hydraulic fluid port, and a branched fluid passage branched from the main fluid passage so as to extend in a direction orthogonal to both the main fluid passage and the motor shaft and have a distal end opened to the outer surface to form a second hydraulic fluid port. The second hydraulic fluid passage includes a main fluid passage extending substantially parallel to the main fluid passage of the first hydraulic fluid passage with the motor shaft in between and having a first end opened to the outer surface to form a first hydraulic fluid port.

### BRIEF DESCRIPTION OF THE DRAWINGS

The above, and other objects, features and advantages of the present invention will become apparent from the detailed description thereof in conjunction with the accompanying drawings wherein.
Fig. 1 is a side view of a working vehicle to which a first embodiment of the present embodiment is applied.
Fig. 2 is a plan view of the vehicle shown in Fig. 1.
Fig. 3 is a hydraulic circuit diagram of the vehicle shown in Figs. 1 and 2.
Fig. 4 is a vertical cross sectional view of a left-side first wheel motor device in the vehicle shown in Figs. 1 to 3.
Fig. 5 is a vertical cross sectional view of motor-side port blocks in the vehicle shown in Figs. 1 to 3. Fig. 5(a) shows a vertical cross sectional view of the motor-side port block in the left-side first wheel motor device taken along line V-V of Fig. 4, and Fig. 5(b) shows a vertical cross sectional view of the motor-side port block in a right-side first wheel motor device.
Fig. 6 is a vertical cross sectional view of one example modified from the motor-side port blocks shown in Fig. 5. Figs. 6(a) and 6(b) respectively show vertical cross sectional views of the motor-side port blocks in the left-side and right-side first wheel motor devices.
Fig. 7 is a vertical cross sectional view of another example modified from the motor-side port blocks shown in Fig. 5. Figs. 7(a) and 7(b) respectively show vertical cross sectional views of the motor-side port blocks in the left-side and right-side first wheel motor devices.
Fig. 8 is a vertical cross sectional view of still another example modified from the motor-side port blocks shown in Fig. 5. Figs. 8(a) and 8(b) respectively show vertical cross sectional views of the motor-side port blocks in the left-side and right-side first wheel motor devices.
Fig. 9 is a hydraulic circuit diagram of the vicinity of a first axle-driving device including a hydraulic differential lock mechanism.
Figs. 10(a) to 10(c) are hydraulic circuit diagrams of various second axle-driving devices that the working vehicle shown in Figs. 1 to 3 may include.
Fig. 11 is vertical sectional view of a left-side second wheel motor device.
Fig. 12 is a detailed view of the vicinity of a supporting shaft and a movable swash plate in the second wheel motor device.
Fig. 13 is a hydraulic circuit diagram of a working vehicle to which a second embodiment of the present invention is applied.
Fig. 14 is a side view a working vehicle to which a third embodiment of the present invention is applied.
Fig. 15 is a plan view of the working vehicle shown in Fig. 14.
Fig. 16 is a hydraulic circuit diagram of the working vehicle shown in Figs. 14 and 15.
Fig. 17 is a vertical cross sectional view of a first wheel motor device in the working vehicle shown in Figs. 14 to 16.
Fig. 18 is a vertical cross sectional view of one example modified from the first wheel motor device shown if Fig. 17.
Fig. 19 is a hydraulic circuit diagram of a working vehicle to which a fourth embodiment of the present invention is applied.
Fig. 20 is a side view of a working vehicle to which a fifth embodiment of the present invention is applied, which is not covered by the claims.
Fig. 21 is a plan view of the working vehicle shown in Fig. 20.
Fig. 22 is a hydraulic circuit diagram of the working vehicle shown in Figs. 20 and 21.
Fig. 23 is a vertical cross sectional view of a left-side first wheel motor device in the working vehicle shown in Figs. 20 to 22.
Fig. 24 is a vertical cross sectional view of one example modified from the first wheel motor device shown in Fig. 23.
Fig. 25 is vertical cross sectional views of motor-side port blocks in the first wheel motor devices shown if Fig. 23. Fig. 25(a) shows a vertical cross sectional view of the motor-side port block in the left-side first wheel motor device taken along line XXV-XXV of Fig. 23, and Fig. 25(b) shows a vertical cross sectional view of the motor-side port block in a right-side first wheel motor device.
Fig. 26 is a vertical cross sectional view of another example modified from the first wheel motor device shown in Fig. 23.
Figs. 27(a) to 27(c) are hydraulic circuit diagrams of various second axle-driving devices that the working vehicle shown in Figs. 20 to 22 may include.
Fig. 28 is a vertical sectional view of the left-side second wheel motor device.
Fig. 29 is a detailed view of the vicinity of a supporting shaft and a movable swash plate in the second wheel motor device shown in Fig. 28.
Fig. 30 is a hydraulic circuit diagram of a working vehicle to which a sixth embodiment of the present invention is applied.
Fig. 31 is a hydraulic circuit diagram of a working vehicle to which a seventh embodiment of the present invention is applied.

### DETAILED DESCRIPTION OF THE PREFERRED EMBODIMENTS

### Embodiment 1

A preferred embodiment of the present invention will now be described with reference to the accompanying drawings.

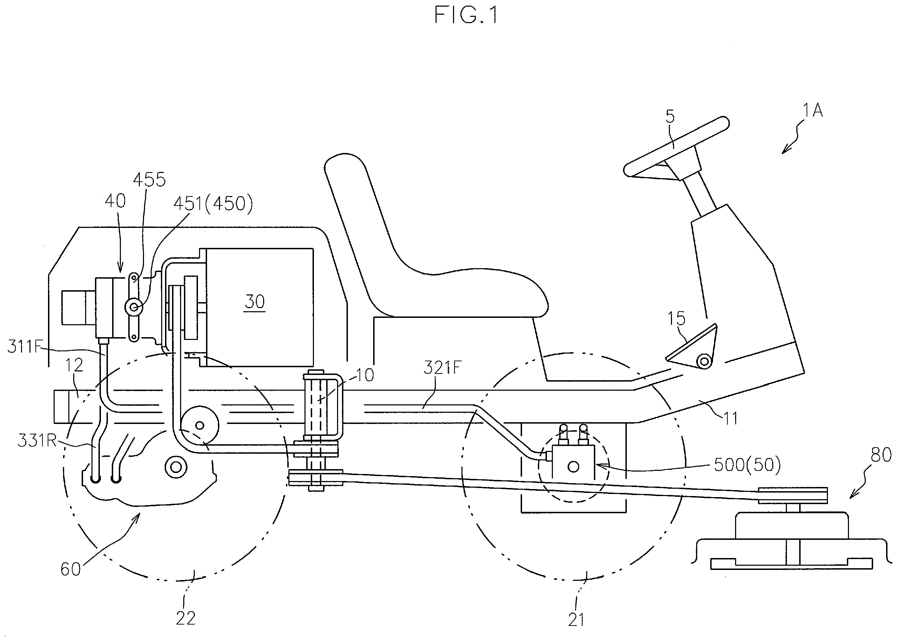

Figs. 1 to 3 respectively show a side view, a plan view and a hydraulic circuit diagram of a working vehicle 1A to which the present embodiment is applied.

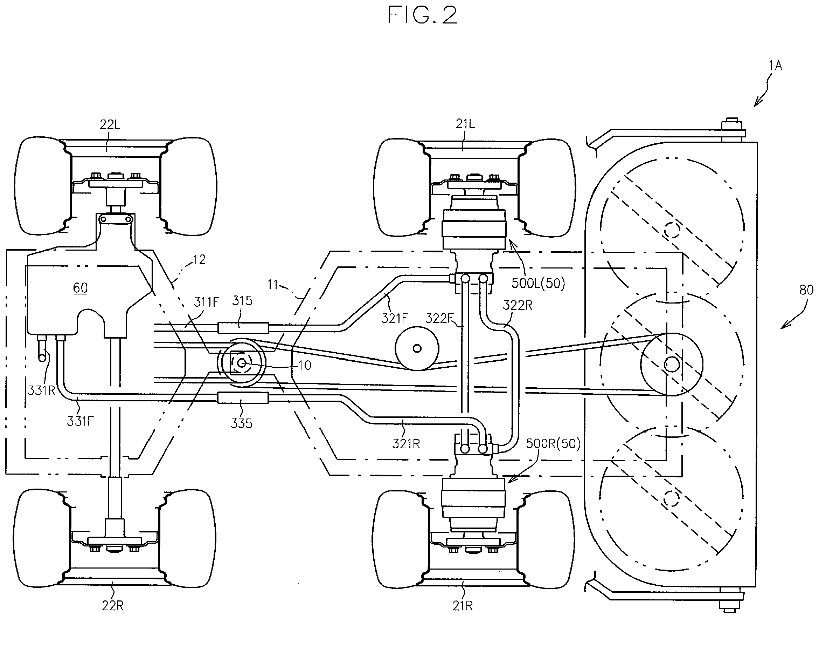

In the present embodiment, the working vehicle 1A is a riding lawn mower of an articulate type, as shown in Figs. 1 and 2.

Specifically, as shown in Figs. 1 and 2, the working vehicle 1A includes a first frame 11 arranged on one side in a longitudinal direction of the vehicle (a front side in the present embodiment); a second frame 12 arranged on the other side in the longitudinal direction of the vehicle (a rear side in the present embodiment), the second frame 12 being connected to the first frame 11 in a swingable manner about a pivot shaft 10 extending in a substantially vertical direction; a pair of left and right first driving wheels 21L, 21R arranged on the one side in the longitudinal direction of the vehicle; a pair of left and right second driving wheels 22L, 22R arranged on the other side in the longitudinal direction of the vehicle; a driving power source 30 supported by the second frame 12; a hydraulic pump unit 40 including at least one hydraulic pump main body 420 operatively driven by the driving power source 30; a first axle-driving device 50 including at least one hydraulic motor main body 120 for driving the pair of left and right first driving wheels 21L, 21R and connected to the first frame 11; and a second axle-driving device 60 including at least one hydraulic motor main body 620 for driving the pair of left and right second driving wheels 22L, 22R and connected to the second frame 12.

In the present embodiment, as shown in Figs. 1 to 3, the working vehicle 1A further includes a hydraulic steering mechanism 70 that swings the first frame 11 and the second frame 12 relatively to each other about the pivot shaft 10 in conjunction with a steering member 5 capable of being manually operated such as a steering wheel, and a mower device 80 supported by the first frame 11 so as to be positioned on an outer side in the longitudinal direction of the vehicle (a front side in the present embodiment) than the first driving wheels 21.

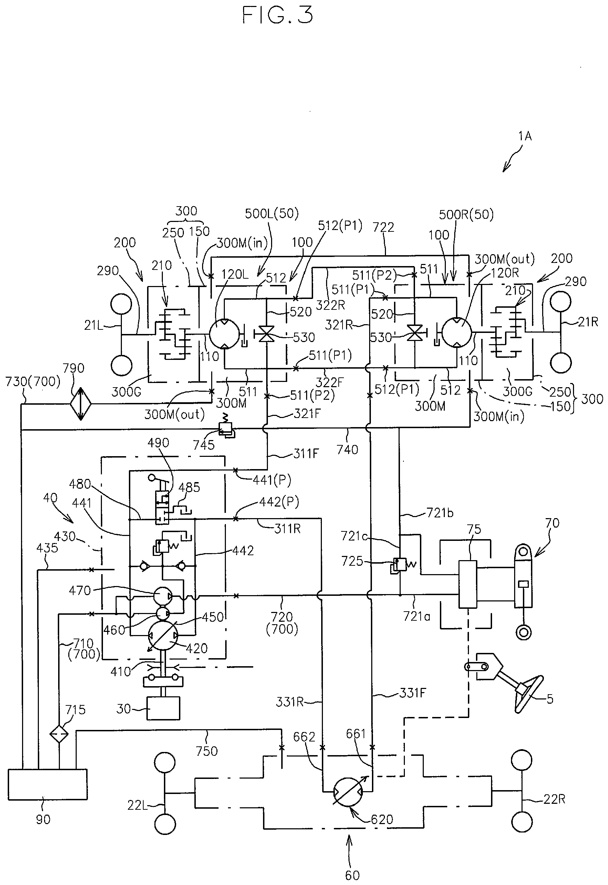

As shown in Fig. 3, the hydraulic pump unit 40 includes a pump shaft 410 operatively connected to the driving power source 30, the hydraulic pump main body 420 supported in a relatively non-rotatable manner by the pump shaft 410, and a pump case 430 for supporting the pump shaft 410 and forming a pump space that accommodates the hydraulic pump main body 420.

The hydraulic pump main body 420 is fluidly connected to the at least one hydraulic motor main body 120 in the first axle-driving device 50 and the at least one hydraulic motor main body 620 in the second axle-driving device 60 so as to form an HST in cooperation with the hydraulic motor main bodies 120 and 620.

Specifically, the pump case 430 is provided with a pump-side first hydraulic fluid passage 441 and a pump-side second hydraulic fluid passage 442, both of which are fluidly connected to the hydraulic pump main body 420.

Each of the pump-side first hydraulic fluid passage 441 and the pump-side second hydraulic fluid passage 442 has at least a first end opened to an outer surface. The opened first ends of the pump-side first hydraulic fluid passage 441 and the pump-side second hydraulic fluid passage 442 respectively form a hydraulic fluid port 441(P) and a hydraulic fluid port 442(P).

In the present embodiment, the hydraulic pump main body 420 is of a variable displacement type in which the suction/discharge amount can be varied.

That is, the hydraulic pump unit 40 includes, in addition to the above configuration, an output adjusting member 450 (see Fig. 3) for changing the suction/discharge amount of the hydraulic pump main body 420 based on an external operation.

The output adjusting member 450 includes, for example, a movable swash plate (not shown) for defining a reciprocating movement range of pistons in the hydraulic pump main body 420, and a control shaft 451 (see Fig. 1) operatively connected to the movable swash plate so as to slant the movable swash plate.

As shown in Fig. 1, the control shaft 451 is operatively connected trough a control arm 455 and a connecting member (not shown) to a traveling speed-change operation member 15 capable of being manually operated.

In the present embodiment, the movable swash plate is capable of slanting in both forward and reverse directions with a neutral position in between.

In other words, the movable swash plate slants forward when the traveling speed-change operation member 15 is operated in the forward direction, and the movable swash plate slants backward when the traveling speed-change operation member 15 is operated in the backward direction. In the present embodiment, the speed-change operation member 15 is of a seesaw pedal type, but may be of a two-pedal type including forward and backward pedals.

As shown in Fig. 3, the pump case 430 is provided with a bypass fluid passage 480 for fluidly connecting between the pump-side first and second hydraulic fluid passages 441 and 442, a drain fluid passage 485 having a first end opened to an internal space of the pump case 430, and a rotary valve 490, which is capable of being externally operated, interposed in the bypass fluid passage 480.

The rotary valve 490 is configured to take a shutoff position of shutting off the bypass fluid passage 480 and fluidly disconnecting the drain fluid passage 485 to the bypass fluid passage 480, and a communicating position of communicating the bypass fluid passage 480 and fluidly connecting the drain fluid passage 485 to the bypass fluid passage 480.

In the working vehicle 1A, the hydraulic pump main body 420 is configured so as to hydraulically drive both of the hydraulic motor main body 120 in the first axle-driving device 50 and the hydraulic motor main body 620 in the second axle-driving device 60, as shown in Fig. 3.

A hydraulic circuit for fluidly connecting the hydraulic pump main body 420 to the first and second hydraulic motor main bodies 120, 620 will be described later.

Furthermore, in the present embodiment, the hydraulic pump unit 40 includes, in addition to the above configuration, a first auxiliary pump main body 460 and a second auxiliary pump main body 470, both of which are operatively driven by the pump shaft 410.

As shown in Fig. 3, the first auxiliary pump main body 460 functions as a charge pump for replenishing operation fluid to the HST.

The second auxiliary pump main body 470 supplies operation fluid to the hydraulic steering mechanism 70.

The first auxiliary pump main body 460 may be, for example, a trochoidal pump, and the second auxiliary pump main body 470 may be, for example, a gear pump.

As shown in Fig. 3, the working vehicle 1A includes an external reservoir tank 90, and the first and second auxiliary pump main bodies 460, 470 operate with the external tank 90 as the fluid source.

A reference numeral 435 in Fig. 3 is a drain conduit for fluidly connecting the internal space of the pump case 430 to the external tank 90.

The first axle-driving device 50 includes a pair of left and right wheel first motor devices 500L, 500R for respectively driving the left and right first driving wheels 21L, 21R

The pair of left and right first wheel motor devices 500L, 500R have the same configurations to each other, and are mounted to the corresponding first frame 11 in a state that one wheel motor device being reversed by 180 degrees with respect to the other wheel motor device.

As shown in Fig. 3, the first wheel motor device 500 includes the hydraulic motor main body 120 forming the HST in cooperation with the hydraulic pump main body 420, a reduction gear mechanism 210 for reducing a speed of a rotational power output by the hydraulic motor main body 120, an output member 290 for outputting the rotational power whose speed has been reduced by the reduction gear mechanism 210 towards the corresponding driving wheel 21, and a casing 300 for accommodating the hydraulic motor main body 120 and the reduction gear mechanism 210.

The casing 300 is configured so as to liquid-tightly separate a motor space 300M for accommodating the hydraulic motor main body 120 with respect to a gear space 300G for accommodating the reduction gear mechanism 210.

As shown in Fig. 3, the working vehicle 1A including the left and right first wheel motor devices 500L, 500R is configured such that at least a part of the fluid discharged from the second auxiliary pump main body 470 returns to a suction side of the second auxiliary pump main body 470 through each motor space 300M in the left and right first wheel motor devices 500L, 500R, whereby the hydraulic motor main body 120 can be efficiently cooled while one fluid having viscosity suited for the hydraulic fluid of the HST formed by the hydraulic motor main body 120 and the hydraulic pump main body 420 and the other fluid having viscosity suited for the lubricating fluid for the speed reduction gear mechanism 210 can be used.

Specifically, in the conventional wheel motor device configured such that the fluid leaked from the hydraulic motor main body is stored in the motor case for accommodating the motor main body and the fluid overflowing from the motor case out of the stored fluid returns to the external tank, the motor case is always filled with the HST hydraulic fluid, which has a relatively high temperature, leaked from the hydraulic motor main body, and thus the hydraulic motor main body cannot be sufficiently cooled.

In the present embodiment, on the other hand, the stored fluid in the motor space 300M in the left and right first wheel motor devices 500L, 500R is actively circulated with utilizing the hydraulic fluid from the second auxiliary pump main body 470, as described above.

Therefore, it is possible to enhance the cooling efficiency of the hydraulic motor main bodies 120 in the left and right first wheel motor devices 500L, 500R.

An oil cooler 790 is preferably interposed in a circulation line 700 for fluidly connecting the discharge side of the second auxiliary pump main body 470, the motor spaces 300M in the left and right first wheel motor devices 500L, 500R, and the suction side of the second auxiliary pump main body 470.

According to such configuration, it is possible to further enhance the cooling efficiency of the hydraulic motor main bodies 120.

In the present embodiment, the working vehicle 1A includes a suction line 710 having a first end fluidly connected to the external tank 90 and a second end fluidly connected to the suction side of the auxiliary pump main body 470, a discharge line 720 having a first end fluidly connected to the discharge side of the auxiliary pump main body 470 and a second end fluidly connected to the motor space 300M, and a return line 730 having a first end fluidly connected to the motor space 300M and a second end fluidly connected to the external tank 90, where the suction line 710, the discharge line 720 and the return line 730 form the circulation line 700, as shown in Fig. 3.

A filter 715 is preferably interposed on the suction line 710.

In the present embodiment, the discharge line 720 includes a first discharge line 721 for introducing the discharged fluid from the second auxiliary pump main body 470 to the motor space 300M of one of the pair of left and right first wheel motor devices 500L, 500R (the right-side first wheel motor device 500R in the present embodiment), and a second discharge line 722 for fluidly connecting the motor 300M in the one first wheel motor device 500R to the motor space 300M in the other first wheel motor device 500L, as shown in Fig. 3.

The return line 730 is configured to fluidly connect the motor space 300M of the other first wheel motor device 500L to the external tank 90.

The first discharge line 721 is configured to supply both of the returned fluid from the hydraulic steering mechanism 70 and the surplus fluid to the hydraulic operation mechanism 70 into the motor space 300M of the one wheel motor device 500R.

Specifically, the first discharge line 721 includes a hydraulic steering mechanism supply line 721a for supplying the hydraulic fluid to a hydraulic steering mechanism hydraulic circuit 75; a hydraulic steering mechanism discharge line 721b for supplying the returned fluid from the hydraulic steering mechanism hydraulic circuit 75 to the motor space 300 of the one wheel motor device 500R; and a hydraulic steering mechanism hydraulic pressure setting line 721c having a first end fluidly connected to the supply line 721a and a second end fluidly connected to the discharge line 721b, the hydraulic pressure setting line 721c being interposed with a relief valve 725.

By using the second auxiliary pump main body 470 as the hydraulic source of the hydraulic actuator (the hydraulic steering mechanism 70 in the present embodiment) and supplying the returned fluid from the hydraulic actuator and the surplus fluid to the hydraulic actuator into the motor space 300M as described above, it is possible to enhance the cooling efficiency of the hydraulic motor main bodies 120 without arranging a dedicated auxiliary pump main body

Please note that it is of course possible to supply only one of the returned fluid from the hydraulic actuator or the surplus fluid to the hydraulic actuator into the motor space 300M.

More preferably, as shown in Fig. 3, the oil cooler 790 is interposed in the return line 730, and the circulation line is further provided with a bypass line 740 having a first end fluidly connected to the discharge line 720 and a second end fluidly connected to the return line 730 on a downstream side of a fluid flowing direction than the oil cooler 790, and a relief valve 745 interposed in the bypass line 740 so as to regulate a maximum hydraulic pressure of the discharge line 720.

According to such configuration, even if the viscosity of the fluid in the motor space 300M rises due to the low environmental temperature or the like so that the hydraulic pressure in the motor space 300M rises, it is possible to effectively prevent an excessive hydraulic pressure from acting on the oil cooler 790, thereby preventing damage of the oil cooler 790.

The detailed configuration of the first wheel motor device 500 will now be described.

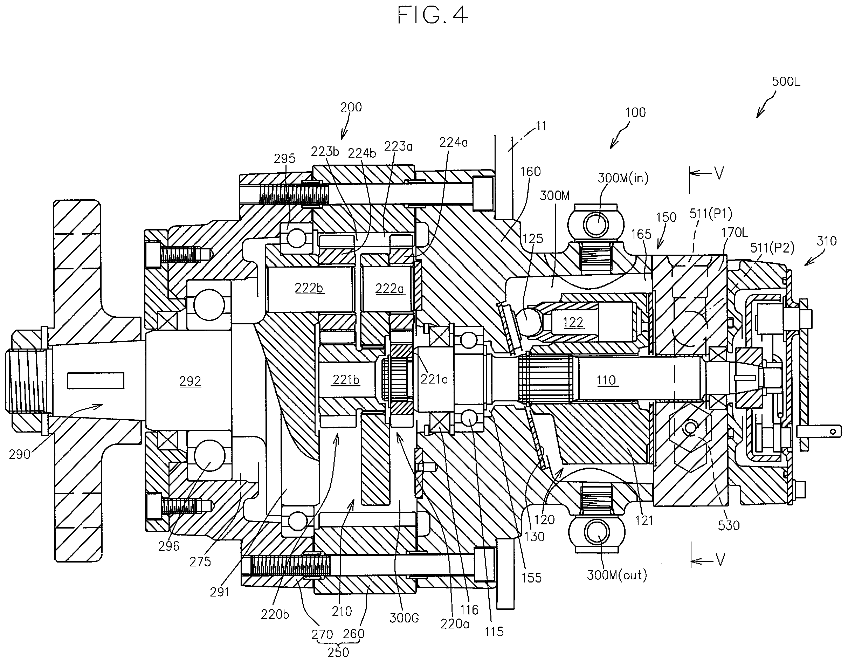

Fig. 4 shows a vertical cross sectional view of the left-side first wheel motor device 500L.

As shown in Fig. 4, the first wheel motor device 500L includes a hydraulic motor unit 100 having the hydraulic motor main body 120 fluidly connected to the hydraulic pump main body 420, a reduction gear unit 200 including the reduction gear mechanism 210 for reducing a speed of a rotational power output by the hydraulic motor main body 120, and the output member 290 for outputting the rotational power whose speed has been reduced by the reduction gear mechanism 210 towards the corresponding driving wheel 21L.

As shown in Figs. 3 and 4, the hydraulic motor unit 100 includes the hydraulic motor main body 120, a motor case 150 forming the motor space 300M, and a motor shaft 110 supporting the hydraulic motor main body 120 in a relatively non-rotatable manner.

As shown in Fig. 4, the hydraulic motor main body 120 includes a motor-side cylinder block 121 supported by the motor shaft 110 in a relatively non-rotatable manner, and a plurality of motor-side pistons 122 supported by the motor-side cylinder block 121 in a relatively non-rotatable manner about the axis line and in a reciprocating manner along the axis line.

In the present embodiment, the hydraulic motor main body 120 is of a fixed displacement type in which the suction/discharge amount is constant.

Therefore, the hydraulic motor unit 100 includes a fixed swash plate 130 that directly or indirectly engages free ends of the motor-side pistons 122 to define a reciprocating range of the motor-side pistons 122, in addition to the above configuration.

There are typically two types motor-side piston including a shoe type piston in which its free end contacts to a corresponding swash plate with a shoe, and a shoeless type piston in which its free end contacts to the corresponding swash plate without a shoe (for example, by way of a thrust bearing and the like).

The shoeless type is more advantageous in terms of a manufacturing cost and the like, but the shoe type piston is used as the motor-side piston 122 in the present embodiment, as shown in Fig. 4, for the following reasons.

Specifically, in the present embodiment, the hydraulic motor main body 120 in the first axle-driving device 50 and the hydraulic motor main body 620 in the second axle-driving device 60 are fluidly connected in series with respect to the single hydraulic pump main body 420, as shown in Fig. 3.

In the configuration, the hydraulic motor main body positioned on the upstream side in a flowing direction of the HST hydraulic fluid receives the hydraulic fluid having a pressure higher than the hydraulic motor main body positioned on the downstream side in the flowing direction of the HST hydraulic fluid.

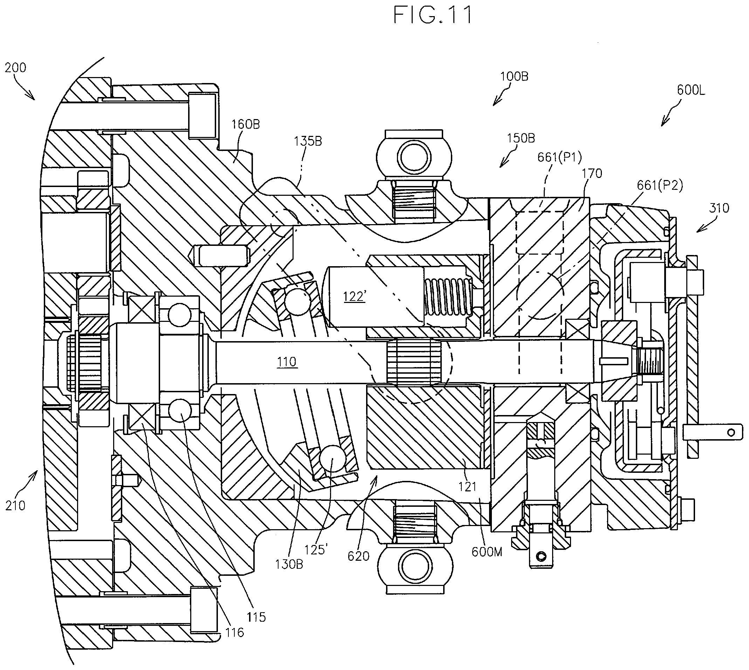

In view of such aspect, in the present embodiment, the shoe type piston is used as the motor-side piston 122 in the first axle-driving device 50 positioned on the upstream side in the flowing direction of the HST hydraulic fluid with forward movement of the vehicle as a reference, and the shoeless type piston is used as the motor-side piston 122' (see Fig. 11 below) in the second axle-driving device 60 positioned on the downstream side in the flowing direction of the HST hydraulic fluid with forward movement of the vehicle as a reference, as hereinafter described, whereby the transmission efficiency of the HST formed by the hydraulic pump main body 420, the hydraulic motor main body 120 in the first axle-driving device 50 and the hydraulic motor main body 620 in the second axle-driving device 60 can be enhanced while preventing the manufacturing cost from increasing.

In a case where a working machine such as the mower device 80 is arranged on the outer side in the longitudinal direction of the vehicle than one of either the first driving wheel 21 or the second driving wheel 22 as in the present embodiment, the hydraulic motor main body in the axle-driving device on a side close to the working machine out of the first axle-driving device 50 and the second axle-driving device 60 is preferably positioned on the upstream side in the flowing direction of the HST hydraulic fluid in forward movement of the vehicle.

According to such configuration, it is possible to supply a hydraulic fluid that is discharged from the hydraulic pump main body 420 and has a high pressure into the hydraulic motor main body on which the load caused by the working machine of a heavy component greatly acts.

In the present embodiment, the mower device 80 is arranged on the front side of the vehicle, as described above. Therefore, the hydraulic motor main body 120 in the first axle-driving device 50 is positioned on the upstream side in the flowing direction of the HST hydraulic fluid in forward movement of the vehicle.

The motor case 150 forms the casing 300 along with a reduction gear case 250, which will be later described.

Specifically, the motor case 150 includes a motor case main body 160 formed with an opening 165 that has a size allowing the hydraulic motor main body 120 to be inserted therethrough, and a motor-side port block 170L detachably connected to the motor case main body 160 so as to close the opening 165.

As shown in Fig. 4, the motor case main body 160 is provided with at lease two ports including a flow-in port 300M(in) for introducing fluid into the motor space 300M formed by the motor case main body 160 and the motor-side port block 170L and a flow-out port 300M(out) for discharging fluid from the motor space 300M.

In the present embodiment, the first discharge line 721 is fluidly connected to the flow-in port 300M(in) of the right-side first wheel motor device 500R, the flow-out port 300M(out) of the right-side first wheel motor device 500R is fluidly connected to the flow-in port 300M(in) of the left-side first wheel motor device 500L via the second discharge line 722, and the flow-out port 300M(out) of the left-side first wheel motor device 500L is fluidly connected to the return line 730.

As shown in Fig. 3, the motor case 150 is formed with a motor-side first hydraulic fluid passage 511 fluidly connected to the hydraulic motor main body 120, the motor-side first hydraulic fluid passage 511 having at least a first end opened to the outer surface to form a motor-side hydraulic fluid port 511(P); and a motor-side second hydraulic fluid passage 512 fluidly connected to the hydraulic motor main body 120, the motor-side second hydraulic fluid passage 512 having at least a first end opened to the outer surface to form a motor-side hydraulic fluid port 512(P).

In the present embodiment, the motor-side first and second hydraulic fluid passages 511, 512 are formed in the motor-side port block 170L.

As described above, the right-side first wheel motor device 500R, which is not illustrated in Fig. 4, is reversed by 180 degrees with respect to the left-side first wheel motor device 500L, where a motor-side port block 170R that is included in the right-side first wheel motor device 500R and the motor-side port block 170L are common components.

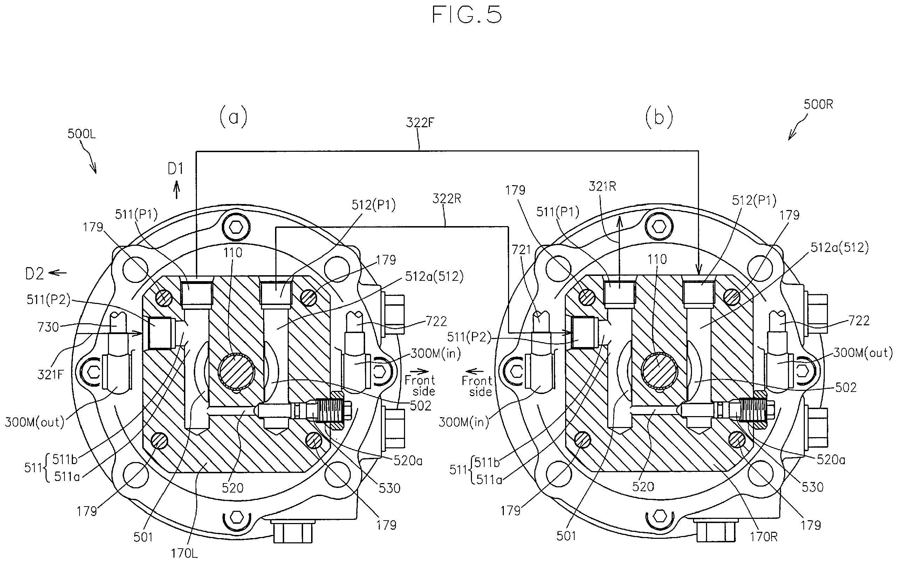

Fig. 5 shows a vertical cross sectional view of the motor-side port blocks 170.

Fig. 5(a) shows a vertical cross sectional view of the motor-side port block 170 in the left-side first wheel motor device 500L (hereinafter referred to as a left motor-side port block 170L in some cases) taken along line V-V of Fig. 4, and Fig. 5(b) shows a vertical cross sectional view of the motor-side port block 170 in the right-side first wheel motor device 500R (hereinafter referred to as a right motor-side port block 170R in some cases).

As shown in Fig. 5, the motor-side port block 170 is formed with a first fluid porting 501 such as a kidney port opened to a motor contacting surface to which the hydraulic motor main body 120 slidably contacts, a second fluid porting 502 such as a kidney port opened to the motor contacting surface on the side opposite to the first fluid porting 501 with the motor shaft 110 in between, the motor-side first hydraulic fluid passage 511 fluidly connected to the first fluid porting 501, and the motor-side second hydraulic fluid passage 512 fluidly connected to the second fluid porting 502.

At least one of the motor-side first and second hydraulic fluid passages 511, 512 is preferably opened at plural portions on the outer surface of the motor-side port block 170.

According to the configuration where at least one of the motor-side first and second hydraulic fluid passages 511, 512 includes a plurality of hydraulic fluid ports, it is possible to enhance the degree of freedom of design in arranging the hydraulic fluid conduits for fluidly connecting between the motor-side hydraulic fluid ports and the pump-side hydraulic fluid ports 441(P), 442(P).

Specifically, the positions of the pump-side hydraulic fluid ports 441(P), 442(P) are determined by a mounting posture of the pump case 430. Similarly, the positions of the motor-side hydraulic fluid ports are determined by a mounting posture of the motor case 150. Therefore, in a case where each of the motor-side first and second hydraulic fluid passages 511, 512 has only a single hydraulic fluid port, it is needed to fluidly connect the pump-side hydraulic fluid ports whose positions are unambiguously defined according to the mounting posture of the pump case 430 to the motor-side hydraulic fluid ports whose positions are unambiguously defined according to the mounting position of the motor case 150 by the hydraulic fluid conduits.

On the other hand, according to the configuration where at least one of the motor-side first and second hydraulic fluid passages 511, 512 includes plural hydraulic fluid ports, as described above, it is possible to enhance the degree of freedom of design in arranging the hydraulic fluid conduits without losing the pressure balance.

More preferably, the plurality of motor-side hydraulic fluid ports are configured so as to face different directions to each other.

Furthermore, in a case where both the hydraulic motor main body 120 in the left-side first wheel motor device 500L (hereinafter referred to as a left-side first hydraulic motor main body 120L is some case) and the hydraulic motor main body 120 in the right-side first wheel motor device 500R (hereinafter referred to as a right-side first hydraulic motor main body 120R in some cases) are hydraulically and differentially driven by the single hydraulic pump main body 420 as in the working vehicle 1A (see Fig. 3), it is possible to fluidly connect the single hydraulic pump main body 420 to the pair of hydraulic motor main bodies 120L, 120R in a state of keeping the pressure balance without arranging a flow dividing structure such as a T-shaped joint in the hydraulic fluid conduit by configuring at least one of the motor-side first and second hydraulic fluid passages 511, 512 so as to include a plurality of hydraulic fluid ports, whereby enhancing the workability in piping.

As shown in Fig. 5, in the present embodiment, the motor-side first hydraulic fluid passage 511 includes plural hydraulic fluid ports, and the motor-side second hydraulic fluid passage 512 includes one hydraulic fluid port.

Specifically, the motor-side first hydraulic fluid passage 511 includes a first hydraulic fluid port 511(P1) facing a first direction D1 that is one of directions orthogonal to the motor shaft 110, and a second hydraulic fluid port 511 (P2) facing a second direction D2 orthogonal to both of the motor shaft 100 and the first direction D1.

On the other hand, the motor-side second hydraulic fluid passage 512 includes only a first hydraulic fluid port 512 (P1) facing the first direction D1.

The hydraulic circuit for fluidly connecting the hydraulic pump main body 420 to the left-side and right-side first hydraulic motor main bodies 120L, 120R will now be described with taking a case where the pump-side first hydraulic fluid passage 441 has a higher pressure and the second hydraulic fluid passage 442 has a lower pressure at forward movement of the vehicle as an example.

As shown in Figs. 1 to 3 and 5, the working vehicle 1A includes a pump-side forward-movement-high-pressure conduit 311F having a first end fluidly connected to the hydraulic fluid port 441(P) of the pump-side first hydraulic fluid passage 441, a pump-side backward-movement-high-pressure conduit 311R having a first end fluidly connected to the hydraulic fluid port 442(P) of the pump-side second hydraulic fluid passage 442, a first-axle-side forward-movement-high-pressure conduit 321F having a first end fluidly connected to a second end of the pump-side forward-movement-high-pressure conduit 311F via a flexible conduit 315 (see Fig. 2) and a second end fluidly connected to the second hydraulic fluid port 511(P2) of the motor-side first hydraulic fluid passage 511 in the left-side motor-side port block 170L, a first-axle-side forward-movement-high-pressure connecting conduit 322F having a first end fluidly connected to the first hydraulic fluid port 511(P1) of the motor-side first hydraulic fluid passage 511 in the left-side motor-side port block 170L and a second end fluidly connected to the first hydraulic fluid port 512(P2) of the motor-side second hydraulic fluid passage 512 in the right-side motor-side port block 170R, a first-axle-side backward-movement-high-pressure connecting conduit 322R having a first end fluidly connected to the first hydraulic fluid port 512(P1) of the motor-side second hydraulic fluid passage 512 in the left-side motor-side port block 170L and a second end fluidly connected to the second hydraulic fluid port 511(P2) of the motor-side first hydraulic fluid passage 511 in the right-side motor-side port block 170R, and a first-axle-side backward-movement-high-pressure conduit 321R having a first end fluidly connected to the first hydraulic fluid port 511(P1) of the motor-side first hydraulic fluid passage 511 in the right-side motor-side port block 170R and a second end fluidly connected to the pump-side backward-movement-high-pressure conduit 311R, directly or indirectly.

Specifically, in the present embodiment, the motor-side first hydraulic fluid passage 511 becomes the forward-movement-high-pressure-side hydraulic fluid passage in the left-side motor-side port block 170L, and, on the other hand, the motor-side second hydraulic fluid passage 512 becomes the forward-movement-high-pressure-side hydraulic fluid passage in the right-side motor-side port block 170R.

In the present embodiment, both of the hydraulic motor main bodies 120 (i.e. the left-side first hydraulic motor main body 120L and the right-side first hydraulic motor main body 120R) of the first axle-driving device 50 and the hydraulic motor main body 620 of the second axle-driving device 60 are fluidly driven by the single hydraulic pump main body 420, as described above. Therefore, the hydraulic motor main body 620 of the second axle-driving device 60 is inserted between a second end of the first-axle-side backward-movement-high-pressure conduit 321R and a second end of the pump-side backward-movement-high-pressure conduit 311R.

The motor case 150 is preferably provided with a bypass fluid passage 520 for fluidly connecting between the motor-side first and second hydraulic fluid passages 511, 512, and a bypass valve 530 capable of being externally operated for selectively communicating or shutting off the bypass fluid passage 520.

In the present embodiment, the bypass fluid passage 520 and the bypass valve 530 are arranged in the motor-side port block 170, as shown in Figs. 3 and 5.

It is possible to prevent the hydraulic fluid discharged from the hydraulic motor main body 120 from acting on the hydraulic pump main body 420 so as to hydraulically drive the same when forcibly towing the vehicle at the time of malfunction or the like of the HST or the driving power source 30 according to the configuration where the bypass fluid passage 520 and the bypass valve 530 are arranged in the motor case 150, as described above.

Furthermore, according to such configuration, it is possible to reduce the tractive force required in forcibly towing the vehicle as much as possible.

Specifically, in the conventional working vehicle equipped with the hydraulic pump unit and the wheel motor device arranged spaced apart from each other, the bypass fluid passage and the bypass valve are arranged in the hydraulic pump unit including the hydraulic pump main body which forms the HST in cooperation with the hydraulic motor main body in the wheel motor device.

The conventional configuration could also prevent the hydraulic pressure difference from occurring between the pair of hydraulic fluid lines that fluidly connect the hydraulic pump main body and the hydraulic motor main body when forcibly towing the vehicle.

However, in the conventional configuration, the hydraulic fluid suctioned by and discharged from the hydraulic motor main body when forcibly towing the vehicle circulates through the motor-side first hydraulic fluid passage, the first hydraulic fluid conduit, the pump-side first hydraulic fluid passage, the bypass fluid passage that is arranged in the pump unit, the pump-side second hydraulic fluid passage, the second hydraulic fluid conduit, and the motor-side second hydraulic fluid passage.

That is, in the conventional configuration, the hydraulic fluid suctioned and discharged by the hydraulic motor main body when forcibly towing the vehicle circulates across substantially the entire pair of hydraulic fluid lines that fluidly connect the hydraulic motor main body and the hydraulic pump main body, thereby the force for circulating such hydraulic fluid becomes a power loss to the tractive force for forcibly towing the vehicle.

In the present embodiment, on the other hand, the bypass fluid passage 520 and the bypass valve 530 are arranged in the motor case 150, as described above.

Therefore, the hydraulic fluid suctioned and discharged by the hydraulic motor main body 120 when forcibly towing the vehicle circulates through the motor-side first hydraulic fluid passage 511, the bypass fluid passage 520, and the motor-side second hydraulic fluid passage 512, thereby reducing the tractive force loss caused by the circulation of the hydraulic fluid.

In the present embodiment, the motor-side first hydraulic fluid passage 511 includes a main fluid passage 511a along the first direction D1, and a branched fluid passage 511b branched in an orthogonal direction from the main fluid passage 511, as shown in Fig. 5. The main fluid passage 511a is fluidly connected to the first fluid porting 501 and has a first end opened to the outer surface to form the first hydraulic fluid port 511(P1). The branched fluid passage 511b has a first end opened to the outer surface to form the second hydraulic fluid port 511 (P2).

The motor-side second hydraulic fluid passage 512 includes a main fluid passage 512a substantially parallel to the main fluid passage 511a of the motor-side first hydraulic fluid passage 511 with the motor shaft 110 in between. The main fluid passage 512a is fluidly connected to the second fluid porting 502 and has a first end opened to the outer surface to form the first hydraulic fluid port 512(P1).

The bypass fluid passage 520 is formed so as to intersect with both the main fluid passage 511a of the motor-side first hydraulic fluid passage 511 and the main fluid passage 512a of the motor-side second hydraulic fluid passage 512 with a first end 520a opened to the outer surface.

The bypass valve 530 is inserted into the bypass fluid passage 520 from the first end 520a.

As shown in Fig. 5, the bypass fluid passage 520 is preferably formed to be substantially orthogonal to the main fluid passages 511a, 512a of the motor-side first and second hydraulic fluid passages 511, 512 on a side opposite to the branched fluid passage 511b with the motor shaft 110 as the reference.

According to the configuration, it is possible to arrange the branched fluid passage 511b and the bypass fluid passage 520 while preventing enlargement of the motor-side port block 170 as much as possible.

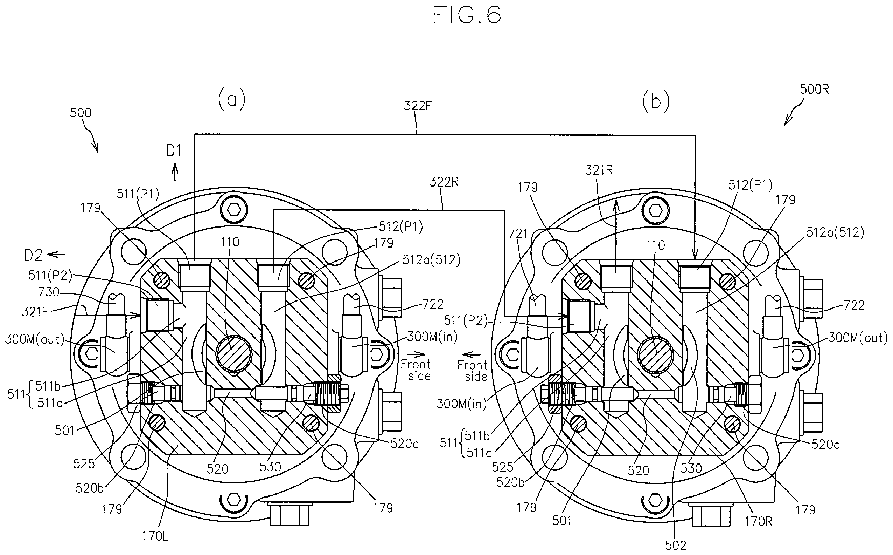

As shown in Fig. 6, the bypass fluid passage 520 preferably has a second end 520b opened to a side surface opposite to a side surface to which the first end 520a is opened.

According to the configuration, it is possible to facilitate the accessibility to the bypass valves 530 in both of the pair of left and right first wheel motor devices 500L, 500R.

Specifically, in the configuration shown in Fig. 5, the bypass valve 530 in the left-side first wheel motor device 500L has a proximal end (that functions as an operation end) positioned at a side surface on a front side of the vehicle of the motor-side port block 170, whereas the bypass valve 530 in the right-side first wheel motor device 500R has the proximal end positioned at a side surface on a rear side of the vehicle of the motor-side port block 170.

In a case where the pair of left and right wheel motor devices 500L, 500R drive the first driving wheel 21 positioned on the front side of the vehicle as in the present embodiment, the bypass valve 530 in the left-side first wheel motor device 500L can be easily accessed from the front side of the vehicle, but the bypass valve 530 in the right-side first wheel motor device 500R cannot be accessed without going under the vehicle frame.

In the configuration shown in Fig. 6, on the other hand, it is possible to position the proximal ends of the bypass valves 530 in both of the pair of left and right first wheel motor devices 500L, 500R on the front side of the vehicle, thereby facilitate the accessibility to both bypass valves 530.

The opened end on a side opposite to the opened end through which the bypass valve 530 is inserted of the bypass fluid passage 520 is closed by a plug 525.

Specifically, in the configuration shown in Fig. 6, the left-side first wheel motor device 500L is configures so that the bypass fluid passage 520 has the first end 520a through which the bypass valve 530 is inserted into the bypass fluid passage 520 and the second end 520b closed by the plug 525.

On the other hand, the right-side first wheel motor device 500R is configured so that the bypass fluid passage 520 has the second end 520b through which the bypass valve 530 is inserted into the bypass fluid passage 520 and the first end 520a closed by the plug 525.

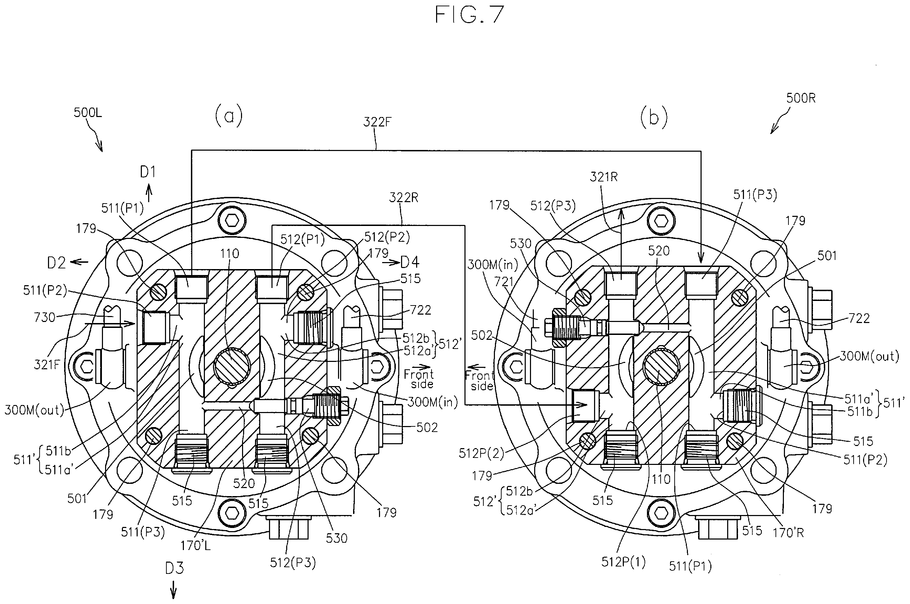

Fig. 7 shows a vertical cross sectional view of another motor-side port block 170' having a different configuration.

Figs. 7(a) and 7(b) respectively shows the motor-side port block 170' in the left-side first wheel motor device 500L (hereinafter referred to as a left motor-side port block 170'L in some cases) and the motor-side port block 170' in the right-side first wheel motor device 500R (hereinafter referred to as a right motor-side port block 170'R in some cases).

The motor-side port block 170' includes the first and second fluid portings 501, 502, motor-side first and second hydraulic fluid passages 511', 512' fluidly and respectively connected to the first and second fluid portings 501, 502, the bypass fluid passage 520, and the bypass valve 530.

The motor-side first hydraulic fluid passage 511' includes a third hydraulic fluid port 511(P3) facing a third direction D3 that is the direction opposite to the first direction D1, in addition to the first hydraulic fluid port 511(P1) facing the first direction D1 and the second hydraulic fluid port 511(P2) facing the second direction D2.

Specifically, the motor-side first hydraulic fluid passage 511' includes a main fluid passage 511a' extending along the first and third directions D1, D3 so as to have a first end opened toward the first direction D1 to form the first hydraulic fluid port 511(P1) and a second end opened toward the third direction D3 to form the third hydraulic fluid port 511(P3), and the branched fluid passage 511b branched in a direction orthogonal to the main fluid passage 511a' and having a distal end opened toward the second direction to form the second hydraulic fluid port 511(P2).

The motor-side second hydraulic fluid passage 512' includes a second hydraulic fluid port 512(P2) facing a fourth direction D4 that is a direction opposite to the second direction D2 and a third hydraulic fluid port 512(P3) facing the third direction D3, in addition to the first hydraulic fluid port 512(P1) facing the first direction D1.

Specifically, the motor-side second hydraulic fluid passage 512' includes a main fluid passage 512a' extending along the first and third directions D1, D3 so as to have a first end opened toward the first direction D1 to form the first hydraulic fluid port 512(P1) and a second end opened toward the third direction D3 to form the third hydraulic fluid port 512(P3), and the branched fluid passage 512b branched in a direction orthogonal to the main fluid passage 512a' and having a distal end opened toward the second direction to form the second hydraulic fluid port 512(P2).

The bypass fluid passage 520 intersects with the motor-side first and second hydraulic fluid passages 511', 512' with the first end 512a opened toward the fourth direction D4.

The motor-side port block 170' is capable of being connected to the motor case main body 160 at a first position about an axial line of the motor shaft 110 and a second position displaced about the axial line of the motor shaft 110 from the first position.

The motor-side port block 170' shown in Fig. 7 has four attachment holes 179 for detachable connecting the port block 170' to the motor case main body 160, the four attachment holes 179 being formed at the same radius with the axial line of the motor shaft 110 as the center and at an interval of 90 degrees about the axial line.

Therefore, the motor-side port block 170' is capable of taking one connecting posture and three other connecting postures displaced by every 90 degrees about the axial line of the motor shaft 110 from the one connecting posture.

In the configuration shown in Fig. 7, the right motor-side port block 170'R (see Fig. 7(b)) is connected to the motor case main body 160 in a state of being displaced by 180 degrees about the axial line of the motor shaft 110 with respect to the left motor-side port block 170'L (see Fig. 7(a)).

The motor-side port block 170' shown in Fig. 7 could also enhance the accessibility to the bypass valves 530 in the pair of left and right first wheel motor devices 500L, 500R while simplifying the external conduit structure for fluidly connecting the single hydraulic pump main body 420 to the left-side first hydraulic motor main body 120L and the right-side first hydraulic motor main body 120R.

The conduit connecting structure when using the motor-side port block 170' will now be described with taking a case where the pump-side first hydraulic fluid passage 441 has a higher pressure at forward movement of the vehicle and the pump-side second hydraulic fluid passage 442 has a higher pressure at backward movement of the vehicle as an example.

The second end of the first-axle-side forward-movement-high-pressure conduit 321F is fluidly connected to the second hydraulic fluid port 511(P2) of the motor-side first hydraulic fluid passage 511' in the left motor-side port block 170'L. The first hydraulic fluid port 511(P1) of the motor-side first hydraulic fluid passage 511 in the left motor-side port block 170'L is fluidly connected to the third hydraulic port 511(P3) of the motor-side first hydraulic fluid passage 511' in the right motor-side port block 170'R that is displaced by 180 degrees about the motor shaft 110 with respect to the left motor-side port block 170'L by way of the first-axle-side forward-movement-high-pressure connecting conduit 322F.

The third hydraulic fluid port 511(P3) of the motor-side first hydraulic fluid passage 511' in the left motor-side port block 170'L as well as the first and second hydraulic fluid ports 511(P1), 511(P2) of the motor-side first hydraulic fluid passage 511' in the right motor-side port block 170'R are closed by the plugs 515.

The first hydraulic fluid port 512(P1) of the motor-side second hydraulic fluid passage 512' in the left motor-side port block 170'L is fluidly connected to the second hydraulic fluid port 512(P2) of the motor-side second hydraulic fluid passage 512' in the right motor-side port block 170'R by way of the first-axle-side backward-movement-high-pressure connecting conduit 322R. The first-axle-side backward-movement-high-pressure conduit 321R is connected to the third hydraulic fluid port 512(P3) of the motor-side second hydraulic fluid passage 512' in the right motor-side port block 170'R.

The second and third hydraulic fluid ports 512(P2), 512(P3) of the motor-side second hydraulic fluid passage 512' in the left motor-side port block 170'L as well as the first hydraulic fluid port 512(P1) of the motor-side second hydraulic fluid passage 512' in the right motor-side port block 170'R are closed by the plugs 515.

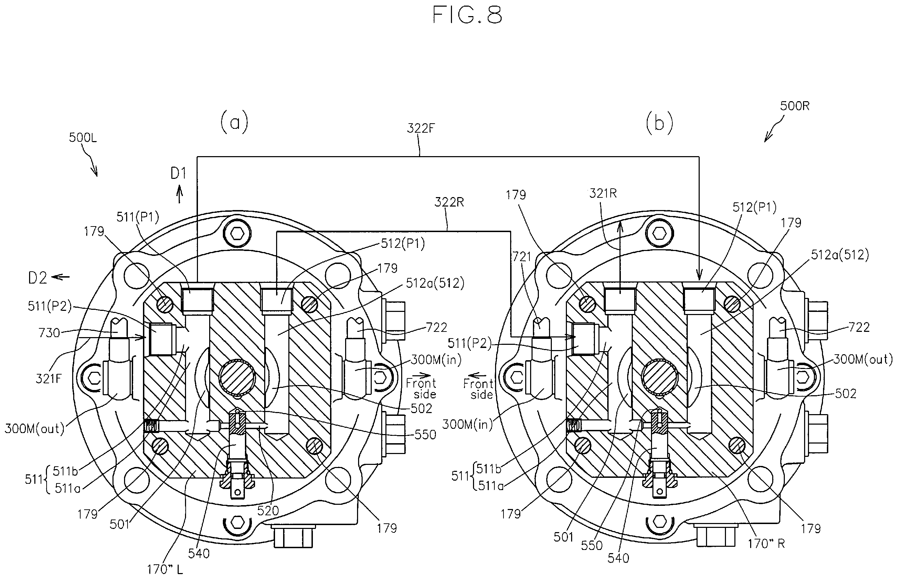

It is possible to use a motor-side port block 170" shown in Fig. 8 in place of the motor-side port block 170, 170' shown in Figs. 5 to 7.

Specifically, the motor-side port block 170, 170' shown in Figs. 5 to 7 is configured to be capable of selectively switching an HST operable state of fluidly disconnecting between the motor-side first and second hydraulic fluid passages 511, 512, and an HST non-operable state of fluidly connecting between the hydraulic fluid passages 511, 512 while maintaining a closed circuit of the HST hydraulic fluid line, based on an external operation. On the other hand, the motor-side port block 170" shown in Fig. 8 is configured to be capable selectively switching the HST operable state and an HST non-operable state of opening the closed circuit of the HST hydraulic fluid line, based on an external operation.

Fig. 8(a) shows the motor-side port block 170" in the left-side first wheel motor device 500L (hereinafter referred to as a left motor-side port block 170" in some cases), and Fig. 8(b) shows the motor-side port block 170" in the right-side first wheel motor device 500R (hereinafter referred to as a right motor-side port block 170"R in some cases).

Specifically, as shown in Figs. 8(a) and 8(b), the motor-side port block 170" is formed with the first and second fluid portings 501, 502, the motor-side first and second hydraulic fluid passages 511, 512, the bypass fluid passage 520 for fluidly connecting the motor-side first and second hydraulic fluid passages 511, 512, a rotary valve 540 interposed in the bypass fluid passage 520, and a drain fluid passage 550 having a first end opened into the motor space 300M.

The rotary valve 540 is configured to rotate about the axial line based on an external operation, and takes a shutoff position of fluidly disconnecting the bypass fluid passage 520 and a communicating position of fluidly connecting the bypass fluid passage 520.

Furthermore, the rotary valve 540 is configured to fluidly disconnect the drain fluid passage 550 to the bypass fluid passage 520 at the shutoff position, and to fluidly connect the drain fluid passage 550 to the bypass fluid passage 520 at the communicating position.

According to the configuration, it is possible to prevent the hydraulic fluid, which has been discharged from the hydraulic motor main body 120, from being transmitted to the hydraulic pump main body 420 even if the hydraulic motor main body 120 is rotated when forcibly towing the vehicle, and to take out an air from the pair of hydraulic fluid lines fluidly connecting the hydraulic motor main body 120 and the hydraulic pump main body 420 as fast as possible when the air enters the pair of hydraulic fluid lines.

In the present embodiment, the hydraulic fluid from the single hydraulic pump main body 420 is divided into the left-side first hydraulic motor main body 120L and the right-side first hydraulic motor main body 120R, as described above.

In such configuration, when one of the left and right first driving wheels 21L, 21R falls into a groove or a mud area, the hydraulic fluid from the hydraulic pump main body 420 is likely to flow in a concentrated manner to the hydraulic motor main body 120 corresponding to the one first driving wheel 21 that is in a low load state, and as a result, the hydraulic fluid is less likely to be supplied to the hydraulic motor main body 120 that drives the other first driving wheel 21.

In view of this point, the first wheel motor device 500 is preferably provided with a hydraulic differential lock mechanism 560.

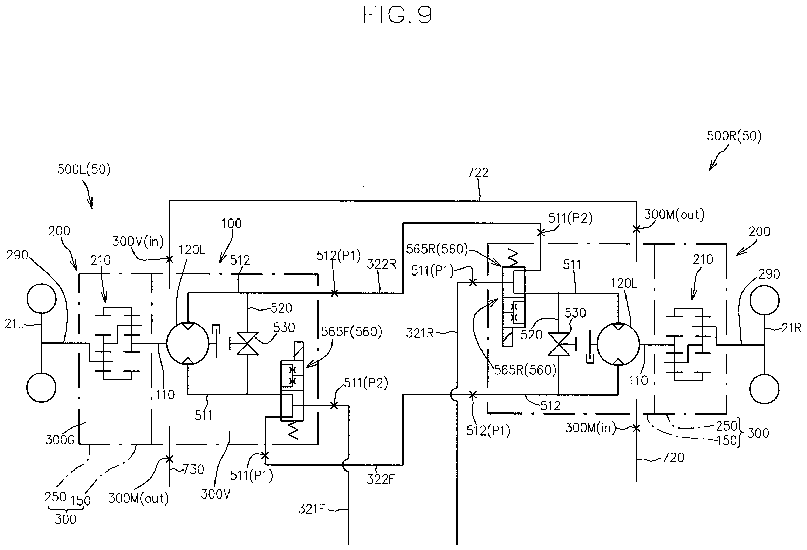

Fig. 9 shows a hydraulic circuit diagram of the vicinity of the first axle-driving device 50 equipped with the hydraulic differential lock mechanism 560.

In the configuration shown in Fig. 9, the hydraulic differential lock mechanism 560 includes a forward-movement switching valve 565F and a backward-movement switching valve 565R.

The forward-movement switching valve 565F is interposed in a motor-side hydraulic fluid passage that becomes high pressure at the time of forward movement and that includes a plurality of hydraulic fluid ports.

The backward-movement switching valve 565R is interposed in a motor-side hydraulic fluid passage that becomes high pressure at the time of backward movement and that includes a plurality of hydraulic fluid ports.

The switching valves 565F, 565R are preferably attached to the outer surface of the motor-side port block 170 of the first wheel motor device 500 or accommodated in the motor-side port block 170.

The switching valves 565F, 565R are configured to be capable of selectively switching a hydraulically differential state of dividing the hydraulic fluid from the hydraulic pump main body 420 as it is into the left-side first hydraulic pump main body 120L and the right-side first hydraulic motor main body 120R, or a hydraulically differential-lock state of dividing the hydraulic fluid from the hydraulic pump main body 420 at a predetermined flow dividing ratio into the left-side first hydraulic pump main body 120L and the right-side first hydraulic motor main body 120R via throttles or restrictors.

Please note that it is possible to omit one of the forward-movement switching valve 565F and the backward-movement switching valve 565R depending on the specification.

The reduction gear unit 200 will now be described.

As shown in Figs. 3 and 4, the reduction gear unit 200 includes the reduction gear mechanism 210, and a gear case 250 detachably connected to the motor case 150 so as to form the gear space 300G for accommodating the reduction gear mechanism 210.

In the present embodiment, the reduction gear mechanism 210 includes first and second planetary gear mechanisms 220a, 220b that are arranged in series with each other.

Specifically, the motor case 150 is formed with a pass-through hole 155 (see Fig. 4) for allowing a first end (an end on an outer side in the width direction of the vehicle in the present embodiment) of the motor shaft 110 to insert into the gear space 300G. The reduction gear mechanism 210 is configured so as to reduce a speed of the rotational power output from the first end of the motor shaft 110.

As shown in Fig. 4, a sealing member 116 as well as a bearing member 115 for supporting the motor shaft 110 in a rotatable manner around the axis line is provided within the pass-through hole 155. The motor space 300M and the gear space 300G are liquid-tightly separated to each other by the sealing member 116.

The first planetary gear mechanism 220a includes a first sun gear 221a supported in a relatively non-rotatable manner by the first end of the motor shaft 110, a first planetary gear 224a that gears with the first sun gear 221a so as to revolve around the first sun gear 221a, a first carrier 222a that supports the first planetary gear 224a in a relatively rotatable manner and that revolves around the first sun gear 221a according to the revolution of the first planetary gear 224a, and a first internal gear 223a that gears with the first planetary gear 224a.

The second planetary gear mechanism 220b includes a second sun gear 221b operatively connected to the first carrier 222a, a second planetary gear 224b that gears with the second sun gear 221b so as to revolve around the second sun gear 221b, a second carrier 222b that supports the second planetary gear 224b in a relatively rotatable manner and that revolves around the second sun gear 221b according to the revolution of the second planetary gear 224b, and a second internal gear 223b that gears with the second planetary gear 224b.

The gear case 250 forms the casing 300 in cooperation with the motor case 150.

In the present embodiment, the gear case 250 includes a first gear case 260 connected to the motor case 150, and a second gear case 270 connected to the motor case 150 with the first gear case 260 in between.

The first gear case 260 has a hollow shape in which both of the inner side in the width direction of the vehicle that contacts the motor case 150 and the outer side in the width direction of the vehicle on a side opposite to the motor case 150 are opened, and has an inner circumferential surface integrally formed with the first and second internal gears 223a, 223b.

The second gear case 270 has a hollow shape in which the inner side in the width direction of the vehicle that contacts the first gear case 260 is opened and the outer side in the width direction of the vehicle on a side opposite to the first gear case 260 is closed by an end wall.

The end wall of the second gear case 270 is formed with a pass-through hole 275 through which the output member 290 is inserted.

The output member 290 includes a flange part 291 connected to the second carrier 222b so as to rotate about the axis line according to the rotation of the second carrier 222b about the second sun gear 221b, and an output shaft part 292 extending outward in the width direction of the vehicle from the flange part 291.

In the present embodiment, the output member 290 is supported at two points by a first bearing member 295 arranged between an inner circumferential surface of the second gear case 270 and an outer circumferential surface of the flange part 291, and a second bearing member 296 arranged between an inner circumferential surface of the pass-through hole 275 formed in the end wall of the second gear case 270 and an outer circumferential surface of the output shaft part 292, thereby being stably rotated about the axis line.

It is possible to use a low-torque/high-rotation hydraulic motor main body as the hydraulic motor main body 120 by reducing the speed of the rotational power from the hydraulic motor main body with the reduction gear mechanism 210 and transmitting the rotational power whose speed has been reduced towards the corresponding driving wheel 21 as described above. Therefore, it is possible to compact the hydraulic motor main body 120 and to reduce an amount of the hydraulic fluid leaked from the hydraulic motor main body 120, thereby enhancing the transmission efficiency of the HST.

In the present embodiment, the first wheel motor device 500 is further provided with a brake unit 310.

The brake unit 310 is configured so as to apply a braking force to the motor shaft 110 that is positioned before the speed of the rotational power is reduced by the reduction gear mechanism 210.

Specifically, as shown in Fig. 4, the motor shaft 110 has a second end, which is on a side opposite to the first end on the outer side in the width direction of the vehicle, projecting to the inner side in the width direction of the vehicle from the motor case 150, and a brake rotor of the brake unit 310 is mounted to the second end.

The brake unit 310 is connected to the motor case 150 so as to selectively apply the braking force to the second end of the motor shaft 110 based on an external operation.

In the present embodiment, the brake unit 310 is an inward-expanding drum brake that is internally mounted to a brake case, but in place thereof, may be a band brake having a drum-shaped brake rotor exposed to the outside of the brake case or may be a disc brake.

The second axle-driving device 60 will now be described.

The second axle-driving device 60 is configured to hydraulically drive the pair of left and right second driving wheels 22L, 22R by utilizing the hydraulic fluid from the hydraulic pump main body 420.

In the present embodiment, the first axle-driving device 50 and the second axle-driving device 60 are fluidly connected in series with respect to the hydraulic pump main body 420, as described above. Specifically, the second axle-driving device 60 is driven by the return fluid from the first axle-driving device 50.

The second axle-driving device 60 may take various configurations.

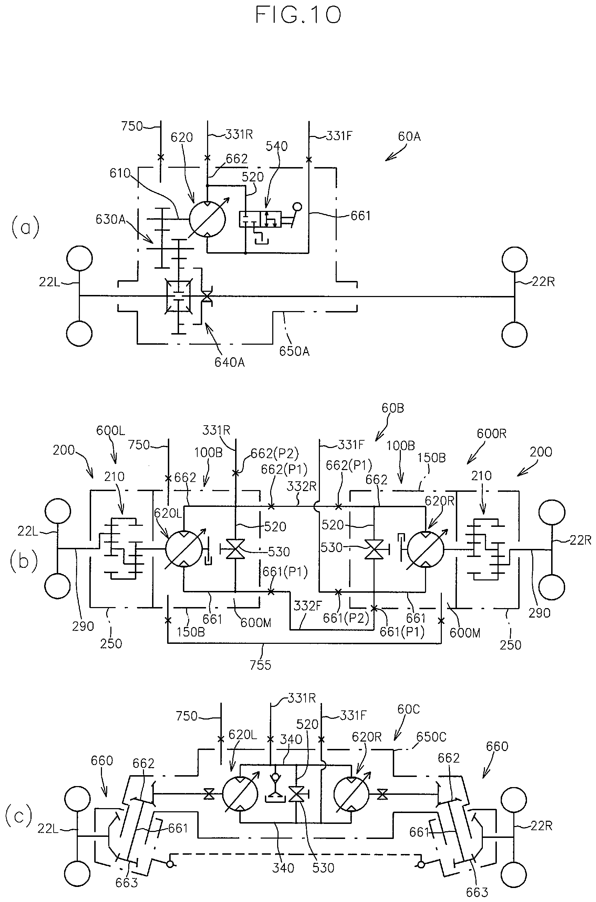

Figs. 10(a) to 10(c) show hydraulic circuit diagrams of the various second axle-driving devices 60.

In Figs. 10(a) to 10(c), the same reference characters are denoted for members same as the members described above.

The second axle-driving device 60A shown in Fig. 10(a) is configured to differentially drive the pair of left and right second driving wheels 22L, 22R by way of a mechanical differential gear mechanism 640A.

Specifically, the second axle-driving device 60A includes the single second hydraulic motor main body 620 directly or indirectly fluidly connected to the hydraulic pump main body 420, a motor shaft 610 for outputting the rotational power output from the second hydraulic motor main body 620, a speed reduction gear mechanism 630A for reducing the speed of the rotational power of the motor shaft 610, the mechanical differential gear mechanism 640A for differentially transmitting the rotational power whose speed has been reduced by the speed reduction gear mechanism 630A to the pair of left and right second driving wheels 22L, 22R, and an axle case 650A for accommodating the hydraulic motor main body 620, the motor shaft 610, the speed reduction gear mechanism 630A and the differential gear mechanism 640A.

As shown in Fig. 10(a), the axle case 650A is provided with a pair of second-motor-side first and second hydraulic fluid passages 661, 662 fluidly connected to the second hydraulic motor main body 620, one of the pair of second-motor-side first and second hydraulic fluid passages 661, 662 having a higher pressure at the time of forward movement of the vehicle and the other having a higher pressure at the time of backward movement of the vehicle.

The one second-motor-side hydraulic fluid passage that has a higher pressure at the time of forward movement of the vehicle (e.g., the second-motor-side first hydraulic fluid passage 661) is fluidly connected to a second-axle-side forward-movement-high-pressure conduit 331F, and the other second-motor-side hydraulic fluid passage that has a higher pressure at the time of backward movement of the vehicle (e.g., the second-motor-side second hydraulic fluid passage 662) is fluidly connected to a second-axle-side backward-movement-high-pressure conduit 331R.

As described above, the first and second axle-driving devices 50, 60 are fluidly connected in series with respect to the hydraulic motor main body 420 in the present embodiment.

Therefore, the second-axle-side forward-movement-high-pressure conduit 331F is fluidly connected to the first-axle-side backward-movement-high-pressure conduit 321R, and the second-axle-side backward-movement-high-pressure conduit 331R is fluidly connected to the pump-side backward-movement-high-pressure conduit 311R.

A flexible conduit 335 (see Fig. 2) is interposed between the second-axle-side forward-movement-high-pressure conduit 331F and the first-axle-side backward-movement-high-pressure conduit 321R.

Furthermore, as shown in Fig. 10(a), the second axle-driving device 60A is provided with the rotary valve 540 interposed between the second-motor-side first and second hydraulic fluid passages 611, 612, and a drain conduit 750 for fluidly connecting the internal space of the axle case 650A to the fluid tank 90.

A second axle-driving device 60B shown in Fig. 10(b) includes a pair of left and right second wheel motor devices 600L, 600R for respectively driving the pair of left and right second driving wheels 22L, 22R.

The pair of left and right second wheel motor devices 600L, 600R have the same configuration to each other.

The second wheel motor device 600 has substantially the same configuration as the first wheel motor device 500 except that the hydraulic motor unit 100 is replaced with a hydraulic motor unit 100B.

That is, the second wheel motor device 600 includes the hydraulic motor unit 100B, the speed reduction gear unit 200, and the output member 290.

The hydraulic motor unit 100B in the left-side second wheel motor device 600L includes the second hydraulic motor main body 620 (hereinafter referred to as a left-side second hydraulic motor main body 620L in some cases), and a pair of second-motor-side first and second hydraulic fluid passages 661, 662 fluidly connected to the left-side second hydraulic motor main body 620L.

The second-motor-side first hydraulic fluid passage 661 has a first hydraulic fluid port 661(P1) and the second-motor-side second hydraulic fluid passage 662 has a first hydraulic fluid port 662(P1).

The hydraulic motor unit 100B in the right-side second wheel motor device 600R includes the second hydraulic motor main body 620 (hereinafter referred to as a right-side second hydraulic motor main body 620R in some cases), and a pair of second-motor-side first and second hydraulic fluid passages 661, 662 fluidly connected to the right-side second hydraulic motor main body 620R.

The second-motor-side first hydraulic fluid passage 661 has the first hydraulic fluid port 661(P1) and the second-motor-side second hydraulic fluid passage 662 has the first hydraulic fluid port 662(P1).

One second-motor-side hydraulic fluid passage (e.g., the second-motor-side first hydraulic fluid passage 661) having a higher pressure at the time of forward movement of the vehicle in the left-side second wheel motor device 600L and one second-motor-side hydraulic fluid passage (e.g., the second-motor-side first hydraulic fluid passage 661) having a higher pressure at the time of forward movement of the vehicle in the right-side second wheel motor device 600R are fluidly connected by way of a second-axle-side forward-movement-high-pressure connecting conduit 332F.

Similarly, the other second-motor-side hydraulic fluid passage (e.g., the second-motor-side second hydraulic fluid passage 662) having a higher pressure at the time of backward movement of the vehicle in the left-side second wheel motor device 600L and the other second-motor-side hydraulic fluid passage (e.g., the second-motor-side second hydraulic fluid passage 662) having a high pressure at the time of backward movement of the vehicle in the right-side second wheel motor device 600R are fluidly connected by way of a second-axle-side backward-movement-high-pressure connecting conduit 332R.

At least one of the pair of left and right second wheel motor devices 600L, 600R (the right-side second wheel motor device 600R in Fig. 10(b)) is further provided with a forward-movement-high-pressure-side second hydraulic fluid port 661(P2) fluidly connected to the second-motor-side hydraulic fluid passage 611 having a higher pressure at forward movement.

The forward-movement-high-pressure side second hydraulic fluid port 661(P2) is fluidly connected to the second-axle-side forward-movement-high-pressure conduit 331F.

At least one of the pair of left and right second wheel motor devices 600L, 600R (the left-side second wheel motor device 600L in Fig. 10(b)) is further provided with a backward-movement-high-pressure-side second hydraulic port 662(P2) fluidly connected to the other second-motor-side hydraulic fluid passage 662 having a higher pressure at backward movement. Thus, both the right-side and left-side second hydraulic motor main bodies 620R, 620L are hydraulically and differentially driven by the single hydraulic pump main body 420, as similar to the first wheel motor devices 500L, 500R.

The backward-movement-high-pressure-side second hydraulic port 662(P2) is fluidly connected to the second-axle-side backward-movement-high-pressure conduit 331R.

A reference numeral 755 in Fig. 10(b) denotes for a connecting conduit for fluidly connecting a motor space 600M in the left-side second wheel motor device 600L and a motor space 600M in the right-side second wheel motor device 600R.

A second axle-driving device 60C shown in Fig. 10(c) is configured so as to integrally accommodate the left-side and right-side second hydraulic motor main bodies 620L, 620R.

Specifically, the second axle-driving device 60C includes the left-side and right-side second hydraulic motor main bodies 620L, 620R that are fluidly connected to each other by way of a pair of second-motor-side hydraulic fluid lines 340 so as to form a closed circuit, and a motor case 650C for accommodating the pair of second hydraulic motor main bodies 620L, 620R.

One second-motor-side hydraulic fluid line 340 having a higher pressure at forward movement out of the pair of second-motor-side hydraulic fluid lines 340 is fluidly connected to the second-axle-side forward-movement-high-pressure conduit 331F.

The other second-motor-side hydraulic fluid line 340 having a higher pressure at backward movement out of the pair of second-motor-side hydraulic fluid lines 340 is fluidly connected to the second-axle-side backward-movement-high-pressure conduit 331R.

The second axle-driving device 60C is further provided with a pair of speed reduction gear units 660 arranged on both sides in the vehicle width direction of the motor case 650C.

The speed reduction gear unit 660 includes a king pin shaft 661 extending along the up and down direction; a first bevel type speed reduction gear 662 arranged in a relatively non-rotatable manner at an upper end side of the king pin shaft 661, the first bevel type speed reduction gear 662 being operatively connected to the corresponding second hydraulic motor main body 620; and a second bevel type speed reduction gear 663 arranged at a lower end side of the king pin shaft 661, the second bevel type speed reduction gear 663 being operatively connected to the corresponding second driving wheel 22. The speed reduction gear unit 660 supports the corresponding second driving wheel 22 so as to be capable of being steered about the king pin shaft 661.

The second hydraulic motor main body 620 will now be described with taking the second axle-driving device 60B shown in Fig. 10(b) as an example.

Fig. 11 shows a vertical sectional view of the left-side second wheel motor device 600L.

In the figure, the same reference numerals are denoted for the members same as in the first wheel motor device 500, and the description thereof will be omitted.

The hydraulic motor unit 100B in the second wheel motor device 600 includes the second hydraulic motor main body 620, a motor case 150B, and the motor shaft 110, as shown in Fig. 11.

As shown in Fig. 11, the second hydraulic motor main body 620 includes the motor-side cylinder block 121 supported by the motor shaft 110 in a relatively non-rotatable manner, and a plurality of motor-side pistons 122' supported by the motor-side cylinder 121 in a relatively non-rotatable manner about the axial line and in a reciprocating manner along the axial line.

As shown in Fig. 11, the motor-side piston 122' of the second hydraulic motor main body 620 is of a shoeless type having the free end engaged to a corresponding swash plate 130B without a shoe, thereby reducing the cost. In the present embodiment, the free end of the piston engages to the swash plate by way of a thrust bearing 125'.

Specifically, the first axle-driving device 50 is positioned on the upstream side in the HST hydraulic fluid flowing direction and the second axle-driving device 60 is positioned on the downstream side in the HST hydraulic fluid flowing direction with forward movement of the vehicle as the reference in the present embodiment, as described above.

Therefore, however the hydraulic motor main body 120 in the first axle-driving device 50 receives the hydraulic fluid having a high pressure, the second hydraulic motor main body 620 dose not receive the hydraulic fluid having such high pressure.

Focusing on such point, a shoe type hydraulic motor main body is used as the hydraulic motor main body 120 in the first axle-driving device 50 and a shoeless type hydraulic motor main body is used as the second hydraulic motor main body 620 in the present embodiment.

In the present embodiment, the second hydraulic motor main body 620 is configured so as to be capable of manually and arbitrarily changing the suction/discharge amount, thereby increasing or decreasing the driving speed of the second driving wheels 22L, 22R with respect to the driving speed of the first driving wheels 21L, 21R.

According to such configuration, it is possible to enhance the traveling stability and to prevent the tire from being abnormally worn by properly adjusting the driving speed of the second driving wheels with respect to the driving speed of the first driving wheels at the time of straight movement of the vehicle. Furthermore, it is possible to voluntarily change the driving speed of the second driving wheels 22L, 22R with respect to the first driving wheels 21L, 21R according to the operation amount of the steering member 5, thereby compensating the difference in the turning radius between the second driving wheel 22 and the first driving wheel 21 when the vehicle turns.

Specifically, in addition to the above configuration, the hydraulic motor unit 100B includes a movable swash plate 130B to which the free end of the motor-side pistons 122' are directly or indirectly engaged, the movable swash plate 130B changing the reciprocating range of the motor-side pistons 122' according to the slanting position; and a supporting shaft 131B rotated about the axial line based on an external operation.

The movable swash plate 130B is of a cradle type in the present embodiment, but may be of a trunnion type.

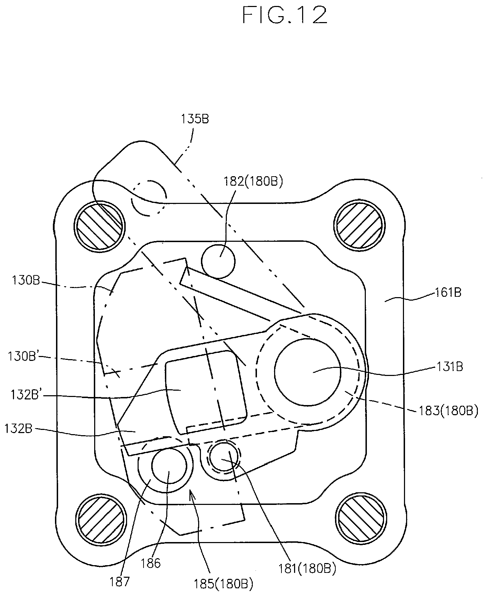

Fig. 12 shows a detailed view of the vicinity of the supporting shaft 131B and the movable swash plate 130B.

The motor case 150B includes a motor case main body 160B and the motor-side port block 170.

The motor case main body 160B is formed with an opening (not shown) at a side part. As shown in Fig. 12, a side cover 161B for closing the opening is detachably connected to the motor case main body 160B.

The supporting shaft 131B is supported by the side cover 161B so as to extend in a direction orthogonal to the motor shaft 110 and to be rotatable around the axis line.

The movable swash plate 130B is configured so as to swing about a swing center in response to a rotation about the axis line of the supporting shaft 131B. Specifically, the hydraulic motor unit 100B includes a swinging arm 132B for operatively connecting the supporting shaft 131B and the movable swash plate 130B, and a control arm 135B arranged at an operation end of the supporting shaft 131B, as shown in Fig. 12.

The swinging arm 132B has a proximal end supported by the supporting shaft 131B in a relatively non-rotatable manner and a distal end having an engagement part 132B' that is brought into a concave-convex engagement with a side part of the movable swash plate 130B.

In the present embodiment, the movable swash plate 130B is formed with an engagement groove 130B' at the side part, and the engagement part 132B is an engagement projection that is engaged into the engagement groove 130B'.

The control arm 135B has a proximal end supported by the supporting shaft 131B in a relatively non-rotatable manner and a distal end operatively connected to the steering member 5.

According to the configuration, when the control arm 135B is swung about the supporting shaft 131B in response to the manual operation of steering member 5, the supporting shaft 131B rotates about the axial line and the movable swash plate 130B is swung about the swing center by way of the swinging arm 132B.

The hydraulic motor unit 100B may be preferably provided with a reference-position returning mechanism 180B for holding the movable swash plate 130B at a reference slanting position when the operation force on the control arm 135B is released.

As shown in Fig. 12, the reference-position returning mechanism 180B includes a biasing member for biasing the movable swash plate 130B to a first side about the swing center, and a reference-position setting member defining a swinging end on the first side about the swing center of the movable swash plate 130B that is biased by the biasing member.

The biasing member is interposed, for example, between the supporting shaft 131B that is rotatable about the axial line and a coupling member (the swinging arm 132B in the illustrated embodiment) for operatively connecting the supporting shaft and the movable swash plate 130B so that the movable swash plate 130B slants about the swing center in response to the rotation of the supporting shaft about the axial line.

In the present embodiment, the biasing member includes a movable pin 181 arranged on the swinging arm 132B, a fixed pin 182 arranged on the side cover 161b, and a coil spring 183 winded around the supporting shaft 131B.

The coil spring 183 is arranged so that first and second ends are sandwiched by the fixed pin 182 and the movable pin 181.

That is, the coil spring 183 has the first end engaged with the fixed pin 182 and the second end engaged with the movable pin 181 so as to bias the swinging arm 132B to the first side (a counterclockwise direction in Fig. 12) about the axial line of the supporting shaft 131B.

In the present embodiment, the reference-position setting member engages the swinging arm 132B to define the swinging end on the first side about the swing center of the movable swash plate 130B that is biased by the biasing member, as shown in Fig. 12.

Specifically, a stopper pin 185 arranged on the side cover 161B so as to engage the swinging arm 132B is arranged as the reference-position setting member in the present embodiment.

The reference-position setting member is preferably configured so that the swinging end on the first side about the swing center of the movable swash plate is changed according to an external operation from outsides of the motor case 150B.

Specifically, the stopper pin 185 is an eccentric pin including a base part 187 supported by the motor case 160 so as to rotate about the axial line in response to the external operation, and an engagement part 186 that is rotated about the axial line of the base part 187 along with the base part 187 and engages the swinging arm 132B, the engagement part 186 being eccentric with respect to the base part 187.

According to such configuration, it is possible to adjust the position of the engagement part 186 by rotating the base part 187 about the axial line and fixing the same at an arbitrary rotation position. Therefore, the swinging end of the swinging arm 132B (i.e., the reference position of the movable swash plate 130B) can be easily adjusted.

By arranging the thus configured reference-position returning mechanism 180B, when the control arm 135B is swung to a second side about the axial line of the supporting shaft 131B against the biasing force of the coil spring 183, the movable swash plate 130B accordingly slants to a second side about the swing center. Therefore, the slanting position of the movable swash plate 130B can be easily changed according to the operation amount of the steering member 5.

Moreover, according to such configuration, the movable swash plate 130B is held at the reference slanting position when the operation force is not applied to the steering member 5. Therefore, the reference-position returning mechanism 180B also functions as a device for adjusting and fixing the suction/discharge amount of the second hydraulic motor main body 620 to a predetermined value irrespective of the operation amount of the steering member 5.

The control arm 135B is preferably removable with respect to the supporting shaft 131B. According to the configuration, the control arm 135B is removed in a case where the suction/discharge amount of the second hydraulic motor main body 620 is fixed.

### Second embodiment

Another embodiment of the present invention will now be described with reference to the accompanying drawings.

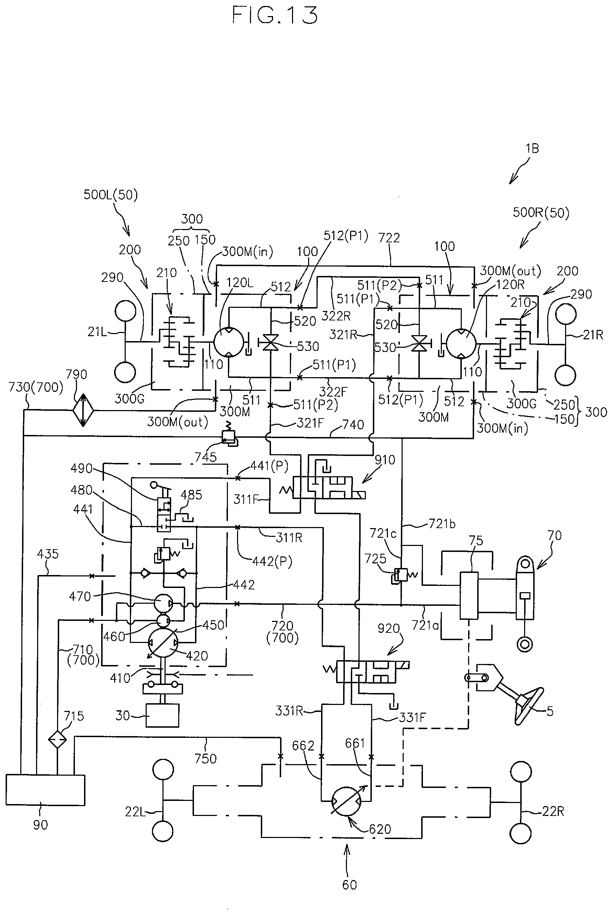

Fig. 13 shows a hydraulic circuit diagram of a working vehicle 1B to which a second embodiment of the present invention is applied.

The same reference characters are denoted for the same members as in the first embodiment, and thus the description thereof will be omitted.

The working vehicle 1A applied with the first embodiment is a full-time four-wheel-drive type vehicle in which the first axle-driving device 50 and the second axle-driving device 60 are constantly fluidly connected in series with respect to the hydraulic pump main body 420. On the other hand, the working vehicle 1B applied with the present embodiment is a two-wheel-drive/four-wheel-drive change-over type working vehicle in which the first and second axle-driving devices 50, 60 can be switched between a driving state or a non-driving state.

Specifically, in addition to the configuration of the working vehicle 1A, the working vehicle 1B includes a first-axle-side on/off valve 910 for selectively setting the first axle-driving device 50 in the driving state or the non-driving state, and a second-axle-side on/off valve 920 for selectively setting the second axle-driving device 60 in the driving state or the non-driving state.

The first-axle-side on/off valve 910 is configured to selectively take a first axle driving position and a first axle non-driving position. Specifically, the first-axle-side on/off valve 910 fluidly connects the pump-side forward-movement-high-pressure conduit 311F to the first-axle-side forward-movement-high-pressure conduit 321F and fluidly connects the first-axle-side backward-movement-high-pressure conduit 321R to the second-axle-side forward-movement-high-pressure conduit 331F at the first axle driving position so that the first axle-driving device 50 is in the driving state. On the other hand, the first-axle-side on/off valve 910 fluidly connects the pump-side forward-movement-high-pressure conduit 311F to the second-axle-side forward-movement-high-pressure conduit 331F and fluidly connects the first-axle-side forward-movement-high-pressure conduit 321F and the first-axle-side backward-movement-high-pressure conduit 321R to the drain lines at the first axle non-driving position so that the first axle-driving device 50 is in the non-driving state.

The second-axle-side on/off valve 920 is configured to selectively take a second axle driving position and a second axle non-driving position. Specifically, the second-axle-side on/off valve 920 fluidly connects the first-axle-side backward-movement-high-pressure conduit 321R to the second-axle-side forward-movement-high-pressure conduit 331F and fluidly connects the second-axle-side backward-movement-high-pressure conduit 331R to the pump-side backward-movement-high-pressure conduit 311R at the second axle driving position so that the second axle-driving device 60 is in the driving state. On the other hand, the second-axle-side on/off valve 920 fluidly connects the first-axle-side backward-movement-high-pressure conduit 321R to the pump-side backward-movement-high-pressure conduit 311R and fluidly connects the second-axle-side forward-movement-high-pressure conduit 331F and the second-axle-side backward-movement-high-pressure conduit 331R to the drain lines at the second axle non-driving position so that the second axle-driving device 60 is in the non-driving state.

In the present embodiment, both of the first-axle-side on/off valve 910 and the second axle driving on/off valve 920 are arranged, but one of the on/off valves may be omitted depending on the specification.

### Third embodiment

Still another embodiment of the present invention will now be described with reference to the accompanying drawings.

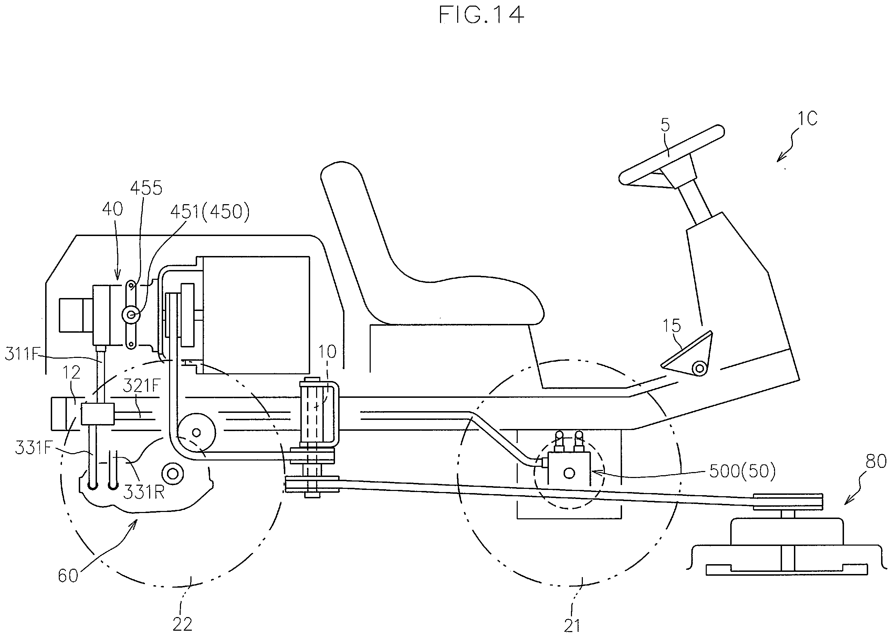

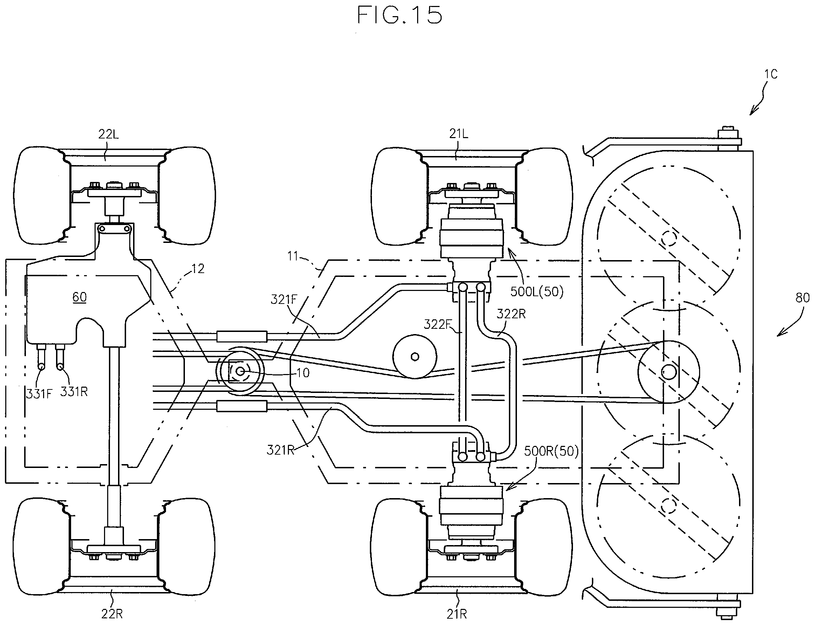

Figs. 14 to 16 respectively shows a side view, a plan view and a hydraulic circuit diagram of a working vehicle 1C to which a third embodiment of the present invention is applied.

The same reference characters are denoted for the same members as in the first or second embodiment, and thus the description thereof will be omitted.

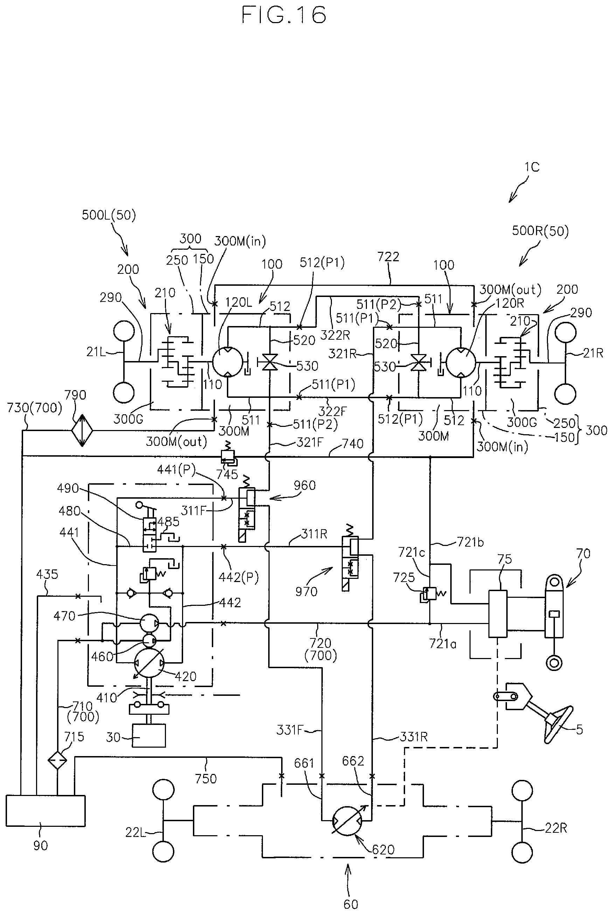

The working vehicles 1A, 1B respectively applied with the first and the second embodiments are configured so that the first axle-driving device 50 and the second axle-driving device 60 are fluidly connected in series with respect to the hydraulic pump main body 420. On the other hand, the working vehicle 1C applied with the present embodiment is configured so that the first axle-driving device 50 and the second axle-driving device 60 are fluidly connected in parallel with respect to the hydraulic pump main body 420, as shown in Fig. 16.

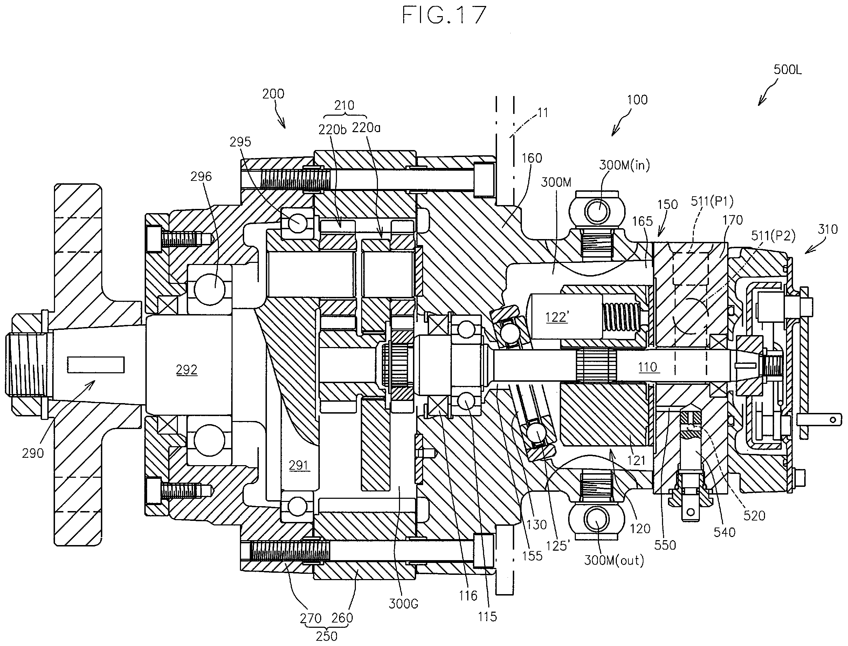

Fig. 17 shows a vertical cross sectional view of the first wheel motor device 500 in the working vehicle 1C applied with the present embodiment.

As described above, the first axle-driving device 50 and the second axle-driving device 60 are fluidly connected in parallel with respect to the hydraulic pump main body 420 in the present embodiment.

Therefore, the hydraulic fluid having a high pressure as in the first and second embodiments does not act on the hydraulic motor main body 120 of the first axle-driving device 50 in the present embodiment.

In view of such point, the shoeless type hydraulic motor main body is utilized as the hydraulic motor main body 120 of the first wheel motor device 500 in the present embodiment, thereby reducing the cost.

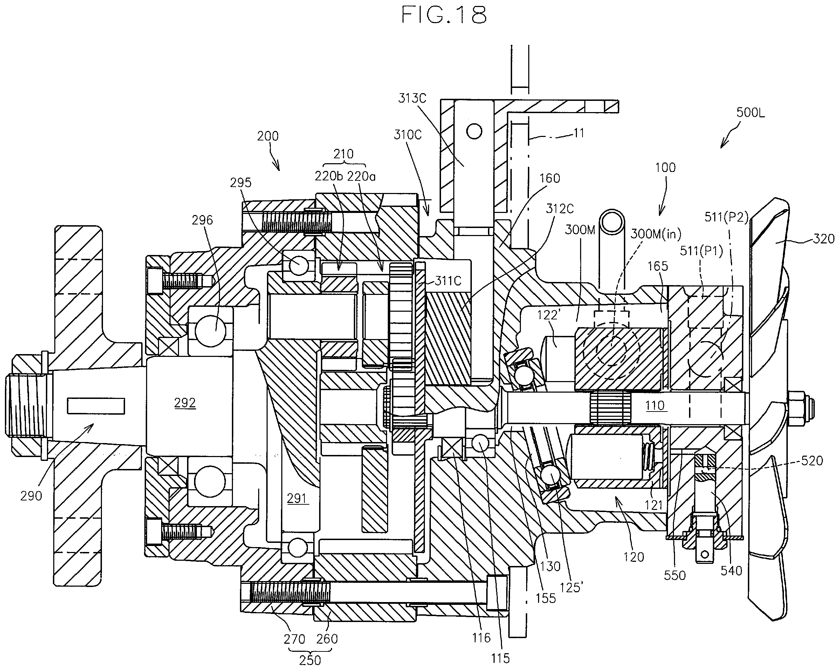

Fig. 18 shows a vertical cross sectional view of one example modified from the first wheel motor device 500.

The wheel motor devices 500 of the first and second embodiments as well as the first wheel motor device 500 shown in Fig. 17 are configured so that the brake unit 310 applies the braking force on the inner end in the vehicle width direction of the motor shaft 110.

The first wheel motor device 500 shown in Fig. 18, on the other hand, includes a brake unit 310C configured to apply the braking force on the motor shaft 110 between the hydraulic motor main body 120 and the speed reduction gear mechanism 210.

Specifically, the brake unit 310C includes a brake disc 311C supported by the motor shaft 110 in a relatively non-rotatable manner between the hydraulic motor main body 120 and the speed reduction gear mechanism 210, a brake pad 312C arranged so as to face the brake disc 311C in a state of being non-rotatable about the axial line of the motor shaft 110 and movable in the axial line, and a brake control shaft 313C rotatable about the axial line.

The brake control shaft 313C has a portion contacting the brake pad 312C and having a non-circular shape in cross section, and pushes the brake pad 312C towards the brake disc 311C by being operated about the axial line.

The first wheel motor device 500 shown in Fig. 18A is preferably provided with a cooling fan 320 at the projecting part towards the inner side in the vehicle width direction of the motor shaft 110.

It is of course possible to provide the brake unit 310C in place of the brake unit 310, and/or to provide the cooling fan 320 in the wheel motor devices 500 of the first and second embodiments.

As shown in Fig. 16, the working vehicle 1C includes a forward-movement front-rear wheel hydraulic differential lock mechanism 960 for forcibly supplying hydraulic fluid to the driving wheel on the high load side when one of either the first driving wheel 21 or the second driving wheel 22 falls into a depression or a mud area at the time of forward movement of the vehicle to have a low load, and a backward-movement front-rear wheel hydraulic differential lock mechanism 970 for forcibly supplying hydraulic fluid to the driving wheel on the high load side when one of either the first driving wheel 21 or the second driving wheel 22 falls into a depression or a mud area at the time of backward movement of the vehicle to having a low load.

Specifically, the forward-movement front-rear wheel hydraulic differential lock mechanism 960 includes a forward-movement switching valve interposed between the pump-side forward-movement-high-pressure conduit 311F, and the first-axle-side forward-movement-high-pressure conduit 321F and the second-axle-side forward-movement-high-pressure conduit 331F.

The forward-movement switching valve is configured to selectively take a hydraulically differential state of connecting the pump-side forward-movement-high-pressure conduit 311F as it is to both the first-axle-side forward-movement-high-pressure conduit 321F and the second-axle-side forward-movement-high-pressure conduit 331F, and a hydraulically differential lock state of connecting the pump-side forward-movement-high-pressure conduit 311F to the first-axle-side forward-movement-high-pressure conduit 321F and the second-axle-side forward-movement-high-pressure conduit 331F at a predetermined flow dividing ratio by way of throttles or restrictors.

The backward-movement front-rear wheel hydraulic differential lock mechanism 970 includes a backward-movement switching valve interposed between the pump-side backward-movement-high-pressure conduit 311R, and the first-axle-side backward-movement-high-pressure conduit 321R and the second-axle-side backward-movement-high-pressure conduit 331R.

The backward-movement switching valve is configured to selectively take a hydraulically differential state of connecting the pump-side backward-movement-high-pressure conduit 311R as it is to both the first-axle-side backward-movement-high-pressure conduit 321R and the second-axle-side backward-movement-high-pressure conduit 331R, and a hydraulically differential lock state of connecting the pump-side backward-movement-high-pressure conduit 311R to the first-axle-side backward-movement-high-pressure conduit 321R and the second-axle-side backward-movement-high-pressure conduit 331R at a predetermined flow dividing ratio by way of the throttles or restrictors.

Both the forward-movement front-rear wheel hydraulic differential lock mechanism 960 and the backward-movement front-rear wheel hydraulic differential lock mechanism 970 are arranged in the present embodiment, but one of the differential lock mechanisms may be omitted depending on the specification.

### Fourth embodiment

Still another embodiment of the present invention will now be described with reference to the accompanying drawings.

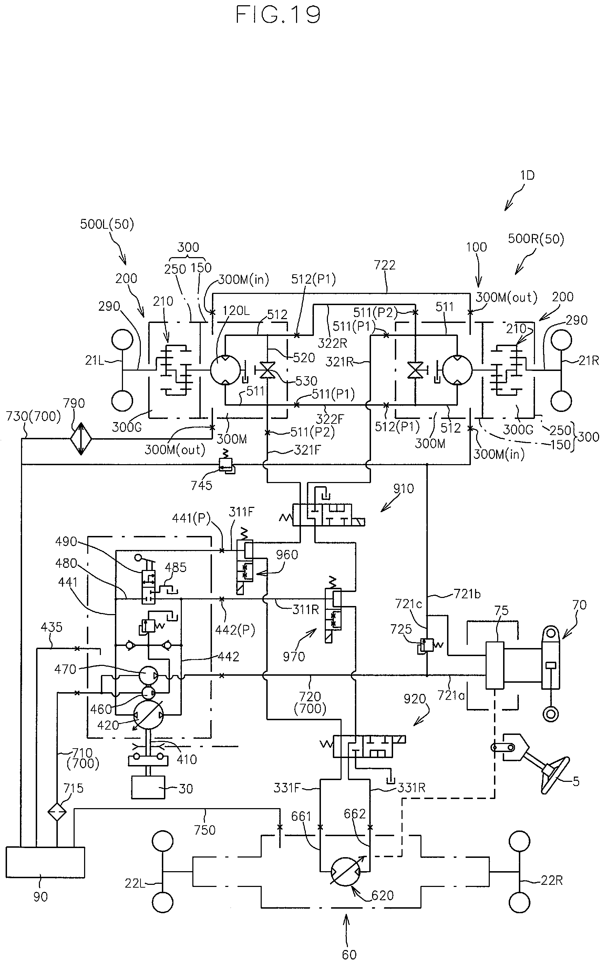

Fig. 19 shows a hydraulic circuit diagram of a working vehicle 1D to which a fourth embodiment of the present invention is applied.

The same reference characters are denoted for the same members as in the first to the third embodiments, and thus the description thereof will be omitted.

The working vehicle 1C applied with the third embodiment is a full-time four-wheel-drive type working vehicle in which the first axle-driving device 50 and the second axle-driving device 60 are constantly fluidly connected in parallel with respect to the hydraulic pump main body 420. On the other hand, the working vehicle 1D applied with the present embodiment is a two-wheel-drive/four-wheel-drive change-over type working vehicle in which the first and second axle-driving devices 50, 60 can be switched between the driving state or the non-driving state in a state that the first and second axle-driving devices 50, 60 are connected in parallel to the hydraulic pump main body 420.

Specifically, in addition to the configuration of the working vehicle 1C, the working vehicle 1D includes the first-axle-side on/off valve 910 for selectively setting the first axle-driving device 50 to the driving state or the non-driving state, and the second-axle-side on/off valve 920 for selectively setting the second axle-driving device 60 to the driving state or the non-driving state.

In the present embodiment, both of the first-axle-side on/off valve 910 and the second axle driving on/off valve 920 are arranged, but one of the on/off valves may be omitted depending on the specification.

### Embodiment 5

Still another embodiment of the present invention will now be described with reference to the accompanying drawings.

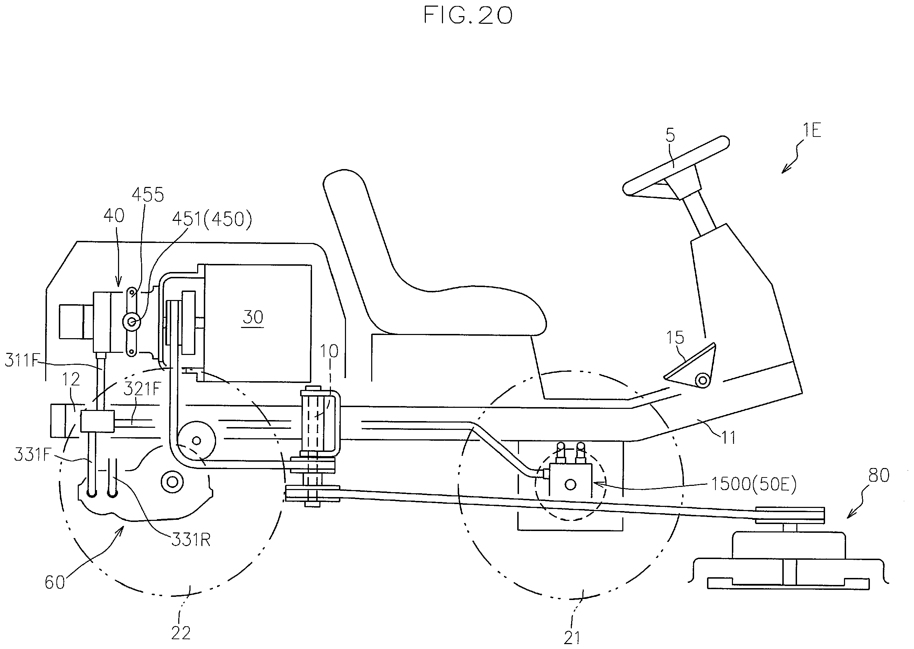

Figs. 20 to 22 respectively show a side view, a plan view and a hydraulic circuit diagram of a working vehicle 1E to which a fifth embodiment of the present invention is applied.

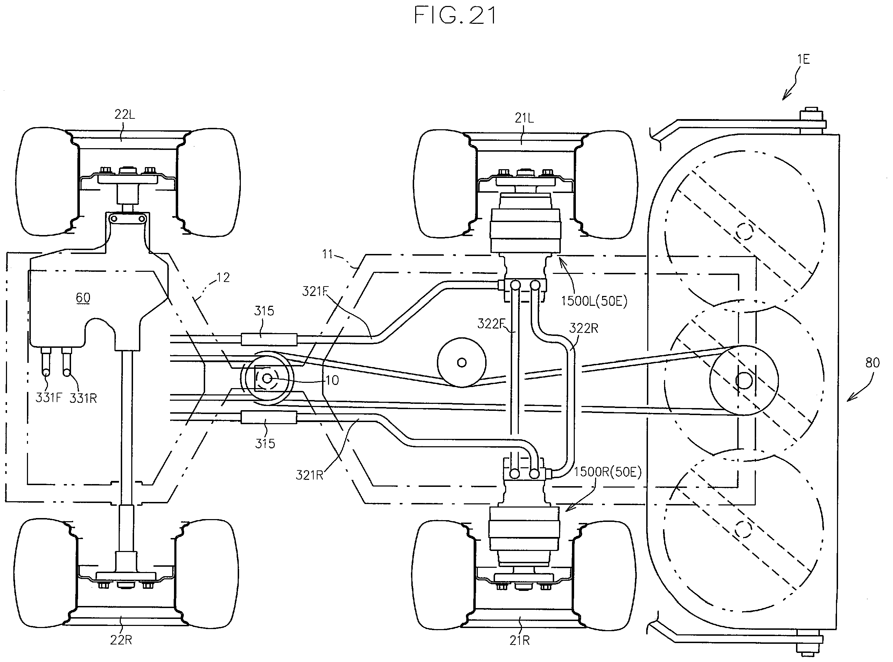

In the present embodiment, the working vehicle 1E is a riding lawn mower of an articulate type, as shown in Figs. 20 and 21.

Specifically, the working vehicle 1E includes the first frame 11 arranged on one side in a longitudinal direction of the vehicle (a front side in the present embodiment); the second frame 12 arranged on the other side in the longitudinal direction of the vehicle (a rear side in the present embodiment), the second frame 12 being connected to the first frame 11 in a swingable manner about a pivot shaft 10 extending in a substantially vertical direction; the pair of left and right first driving wheels 21L, 21R arranged on one side in the longitudinal direction of the vehicle; the pair of left and right second driving wheels 22L, 22R arranged on the other side in the longitudinal direction of the vehicle; the driving power source 30 supported by the second frame 12; the hydraulic pump unit 40 including at least one hydraulic pump main body 420 operatively driven by the driving power source 30; a first axle-driving device 50E including at least one hydraulic motor main body 120 for driving the pair of left and right first driving wheels 21L, 21R and connected to the first frame 11; and the second axle-driving device 60 including at least one hydraulic motor main body 620 for driving the pair of left and right second driving wheels 22L, 22R and connected to the second frame 12.

In the present embodiment, as shown in Figs. 20 to 22, the working vehicle 1E further includes the hydraulic steering mechanism 70 that swings the first frame 11 and the second frame 12 relatively to each other about the pivot shaft 10 in conjunction with the steering member 5 capable of being manually operated such as the steering wheel, and the mower device 80 supported by the first frame 11 so as to be positioned on an outer side in the longitudinal direction of the vehicle (a front side in the present embodiment) than the first driving wheels 21.

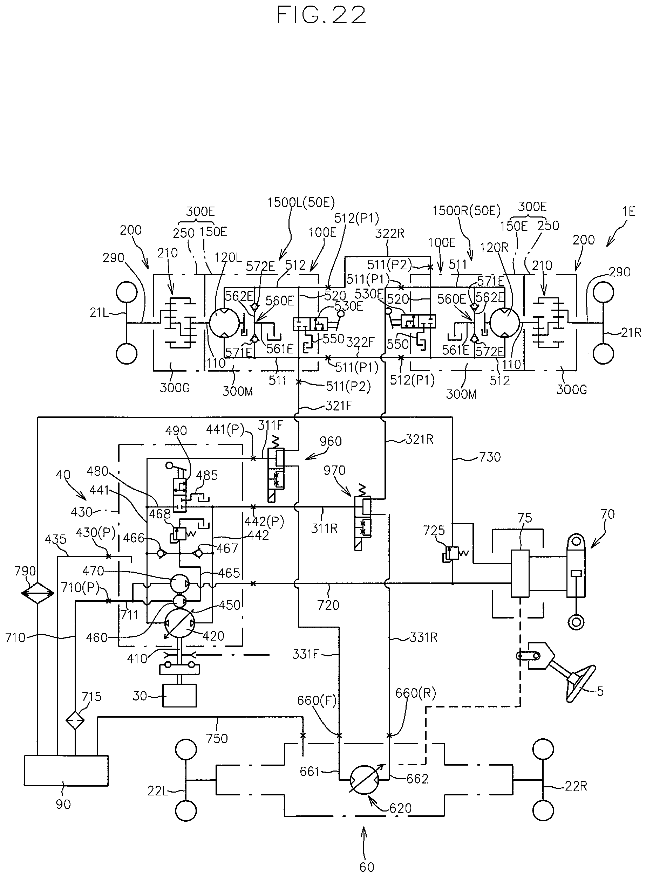

As shown in Fig. 22, the hydraulic pump unit 40 includes the pump shaft 410 operatively connected to the driving power source 30, the hydraulic pump main body 420 supported in a relatively non-rotatable manner by the pump shaft 410, and the pump case 430 for supporting the pump shaft 410 and forming the pump space that accommodates the hydraulic pump main body 420.

The hydraulic pump main body 420 is fluidly connected to the at least one hydraulic motor main body 120 in the first axle-driving device 50 and the at least one hydraulic motor main body 620 in the second axle-driving device 60 so as to form an HST in cooperation with the hydraulic motor main bodies 120 and 620.

Specifically, the pump case 430 is provided with the pump-side first hydraulic fluid passage 441 and the pump-side second hydraulic fluid passage 442, both of which are fluidly connected to the hydraulic pump main body 420.

Each of the pump-side first hydraulic fluid passage 441 and the pump-side second hydraulic fluid passage 442 has at least a first end opened to an outer surface. The opened first ends of the pump-side first and second hydraulic fluid passages 441, 442 respectively form a hydraulic fluid port 441(P) and a hydraulic fluid port 442(P).

In the present embodiment, the hydraulic pump main body 420 is of a variable displacement type in which the suction/discharge amount can be varied.

That is, the hydraulic pump unit 40 includes, in addition to the above configuration, the output adjusting member 450 (see Fig. 22) for changing the suction/discharge amount of the hydraulic pump main body 420 based on an external operation.

The output adjusting member 450 includes, for example, a movable swash plate (not shown) for defining a reciprocating movement range of pistons in the hydraulic pump main body 420, and a control shaft 451 (see Fig. 20) operatively connected to the movable swash plate so as to slant the movable swash plate.

As shown in Fig. 20, the control shaft 451 is operatively connected trough the control arm 455 and the connecting member (not shown) to the traveling speed-change operation member 15 capable of being manually operated.

In the present embodiment, the movable swash plate is capable of slanting in both forward and reverse directions with a neutral position in between.

In other words, the movable swash plate slants forward when the traveling speed-change operation member 15 is operated in the forward direction, and the movable swash plate slants backward when the traveling speed-change operation member 15 is operated in the backward direction. In the present embodiment, the speed-change operation member 15 is of a seesaw pedal type, but may be of a two-pedal type including forward and backward pedals.

As shown in Fig. 22, the pump case 430 is provided with the bypass fluid passage 480 for fluidly connecting between the pump-side first and second hydraulic fluid passages 441 and 442, the drain fluid passage 485 having a first end opened to an internal space of the pump case 430, and the rotary valve 490, which is capable of externally operated, interposed in the bypass fluid passage 480.

The rotary valve 490 is configured to take a shutoff position of shutting off the bypass fluid passage 480 and fluidly disconnecting the drain fluid passage 485 to the bypass fluid passage 480, and a communicating position of communicating the bypass fluid passage 480 and fluidly connecting the drain fluid passage 485 to the bypass fluid passage 480.

The pump case 430 is further formed with a drain port 430(P) for opening the inner space of the pump case 430 outwards, as shown in Fig. 22.

The drain port 430(P) is fluidly connected to the external reservoir tank 90 through a drain conduit 435.

In the working vehicle 1E, the hydraulic pump main body 420 is configured so as to hydraulically drive both of the hydraulic motor main body 120 in the first axle-driving device 50E and the hydraulic motor main body 620 in the second axle-driving device 60, as shown in Fig. 22.

A hydraulic circuit for fluidly connecting the hydraulic pump main body 420 to the first and second hydraulic motor main bodies 120, 620 will be described later.

Furthermore, in the present embodiment, the hydraulic pump unit 40 includes, in addition to the above configuration, the first auxiliary pump main body 460 and the second auxiliary pump main body 470, both of which are operatively driven by the pump shaft 410.

As shown in Fig. 22, the first auxiliary pump main body 460 functions as a charge pump for replenishing operation fluid to the HST.

Specifically, the first auxiliary pump main body 460 has a suction side fluidly connected to a fluid source and a discharge side fluidly connected to both of the pump-side first and second hydraulic fluid passages 441, 442 through a charge passage 465 formed in the pump case 430.

First and second check valves 466, 467, and a relief valve 468 are inserted in the charge passage 465. The first and second check valves 466, 467 are configured so as to respectively allow a fluid to flow from the first auxiliary pump main body 460 to the pump-side first and second hydraulic fluid passages 441, 442 while prevent the reverse flow. The relief valve 468 is configured so as to set a charge pressure.

As described above, the working vehicle 1E includes the external reservoir tank 90. In the present embodiment, the reservoir tank 90 is utilized as the fluid source for the first auxiliary pump main body 460. That is, the suction side of the first auxiliary pump main body 460 is fluidly connected to the reservoir tank 90 through an external suction conduit 710. Preferably, a filter 715 may be inserted in the external suction conduit 710.

The first auxiliary pump main body 460 may be, for example, a trochoidal pump.

As shown in Fig. 22, the second auxiliary pump main body 470 supplies operation fluid to the hydraulic steering mechanism 70.

Specifically, the second auxiliary pump main body 470 has a suction side fluidly connected to the fluid source and a discharge side fluidly connected to a supply/discharge circuit for the hydraulic steering mechanism 70 through an external discharge conduit 720.

In the present embodiment, the second auxiliary pump main body 470 suctions fluid through the external suction conduit 710, as shown in Fig. 22.

That is, the pump case 430 is formed with a suction passage 711 that has a first end opened to an outer surface to form a common suction port 710(P) and second ends fluidly connected to the suction sides of the first and second auxiliary pump main bodies 460, 470, respectively.

The second auxiliary pump main body 470 may be, for example, a gear pump.

A drain conduit 730E is fluidly connected to the supply/discharge circuit 75 so as to return the fluid that has been returned from the hydraulic steering mechanism 70 and/or the excessive fluid of the discharge conduit 720 to the external reservoir tank 90 serving as a fluid sump via an oil cooler 790.

A reference numeral 725 in Fig. 3 denotes a relief valve for setting a pressure of the operation fluid for the hydraulic steering mechanism 70.

The first axle-driving device 50E includes a pair of left and right first wheel motor devices 1500L, 1500R for respectively driving the left and right first driving wheels 21L, 21R

The pair of left and right first wheel motor devices 1500L, 1500R have the same configurations to each other, and are mounted to the corresponding first frame 11 in a state that one wheel motor device being reversed by 180 degrees with respect to the other wheel motor device.

Therefore, in the drawing, the same reference numerals or the same reference numerals with replacing the final character "L" with "R" as those of the left-side first wheel motor device 1500L are denoted for the right-side first wheel motor device 1500 R, and the detailed explanations thereof are omitted.

As shown in Fig. 22, the first wheel motor device 1500 includes the hydraulic motor main body 120 forming the HST in cooperation with the hydraulic pump main body 420, the reduction gear mechanism 210 for reducing a speed of a rotational power output by the hydraulic motor main body 120, the output member 290 for outputting the rotational power whose speed has been reduced by the reduction gear mechanism 210 towards the corresponding driving wheel 21, and a casing 300E for accommodating the hydraulic motor main body 120 and the reduction gear mechanism 210.

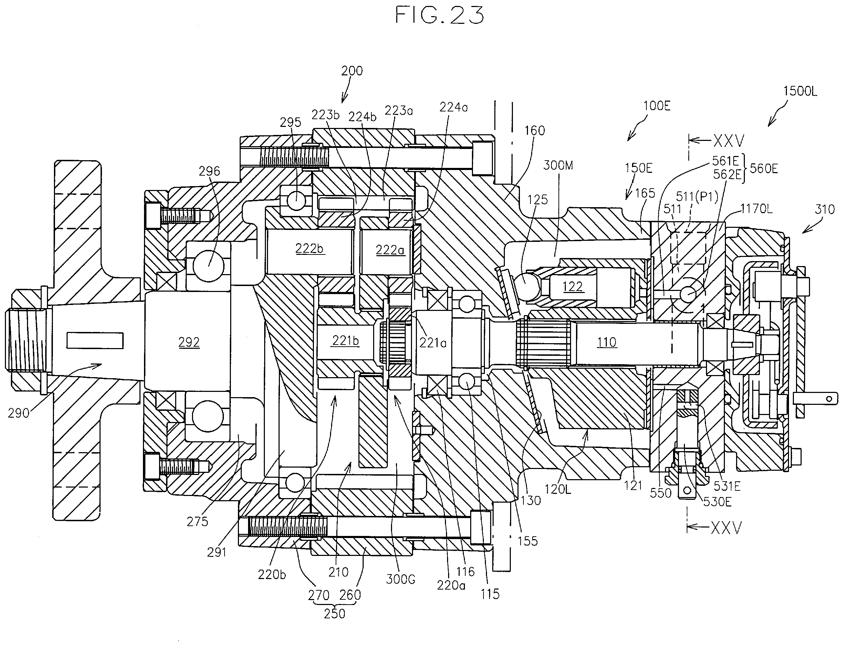

Fig. 23 show a vertical cross sectional view of the left-side first wheel motor device 1500L.

As shown in Fig. 23, the left-side first wheel motor device 1500L includes a hydraulic motor unit 100E having the hydraulic motor main body 120 fluidly connected to the hydraulic pump main body 420, the reduction gear unit 200 including the reduction gear mechanism 210 for reducing a speed of a rotational power output by the hydraulic motor main body 120, the output member 290 for outputting the rotational power whose speed has been reduced by the reduction gear mechanism 210 towards the corresponding driving wheel 21L, and the casing 300E for accommodating the hydraulic motor main body 120L and the reduction gear mechanism 210.

As shown in Figs. 22 and 23, the hydraulic motor unit 100E includes the hydraulic motor main body 120, a motor case 150E forming the motor space 300M for accommodating the hydraulic motor main body 120, and the motor shaft 110 supporting the hydraulic motor main body 120 in a relatively non-rotatable manner.

As shown in Fig. 23, the hydraulic motor main body 120 includes a motor-side cylinder block 121 supported by the motor shaft 110 in a relatively non-rotatable manner, and a plurality of motor-side pistons 122 supported by the motor-side cylinder block 121 so as to be relatively non-rotatable about the axis line and movable in a reciprocating manner along the axis line.

In the present embodiment, the hydraulic motor main body 120 is of a fixed displacement type in which the suction/discharge amount is constant.

Therefore, the hydraulic motor unit 100E includes a fixed swash plate 130 that directly or indirectly engages free ends of the motor-side pistons 122 to define a reciprocating range of the motor-side pistons 122, in addition to the above configuration.

In the present embodiment, the motor-side pistons 122 are shoe-type pistons that have free ends engaging the corresponding swash plate 130 with shoes as shown in Fig. 23.

The shoe-type piston has an advantage in the transmission efficiency of the HST, but, on the other hand, invokes a cost increase.

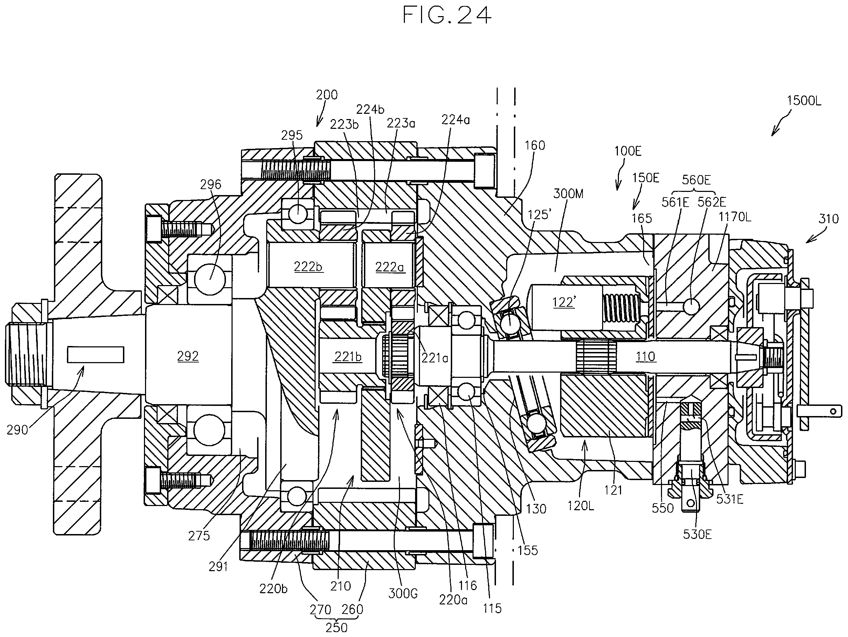

When it is needed to reduce the cost according to the specification or the requirement, shoe-less-type pistons 122' that have free ends engaged to the corresponding swash plate 130 without shoes (for example, via a thrust bearing 125' or the like) may be utilized in place of the shoe-type pistons 122, as shown in Fig. 24.

The motor case 150E forms the casing 300E along with a reduction gear case 250, which will be later described.

As shown in Fig. 22, the motor case 150E is formed with the motor-side first hydraulic fluid passage 511 fluidly connected to the hydraulic motor main body 120, the motor-side first hydraulic fluid passage 511 having at least the first end opening to the outer surface to form the motor-side hydraulic fluid port 511(P1); and the motor-side second hydraulic fluid passage 512 fluidly connected to the hydraulic motor main body 120, the motor-side second hydraulic fluid passage 512 having at least the first end opening to the outer surface to form the motor-side hydraulic fluid port 512(P1).

Specifically, the motor case 150E includes the motor case main body 160 formed with the opening 165 that has a size allowing the hydraulic motor main body 120 to be inserted therethrough, and a motor-side port block 1170 detachably connected to the motor case main body 160 so as to close the opening 165.

In the present embodiment, the motor-side first and second hydraulic fluid passages 511, 512 are formed in the motor-side port block 1170.

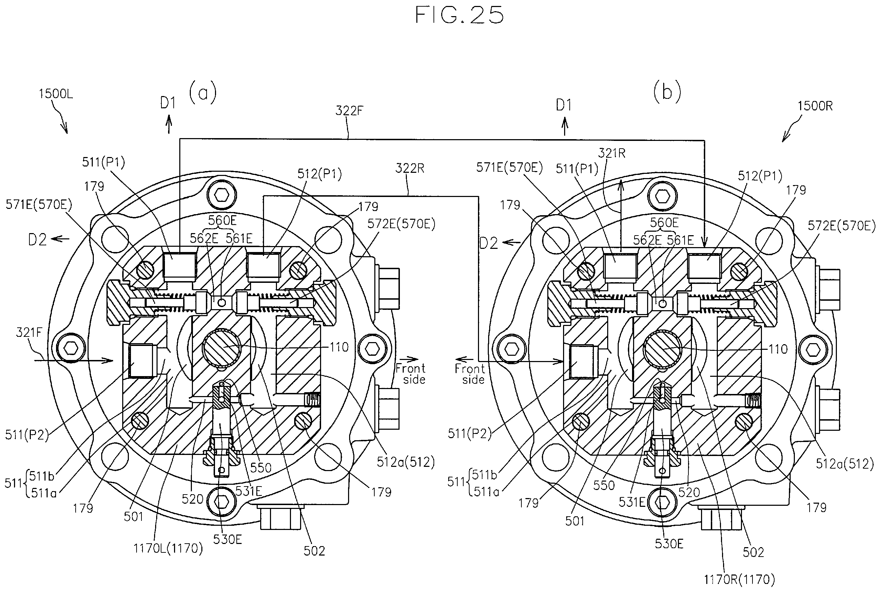

Fig. 25 shows vertical cross sectional views of the motor-side port blocks 1170.

Fig. 25(a) shows a vertical cross sectional view of the motor-side port block 1170 in the left-side first wheel motor device 1500L (hereinafter referred to as a left motor-side port block 1170L in some cases) taken along line XXV-XXV of Fig. 23, and Fig. 25(b) shows a vertical cross sectional view of the motor-side port block 1170 in the right-side first wheel motor device 1500R (hereinafter referred to as a right motor-side port block 1170R in some cases).

As described above, the right-side first wheel motor device 1500R is reversed by 180 degrees with respect to the left-side first wheel motor device 1500L, where the right motor-side port block 1170R and the left motor-side port block 1170L are same to each other.

As shown in Fig. 25, the motor-side port block 1170 is formed with a first fluid porting 501 such as a kidney port opened to a motor contacting surface to which the corresponding hydraulic motor main body 120 slidably contacts, a second fluid porting 502 such as a kidney port opened to the motor contacting surface on the side opposite to the first fluid porting 501 with the corresponding motor shaft 110 in between, the motor-side first hydraulic fluid passage 511 fluidly connected to the first fluid porting 501, and the motor-side second hydraulic fluid passage 512 fluidly connected to the second fluid porting 502.

At least one of the motor-side first and second hydraulic fluid passages 511, 512 is preferably opened at plural portions to the outer surface of the motor-side port block 1170.

According to the configuration where at least one of the motor-side first and second hydraulic fluid passages 511, 512 includes a plurality of hydraulic fluid ports, it is possible to enhance the degree of freedom of design in arranging the hydraulic fluid conduits for fluidly connecting between the motor-side hydraulic fluid ports and the pump-side hydraulic fluid ports 441(P), 442(P).

Specifically, the positions of the pump-side hydraulic fluid ports 441(P), 442(P) are determined by a mounting posture of the pump case 430. Similarly, the positions of the motor-side hydraulic fluid ports are determined by a mounting posture of the motor case 150E. Therefore, in a case where each of the motor-side first and second hydraulic fluid passages 511, 512 has only a single hydraulic fluid port, it is needed to fluidly connect the pump-side hydraulic fluid ports whose positions are unambiguously defined according to the mounting posture of the pump case 430 to the motor-side hydraulic fluid ports whose positions are unambiguously defined according to the mounting position of the motor case 150E by the hydraulic fluid conduits.

On the other hand, according to the configuration where at least one of the motor-side first and second hydraulic fluid passages 511, 512 includes plural hydraulic fluid ports, as described above, it is possible to enhance the degree of freedom of design in arranging the hydraulic fluid conduits without losing the pressure balance.

More preferably, the plurality of motor-side hydraulic fluid ports are configured so as to face different directions to each other.

Furthermore, in a case where both the hydraulic motor main body 120 in the left-side first wheel motor device 1500L (hereinafter referred to as a left-side first hydraulic motor main body 120L is some case) and the hydraulic motor main body 120 in the right-side first wheel motor device 1500R (hereinafter referred to as a right-side first hydraulic motor main body 120R in some cases) are hydraulically and differentially driven by the single hydraulic pump main body 420 as in the working vehicle 1E (see Fig. 3), it is possible to fluidly connect the single hydraulic pump main body 420 to the pair of hydraulic motor main bodies 120L, 120R in a state of keeping the pressure balance without arranging a flow dividing structure such as a T-shaped joint in the hydraulic fluid conduits by configuring at least one of the motor-side first and second hydraulic fluid passages 511, 512 so as to include a plurality of hydraulic fluid ports, whereby enhancing the workability in piping.

As shown in Fig. 25, in the present embodiment, the motor-side first hydraulic fluid passage 511 includes plural hydraulic fluid ports, and the motor-side second hydraulic fluid passage 512 includes one hydraulic fluid port.

Specifically, the motor-side first hydraulic fluid passage 511 includes a first hydraulic fluid port 511(P1) facing a first direction D1 that is one of directions orthogonal to the motor shaft 110, and a second hydraulic fluid port 511 (P2) facing a second direction D2 orthogonal to both of the motor shaft 100 and the first direction D1.

On the other hand, the motor-side second hydraulic fluid passage 512 includes only a first hydraulic fluid port 512 (P1) facing the first direction D1.

More specifically, the motor-side first hydraulic fluid passage 511 includes a main fluid passage 511a along the first direction D1, and a branched fluid passage 511b branched in an orthogonal direction from the main fluid passage 511, as shown in Fig. 25. The main fluid passage 511a is fluidly connected to the first fluid porting 501 and has a first end opened to the outer surface to form the first hydraulic fluid port 511(P1). The branched fluid passage 511b extends along the second direction D2 and has a first end opened to the outer surface to form the second hydraulic fluid port 511 (P2).

The motor-side second hydraulic fluid passage 512 includes a main fluid passage 512a substantially parallel to the main fluid passage 511a of the motor-side first hydraulic fluid passage 511 with the motor shaft 110 in between. The main fluid passage 512a is fluidly connected to the second fluid porting 502 and has a first end opened to the outer surface to form the first hydraulic fluid port 512(P1).

The hydraulic circuit for fluidly connecting the hydraulic pump main body 420 to the left-side and right-side first hydraulic motor main bodies 120L, 120R will now be described with taking a case where the pump-side first hydraulic fluid passage 441 has a higher pressure at forward movement and the second hydraulic fluid passage 442 has a lower pressure at forward movement as an example.

As shown in Fig. 22, in the present embodiment, the hydraulic motor main bodies 120 in the first axle-driving device 50E and the hydraulic motor main body 620 in the second axle-driving device 60 are fluidly connected in parallel to the hydraulic pump main body 420, and the left-side hydraulic motor main body 120L and the right-side hydraulic motor main body 120R are fluidly connected in parallel to the hydraulic pump main body 420.

Specifically, as shown in Figs. 20 to 22 and 25, the working vehicle 1E includes a pump-side forward-movement-high-pressure conduit 311F having a first end fluidly connected to the hydraulic fluid port 441(P) of the pump-side first hydraulic fluid passage 441, a pump-side backward-movement-high-pressure conduit 311R having a first end fluidly connected to the hydraulic fluid port 442(P) of the pump-side second hydraulic fluid passage 442, a first-axle-side forward-movement-high-pressure conduit 321F having a first end fluidly connected to the second hydraulic fluid port 511(P2) of the motor-side first hydraulic fluid passage 511 in the left-side motor-side port block 1170L, a first-axle-side forward-movement-high-pressure connecting conduit 322F having a first end fluidly connected to the second hydraulic fluid port 511(P2) of the motor-side first hydraulic fluid passage 511 in the left-side motor-side port block 1170L and a second end fluidly connected to the first hydraulic fluid port 512(P1) of the motor-side second hydraulic fluid passage 512 in the right-side motor-side port block 1170R, a first-axle-side backward-movement-high-pressure connecting conduit 322R having a first end fluidly connected to the first hydraulic fluid port 512(P1) of the motor-side second hydraulic fluid passage 512 in the left-side motor-side port block 1170L and a second end fluidly connected to the second hydraulic fluid port 511(P2) of the motor-side first hydraulic fluid passage 511 in the right-side motor-side port block 1170R, a first-axle-side backward-movement-high-pressure conduit 321R having a first end fluidly connected to the first hydraulic fluid port 511(P1) of the motor-side first hydraulic fluid passage 511 in the right-side motor-side port block 1170R, a second-axle-side forward-movement-high-pressure conduit 331F having a first end fluidly connected to a forward-movement-high-pressure port 660(F) of the second axle-driving device 60, and a second-axle-side back-movement-high-pressure conduit 331R having a first end fluidly connected to a backward-movement-high-pressure port 660(R) of the second axle-driving device 60.

The pump-side forward-movement-high-pressure conduit 311F has second ends fluidly connected to both of second ends of the first-axle-side forward-movement-high-pressure conduit 321F and the second-axle-side forward-movement-high-pressure conduit 331F.

The pump-side backward-movement-high-pressure conduit 311R has second ends fluidly connected to both of second ends of the first-axle-side backward-movement-high-pressure conduit 321R and the second-axle-side back-movement-high-pressure conduit 331R.

The first-axle-side forward-movement-high-pressure conduit 321F and the first-axle-side backward-movement-high-pressure conduit 321R are configured so that flexible conduits 315 are interposed therein (see Fig. 21).

Specifically, in the present embodiment, the motor-side first hydraulic fluid passage 511 becomes the forward-movement-high-pressure-side hydraulic fluid passage in the left-side motor-side port block 1170L, and, on the other hand, the motor-side second hydraulic fluid passage 512 becomes the forward-movement-high-pressure-side hydraulic fluid passage in the right-side motor-side port block 1170R.

As shown in Fig. 22, the working vehicle 1E includes a forward-movement front-rear wheel hydraulic differential lock mechanism 960 for forcibly supplying hydraulic fluid to the driving wheel on the high load side when one of either the first driving wheel 21 or the second driving wheel 22 falls into a depression or a mud area to have a low load at the time of forward movement of the vehicle, and a backward-movement front-rear wheel hydraulic differential lock mechanism 970 for forcibly supplying hydraulic fluid to the driving wheel on the high load side when one of either the first driving wheel 21 or the second driving wheel 22 falls into a depression or a mud area to have a low load at the time of backward movement of the vehicle.

Specifically, the forward-movement front-rear wheel hydraulic differential lock mechanism 960 includes a forward-movement switching valve interposed between the pump-side forward-movement-high-pressure conduit 311F, and the first-axle-side forward-movement-high-pressure conduit 321F and the second-axle-side forward-movement-high-pressure conduit 331F.

The forward-movement switching valve is configured to selectively take a hydraulically differential state of connecting the pump-side forward-movement-high-pressure conduit 311F as it is to both the first-axle-side forward-movement-high-pressure conduit 321F and the second-axle-side forward-movement-high-pressure conduit 331F, and a hydraulically differential lock state of connecting the pump-side forward-movement-high-pressure conduit 311F to the first-axle-side forward-movement-high-pressure conduit 321F and the second-axle-side forward-movement-high-pressure conduit 331F at a predetermined flow dividing ratio by way of throttles or restrictors.

The backward-movement front-rear wheel hydraulic differential lock mechanism 970 includes a backward-movement switching valve interposed between the pump-side backward-movement-high-pressure conduit 311R, and the first-axle-side backward-movement-high-pressure conduit 321R and the second-axle-side backward-movement-high-pressure conduit 331R.

The backward-movement switching valve is configured to selectively take a hydraulically differential state of connecting the pump-side backward-movement-high-pressure conduit 311R as it is to both the first-axle-side backward-movement-high-pressure conduit 321R and the second-axle-side backward-movement-high-pressure conduit 331R, and a hydraulically differential lock state of connecting the pump-side backward-movement-high-pressure conduit 311R to the first-axle-side backward-movement-high-pressure conduit 321R and the second-axle-side backward-movement-high-pressure conduit 331R at a predetermined flow dividing ratio by way of the throttles or restrictors.

Both the forward-movement front-rear wheel hydraulic differential lock mechanism 960 and the backward-movement front-rear wheel hydraulic differential lock mechanism 970 are arranged in the present embodiment, but one of the differential lock mechanisms may be omitted depending on the specification.

In the present embodiment, as shown in Fig. 22, the motor case 150E is arranged with a self-suction fluid passage 560E having a first end opened into the motor space 300M and a second end fluidly connected to at least one of the motor-side first hydraulic fluid passage 511 or the motor-side second hydraulic fluid passage 512, and an self-suction check valve 570E interposed in the self-suction fluid passage 560E so as to allow the flow of fluid from the motor space 300M to the one hydraulic fluid passage while preventing the reverse flow.

In the present embodiment, the self-suction fluid passage 560E has the second ends fluidly and respectively connected to the motor-side first hydraulic fluid passage 511 and the motor-side second hydraulic fluid passage 512, as shown in Figs. 22 and 25. The self-suction check valve 570E includes a self-suction first check valve 571E interposed between the self-suction fluid passage 560E and the motor-side first hydraulic fluid passage 511 and a self-suction second check valve 572E interposed between the self-suction fluid passage 560E and the motor-side second hydraulic fluid passage 512.

With the self-suction configuration, it is possible to prevent the fluid, which has been leaked from the hydraulic motor main body 120 and stored in the casing 300E, from flowing out from the casing 300E without arranging an external drain conduit, which was necessary in the conventional configuration.

Specifically, the HST hydraulic fluid leaks out from the hydraulic motor main body 120 itself as well as the contacting portion between the hydraulic motor main body 120 and the motor-side port block 1170. The leakage fluid is stored in the casing 300E capable of storing fluid, but unless a configuration of discharging the stored fluid from the internal space of the casing 300E, the internal space of the casing 300E will be filled with leakage fluid and the fluid will finally flow out from the casing 300E.

The conventional wheel motor device includes a drain port formed at the casing for discharging the leakage fluid stored in the casing, and prevents the stored fluid from flowing out from the casing by discharging the stored fluid via an external drain conduit having a first end fluidly connected to the drain port and a second end fluidly connected to the fluid reservoir such as an external tank.

However, the external drain conduit is necessary in such conventional configuration, which increases the number of external conduits in terms of the entire working vehicle, resulting in deteriorating the degree of freedom of design and the assembly work efficiency.

In the present embodiment, on the other hand, the motor case 150E is provided with the self-suction fluid passage 560E and the self-suction check valve 570E, as described above.

According to such configuration, when the stored amount of leakage fluid in the motor space 300M increases and the hydraulic pressure in the motor space 300M exceeds a pressure defined by the hydraulic pressure of the low pressure side hydraulic fluid passage out of the motor-side first and second hydraulic fluid passages 511, 512 and a biasing force of the self-suction check valve 570E, the stored fluid in the motor space 300M automatically flows into the low pressure side hydraulic fluid passage via the self-suction fluid passage 560E.

Therefore, it is possible to prevent the stored fluid in the casing 300 from flowing out from the casing 300E without arranging the external drain conduit, which was necessary in the conventional configuration, thereby enhancing the degree of freedom of design in arranging the conduit structure and the assembly work efficiency.

Furthermore, the free wheel phenomenon can be effectively prevented by arranging the self-suction fluid passage 560E and the self-suction check valve 570E.

That is, when the working vehicle is parked on a hill and the like in a state that the engine is stopped in the HST neutral state, a rotational force acts on the motor shaft operatively connected to the driving wheels, and the hydraulic motor main body supported by the motor shaft attempts to perform the pumping operation.

In this case, when the pair of hydraulic fluid lines fluidly connecting the hydraulic pump main body and the hydraulic motor main body are filled with hydraulic fluid, a brake force by the hydraulic fluid acts on the hydraulic motor main body. However, on the other hand, one of the pair of hydraulic fluid lines has a higher pressure due to the pumping operation of the hydraulic motor main body, whereby the hydraulic fluid might leak out from the hydraulic fluid line on the high pressure side.

When such hydraulic fluid leakage occurs, the hydraulic fluid starts to circulate from the negative pressure side hydraulic fluid line to the high pressure side hydraulic fluid line, thereby promoting the hydraulic fluid leakage from the high pressure side hydraulic fluid line. Finally, most of the hydraulic fluid are leaked out from the pair of hydraulic fluid lines, which causes the driving wheels to freely rotate and thus causes the vehicle to start to unintentionally move downward on the hill (free wheel phenomenon).

On the other hand, it is possible to automatically replenish fluid to the hydraulic fluid line on a negative pressure side out of the pair of hydraulic fluid lines by arranging the self-suction fluid passage 560E and the self-suction check valve 570E. Therefore, the free wheel phenomenon could be effectively prevented.

It has been conventionally proposed to arrange the self-suction fluid passage and the self-suction check valve in the pump unit, which is positioned away from the wheel motor device, in order to prevent the free wheel phenomenon.

In the conventional pump unit, a pump-side port block configuring one part of the pump case is provided with a pair of pump-side hydraulic fluid passages, a pump-side self-suction fluid passage having a first end opened into a pump space for accommodating the hydraulic pump main body and a second end fluidly and respectively connected to the pair of pump-side hydraulic fluid passages, and a pair of self-suction check valves interposed in the pump-side self-suction fluid passages to allow the flow of fluid from the pump space to the pair of pump-side hydraulic fluid passages while preventing the reverse flow.

In a case where the pump unit provided with such self-suction function cooperatively operates with the wheel motor device, the fluid in the pump space flows into the low pressure hydraulic fluid passage out of the pump-side first and second hydraulic fluid passages through the corresponding pump-side self-suction fluid passage, and thus the free wheel phenomenon could be prevented in theory.

However, the free wheel phenomenon occurs by the rotation of the hydraulic motor main body that attempts to perform the pump action by an external force from the driving wheel. Therefore, it is important that the vicinity of the hydraulic motor main body of the pair of hydraulic fluid lines are filled with the hydraulic fluid in order to effectively prevent the rotation of the hydraulic motor main body.

In view of this regards, the self-suction configuration is arranged in the hydraulic motor unit 100E configuring the wheel motor device 1500 in the present embodiment. Therefore, the free wheel phenomenon can be more effectively prevented in comparison with a configuration where the self-suction configuration is arranged in the hydraulic pump unit.

In the present embodiment, the self-suction fluid passage 560E and the check valve 570E are arranged in the motor-side port block 1170, as shown in Figs. 23 and 25.

Specifically, the self-suction fluid passage 560E includes a branched self-suction fluid passage 562E extending in a direction orthogonal to the motor shaft 110 so as to fluidly connect between the motor-side first and second hydraulic fluid passages 511, 512, and a common self-suction fluid passage 561E having a first end opened into the motor space 300M and a second end fluidly connected to the branched self-suction fluid passage 562E.

As shown in Fig. 25, a perforated hole forming the branched self-suction fluid passage 562E has first and second ends, both of which are opened to the outer surface of the motor-side port block 1170.

The self-suction first check valve 571E is inserted into the perforated hole through the opened first end so as to be positioned between the motor-side first hydraulic fluid passage 511 and the branched self-suction fluid passage 562E, and the self-suction second check valve 572E is inserted into the perforated hole through the opened second end so as to be positioned between the motor-side second hydraulic fluid passage 512 and the branched self-suction fluid passage 562E.

The motor case 150E is preferably arranged with a bypass fluid passage 520 for fluidly connecting between the motor-side first and second hydraulic fluid passage 511, 512, and a bypass valve 530E capable of being externally operated for selectively communicating or shutting off the bypass fluid passage 520.

In the present embodiment, the bypass fluid passage 520 and the bypass valve 530E are arranged in the motor-side port block 1170, as shown in Figs. 23 and 25.

By arranging the bypass fluid passage 520 and the bypass valve 530E in the motor case 150E as describe above, it is possible to prevent the hydraulic fluid discharged from the hydraulic motor main body 120 from acting on the hydraulic pump main body 420 so as to hydraulically drive the same when forcibly towing the vehicle at the time of malfunction or the like of the HST and the driving power source 30.

Furthermore, according to such configuration, it is possible to reduce the tractive force necessary to forcibly tow the vehicle as much as possible.

Specifically, in a conventional vehicle equipped with the hydraulic pump unit and the wheel motor device that are spaced apart from each other, the bypass fluid passage and the bypass valve are arranged in the hydraulic pump unit including the hydraulic pump main body which forms the HST in cooperation with the hydraulic motor main body in the wheel motor device.

The conventional configuration could also prevent the hydraulic difference from occurring between the pair of hydraulic fluid lines that fluidly connect the hydraulic pump main body and the hydraulic motor main body when forcibly towing the vehicle.

However, in the conventional configuration, the hydraulic fluid which has been suctioned by and discharged from the hydraulic motor main body when forcibly towing the vehicle, circulates through the motor-side first hydraulic fluid passage, the first hydraulic fluid conduit, the pump-side first hydraulic fluid passage, the pump-side bypass fluid passage, the pump-side second hydraulic fluid passage, the second hydraulic fluid conduit, and the motor-side second hydraulic fluid passage.

That is, in the conventional configuration, the hydraulic fluid, which has been suctioned/discharged by the hydraulic motor main body when forcibly towing the vehicle, circulates across substantially the entire pair of hydraulic fluid lines that fluidly connect the hydraulic motor main body and the hydraulic pump main body, and the force for circulating such hydraulic fluid becomes a power loss to the vehicle tractive force.

In the present embodiment, on the other hand, the bypass fluid passage 520 and the bypass valve 530E are arranged in the motor case 150E, as described above.

Therefore, the hydraulic fluid, which has been suctioned/discharged by the hydraulic motor main body 120 when forcibly towing the vehicle, circulates only through the motor-side first hydraulic fluid passage 511, the bypass fluid passage 520 and the motor-side second hydraulic fluid passage 512, thereby reducing the tractive power loss caused by the circulation of the hydraulic fluid as much as possible.

Preferably, the branched self-suction fluid passage 562E is formed so as to extend along a direction substantially orthogonal to the main fluid passage 511a of the motor-side first hydraulic fluid passage 511 and the main fluid passage 512a of the motor-side hydraulic fluid passage 512 on a side same as the first hydraulic fluid port 511(P1) of the motor-side first hydraulic fluid passage 511 and the first hydraulic fluid port 512(P1) of the motor-side second hydraulic fluid passage 512 with the motor shaft 110 as the reference, and the bypass fluid passage 520 is formed so as to extend along the direction substantially orthogonal to the main fluid passage 511a of the motor-side first hydraulic fluid passage 511 and the main fluid passage 512a of the motor-side hydraulic fluid passage 512 on a side opposite to the first hydraulic fluid port 511(P1) of the motor-side first hydraulic fluid passage 511 and the first hydraulic fluid port 512(P1) of the motor-side second hydraulic fluid passage 512 with the motor shaft 110 as the reference.

According to such configuration, it is possible to effectively arrange the above various fluid passages while preventing enlargement of the motor-side port block 1170 as much as possible.

The present embodiment is configured so that the motor-side first and second hydraulic fluid passages 511, 512 are fluidly connected to the motor space 300M when the motor-side first and second hydraulic fluid passages 511, 512 are fluidly connected to each other by the bypass valve 530E, as shown in Figs. 22 and 25.

Specifically, as shown in Figs. 23 and 25, the motor-side port block 1170 is formed with a drain fluid passage 550 having a first end opened into the motor space 300M.

The bypass valve 530E is a rotary valve that can take a shutoff position of shutting off the bypass fluid passage 520 and a communicating position of fluidly connecting the bypass fluid passage 520 about the axial line.

Moreover, as shown in Figs. 23 and 25, the bypass valve 530E is formed with a fluid passage 531E configured to fluidly disconnect between the motor-side first and second hydraulic fluid passages 511, 512 and fluidly disconnect the drain fluid passage 550 to the bypass fluid passage 520 when the bypass valve 530E is positioned at the shutoff position, and to fluidly connect between the motor-side first and second hydraulic fluid passages 511, 512 and fluidly connect the drain fluid passage 550 to the bypass fluid passage 520 when the bypass valve 530E is positioned at the communicating position.

According to the configuration, it is possible to take out an air from the pair of hydraulic fluid lines fluidly connecting the hydraulic motor main body 120 and the hydraulic pump main body 420 as fast as possible even if the air enters the pair of hydraulic fluid lines, while preventing the hydraulic pressure discharged from the hydraulic motor main body 120 from being supplied to the hydraulic pump main body 420 even if the hydraulic motor main body 120 rotates when forcibly towing the vehicle.

The reduction gear unit 200 will now be described.

As shown in Figs. 22 and 23, the reduction gear unit 200 includes the reduction gear mechanism 210, and the gear case 250 detachably connected to the motor case 150E so as to form the gear space 300G for accommodating the reduction gear mechanism 210.

In the present embodiment, the reduction gear mechanism 210 includes the first and second planetary gear mechanisms 220a, 220b arranged in series with each other.

Specifically, the motor case 150E is formed with the pass-through hole 155 (see Fig. 23) for allowing the first end (the end on an outer side in the width direction of the vehicle in the present embodiment) of the motor shaft 110 to insert into the gear space 300G. The reduction gear mechanism 210 is configured so as to reduce a speed of the rotational power output from the first end of the motor shaft 110.

In the present embodiment, the motor space 300 M and the gear space 300G are liquid-tightly divided to each other.

In details, a sealing member 116 as well as a bearing member 115 for supporting the motor shaft 110 in a rotatable manner around the axis line is provided within the pass-through hole 155. The motor space 300M and the gear space 300G are liquid-tightly separated to each other by the sealing member 116.

It is possible to use one kind of fluid having a suitable viscosity as the operation fluid of the HST formed by the hydraulic motor body 120 and the hydraulic pump body 420 and use another kind of fluid having a suitable viscosity as the lubricating oil by liquid-tightly separating the motor space 300M and the gear space 300g as described above.

The first planetary gear mechanism 220a includes a first sun gear 221a supported in a relatively non-rotatable manner by the first end of the motor shaft 110, a first planetary gear 224a that gears with the first sun gear 221a so as to revolve around the first sun gear 221a, a first carrier 222a that supports the first planetary gear 224a in a relatively rotatable manner and that revolves around the first sun gear 221a according to the revolution of the first planetary gear 224a, and a first internal gear 223a that gears with the first planetary gear 224a.

The second planetary gear mechanism 220b includes a second sun gear 221b operatively connected to the first carrier 222a, a second planetary gear 224b that gears with the second sun gear 221b so as to revolve around the second sun gear 221b, a second carrier 222b that supports the second planetary gear 224b in a relatively rotatable manner and that revolves around the second sun gear 221b according to the revolution of the second planetary gear 224b, and a second internal gear 223b that gears with the second planetary gear 224b.

The gear case 250 forms the casing 300E in cooperation with the motor case 150E.

In the present embodiment, the gear case 250 includes a first gear case 260 connected to the motor case 150E, and a second gear case 270 connected to the motor case 150E with the first gear case 260 in between.

The first gear case 260 has a hollow shape in which both the inner side in the width direction of the vehicle that contacts the motor case 150E and the outer side in the width direction of the vehicle on a side opposite to the motor case 150E are opened, and has an inner circumferential surface integrally formed with the first and second internal gears 223a, 223b.

The second gear case 270 has a hollow shape in which the inner side in the width direction of the vehicle that contacts the first gear case 260 is opened and the outer side in the width direction of the vehicle on a side opposite to the first gear case 260 is closed by an end wall.

The end wall of the second gear case 270 is formed with a pass-through hole 275 through which the output member 290 is inserted.

The output member 290 includes a flange part 291 connected to the second carrier 222b so as to rotate about the axis line according to the rotation of the second carrier 222b about the second sun gear 221b, and an output shaft part 292 extending outward in the width direction of the vehicle from the flange part 291.

In the present embodiment, the output member 290 is supported at two points by a first bearing member 295 arranged between an inner circumferential surface of the second gear case 270 and an outer circumferential surface of the flange part 291, and a second bearing member 296 arranged between an inner circumferential surface of the pass-through hole 275 formed in the end wall of the second gear case 270 and an outer circumferential surface of the output shaft part 292, thereby being stably rotated about the axis line.

It is possible to utilize a low-torque/high-rotation hydraulic motor main body as the hydraulic motor main body 120 by reducing the speed of the rotational power from the hydraulic motor main body with the reduction gear mechanism 210 and transmitting the rotational power whose speed has been reduced towards the corresponding driving wheel 21 as described above. Therefore, it is possible to compact the hydraulic motor main body 120 and reduce an amount of the hydraulic fluid leaked from the hydraulic motor main body 120, thereby enhancing the transmission efficiency of the HST is enhanced.

In the present embodiment, the first wheel motor device 500 is further provided with a brake unit 310.

The brake unit 310 is configured so as to apply a braking force to the motor shaft 110 that is in a state before the speed of the rotational power is reduced by the reduction gear mechanism 210.

Specifically, as shown in Fig. 23, the motor shaft 110 has a second end, which is on a side opposite to the first end on the outer side in the width direction of the vehicle, projecting to the inner side in the width direction of the vehicle from the motor case 150E, and a brake rotor of the brake unit 310 is mounted to the second end.

The brake unit 310 is connected to the motor case 150E so as to selectively apply the braking force to the second end of the motor shaft 110 based on an external operation.

In the present embodiment, the brake unit 310 is an inward-expanding drum brake that is internally mounted to a brake case, but in place thereof, may be a band brake having a drum-shaped brake rotor exposed to the outside of the brake case or may be a disc brake.

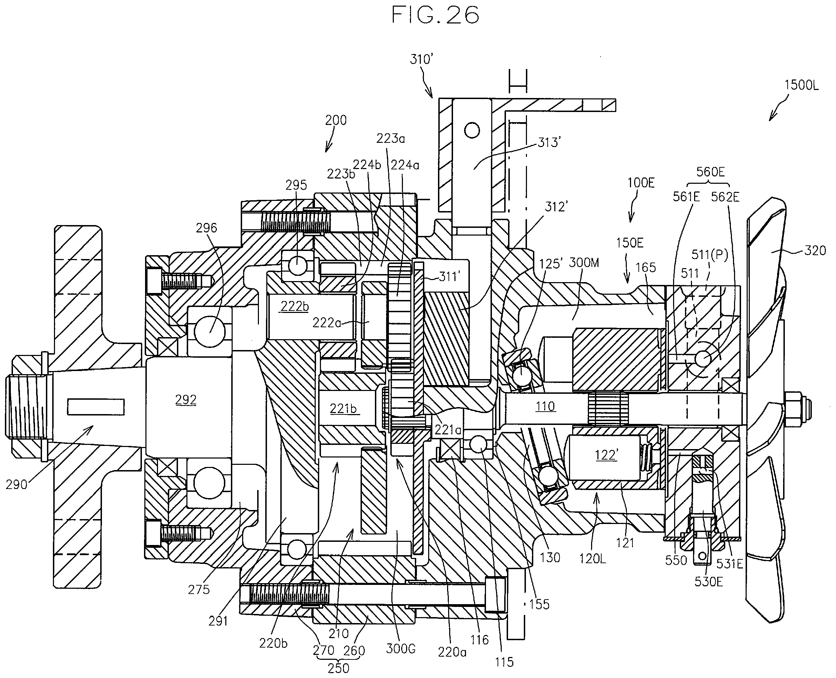

A brake unit 310' shown in Fig. 26 is configured so as to apply the brake force to the motor shaft 110 between the hydraulic motor main body 120 and the reduction gear mechanism 210.

Specifically, the brake unit 310' includes a brake disc 311' supported by the motor shaft 110 in a relatively non-rotatable manner around the axis line between the hydraulic motor main body 120 and the reduction gear mechanism 210, a brake pad 312' facing to the brake disc 311' in a state of being non-rotatable manner around the axis line and movable along the axis line of the motor shaft 110, and a brake control shaft 313' capable of being rotated around the axis line.

The brake control shaft 313' includes a portion, which contacts the brake pad 312', having a non-circular shape in cross section, and pushes the brake pad 312' towards the brake disc 311' when being rotated around the axis line.

Preferably, the first wheel motor device 1500L shown in Fig. 26 may be provided with a cooling fun 320 at the second end projecting inward in the width direction of the vehicle of the motor shaft 110.

The second axle-driving device 60 will now be described.

The second axle-driving device 60 is configured to hydraulically drive the pair of left and right second driving wheels 22L, 22R by utilizing the hydraulic fluid from the hydraulic pump main body 420, as shown in Fig. 22.

In the present embodiment, the first axle-driving device 50E and the second axle-driving device 60 are fluidly connected in parallel with respect to the hydraulic pump main body 420, as described above.

The second axle-driving device 60 may take various configurations.

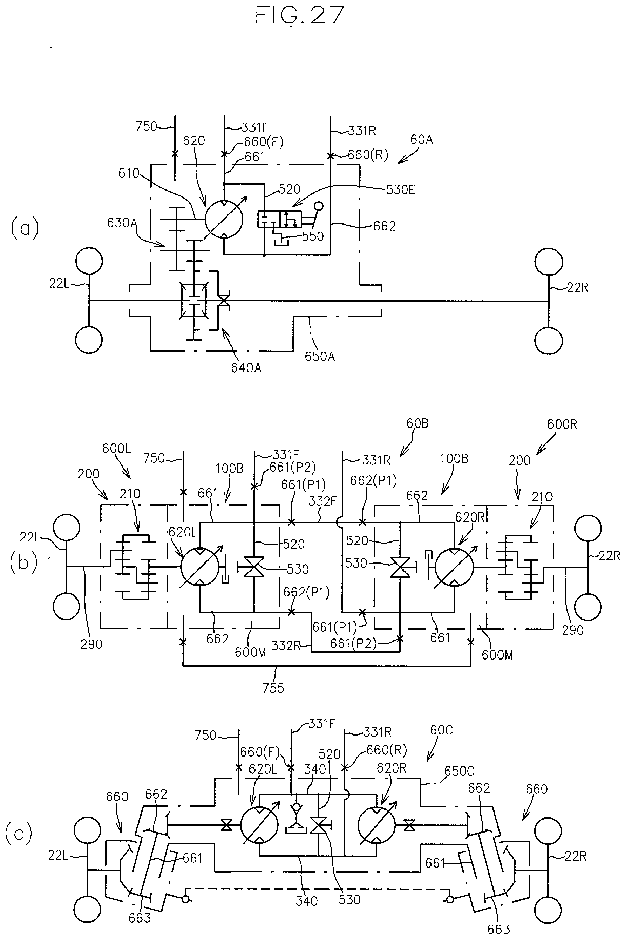

Figs. 27(a) to 27(c) show hydraulic circuit diagrams of the various second axle-driving devices 60.

In Figs. 27(a) to 27(c), the same reference characters are denoted for members same as the members described above.

The second axle-driving device 60A shown in Fig. 27(a) is configured to differentially drive the pair of left and right second driving wheels 22L, 22R by way of a mechanical differential gear mechanism 640A.

Specifically, the second axle-driving device 60A includes the single second hydraulic motor main body 620 directly or indirectly fluidly connected to the hydraulic pump main body 420, a motor shaft 610 for outputting the rotational power output from the second hydraulic motor main body 620, a speed reduction gear mechanism 630A for reducing the speed of the rotational power of the motor shaft 610, the mechanical differential gear mechanism 640A for differentially transmitting the rotational power whose speed has been reduced by the speed reduction gear mechanism 630A to the pair of left and right second driving wheels 22L, 22R, and an axle case 650A for accommodating the hydraulic motor main body 620, the motor shaft 610, the speed reduction gear mechanism 630A and the differential gear mechanism 640A.

As shown in Fig. 27(a), the axle case 650A is provided with a pair of second-motor-side first and second hydraulic fluid passages 661, 662 fluidly connected to the second hydraulic motor main body 620, one of the pair of second-motor-side first and second hydraulic fluid passages 661, 662 having a higher pressure at the time of forward movement of the vehicle and the other having a higher pressure at the time of backward movement of the vehicle.

The one second-motor-side hydraulic fluid passage that has a higher pressure at the time of forward movement of the vehicle (e.g., the second-motor-side first hydraulic fluid passage 661) is fluidly connected to a second-axle-side forward-movement-high-pressure conduit 331F, and the other second-motor-side hydraulic fluid passage that has a higher pressure at the time of backward movement of the vehicle (e.g., the second-motor-side second hydraulic fluid passage 662) is fluidly connected to a second-axle-side backward-movement-high-pressure conduit 331R.

As described above, the first and second axle-driving devices 50E, 60 are fluidly connected in parallel with respect to the hydraulic motor main body 420 in the present embodiment.

Therefore, the second-axle-side forward-movement-high-pressure conduit 331F is fluidly connected to the pump-side forward-movement-high-pressure conduit 311F, and the second-axle-side backward-movement-high-pressure conduit 331R is fluidly connected to the pump-side backward-movement-high-pressure conduit 311R.

Furthermore, as shown in Fig. 27(a), the second axle-driving device 60A is provided with the bypass valve 530E having a form of a rotary valve and interposed between the second-motor-side first and second hydraulic fluid passages 611, 612, and a drain conduit 750 for fluidly connecting the internal space of the axle case 650A to the fluid tank 90.

A second axle-driving device 60B shown in Fig. 27(b) includes a pair of left and right second wheel motor devices 600L, 600R for respectively driving the pair of left and right second driving wheels 22L, 22R.

The pair of left and right second wheel motor devices 600L, 600R have the same configuration to each other.

The second wheel motor device 600 has substantially the same configuration as the first wheel motor device 500 except that the hydraulic motor unit 100 is replaced with a hydraulic motor unit 100B.

That is, the second wheel motor device 600 includes the hydraulic motor unit 100B, the speed reduction gear unit 200, and the output member 290.

The hydraulic motor unit 100B in the left-side second wheel motor device 600L includes the second hydraulic motor main body 620 (hereinafter referred to as a left-side second hydraulic motor main body 620L in some cases), and a pair of second-motor-side first and second hydraulic fluid passages 661, 662 fluidly connected to the left-side second hydraulic motor main body 620L.

The second-motor-side first hydraulic fluid passage 661 has a plurality of hydraulic fluid ports including a first hydraulic fluid port 661(P1) and a second hydraulic fluid port 661(P2), and the second-motor-side second hydraulic fluid passage 662 has a first hydraulic fluid port 662(P1).

The hydraulic motor unit 100B in the right-side second wheel motor device 600R includes the second hydraulic motor main body 620 (hereinafter referred to as a right-side second hydraulic motor main body 620R in some cases), and a pair of second-motor-side first and second hydraulic fluid passages 661, 662 fluidly connected to the right-side second hydraulic motor main body 620R.

The second-motor-side first hydraulic fluid passage 661 has a plurality of hydraulic fluid ports including a first hydraulic fluid port 661(P1) and a second hydraulic fluid port 661P(2), and the second-motor-side second hydraulic fluid passage 662 has a first hydraulic fluid port 662(P1).

In the configuration shown in Fig. 27(b), the above various hydraulic fluid passages are fluidly connected so that the second-motor-side first hydraulic fluid passage 661 in the left-side second wheel motor device 600L and the second-motor-side second hydraulic fluid passage 662 in the right-side second wheel motor device 600R have higher pressures at the time of forward movement of the vehicle, and the second-motor-side second hydraulic fluid passage 662 in the left-side second wheel motor device 600L and the second-motor-side first hydraulic fluid passage 661 in the right-side second wheel motor device 600R have higher pressures at the time of backward movement of the vehicle.

Specifically, the second hydraulic fluid port 661P(2) of the second-motor-side first hydraulic fluid passage 661 in the left-side second wheel motor device 600L is fluidly connected to the second-axle-side forward-movement-high-pressure conduit 331F, and the first hydraulic fluid port 661(P1) of the second-motor-side first hydraulic fluid passage 661 in the left-side second wheel motor device 600L and the first hydraulic fluid port 662(P1) of the second-motor-side second hydraulic fluid passage 662 in the right-side second wheel motor device 600R are fluidly connected to each other through the second-axle-side forward-movement-high-pressure connecting conduit 332F.

The first hydraulic fluid port 662(P1) of the second-motor-side second hydraulic fluid passage 662 in the left-side second wheel motor device 600L and the second hydraulic fluid port 661(P2) of the second-motor-side first hydraulic fluid passage 661 in the right-side second wheel motor device 600R are fluidly connected to each other through the second-axle-side backward-movement-high-pressure connecting conduit 332R, and the first hydraulic fluid port 661P(1) of the second-motor-side first hydraulic fluid passage 661 in the right-side second wheel motor device 600R is fluidly connected to the second-axle-side backward-movement-high-pressure conduit 331R.

With the configuration, both the right-side and left-side second hydraulic motor main bodies 620R, 620L are hydraulically and differentially driven by the single hydraulic pump main body 420, as similar to the first wheel motor devices 500L, 500R.

A reference numeral 755 in Fig. 27(b) denotes for a connecting conduit for fluidly connecting a motor space 600M in the left-side second wheel motor device 600L and a motor space 600M in the right-side second wheel motor device 600R.

A reference numeral 530 in Fig. 27(b) denotes for a bypass valve without a drain function.

A second axle-driving device 60C shown in Fig. 27(c) is configured so as to integrally accommodate the left-side and right-side second hydraulic motor main bodies 620L, 620R.

Specifically, the second axle-driving device 60C includes the left-side and right-side second hydraulic motor main bodies 620L, 620R that are fluidly connected to each other by way of a pair of second-motor-side hydraulic fluid lines 340 so as to form a closed circuit, and a motor case 650C for accommodating the pair of second hydraulic motor main bodies 620L, 620R.

One second-motor-side hydraulic fluid line 340 having a higher pressure at forward movement of the vehicle out of the pair of second-motor-side hydraulic fluid lines 340 is fluidly connected to the second-axle-side forward-movement-high-pressure conduit 331F.

The other second-motor-side hydraulic fluid line 340 having a higher pressure at backward movement of the vehicle out of the pair of second-motor-side hydraulic fluid lines 340 is fluidly connected to the second-axle-side backward-movement-high-pressure conduit 331R.

The second axle-driving device 60C is further provided with a pair of speed reduction gear units 660 arranged on both sides in the vehicle width direction of the motor case 650C.

The speed reduction gear unit 660 includes a king pin shaft 661 extending along the up and down direction; a first bevel type speed reduction gear 662 arranged in a relatively non-rotatable manner at an upper end side of the king pin shaft 661, the first bevel type speed reduction gear 662 being operatively connected to the corresponding second hydraulic motor main body 620; and a second bevel type speed reduction gear 663 arranged at a lower end side of the king pin shaft 661, the second bevel type speed reduction gear 663 being operatively connected to the corresponding second driving wheel 22. The speed reduction gear unit 660 supports the corresponding second driving wheel 22 so as to be capable of being steered about the king pin shaft 661.

The second hydraulic motor main body 620 will now be described with taking the second axle-driving device 60B shown in Fig. 27(b) as an example.

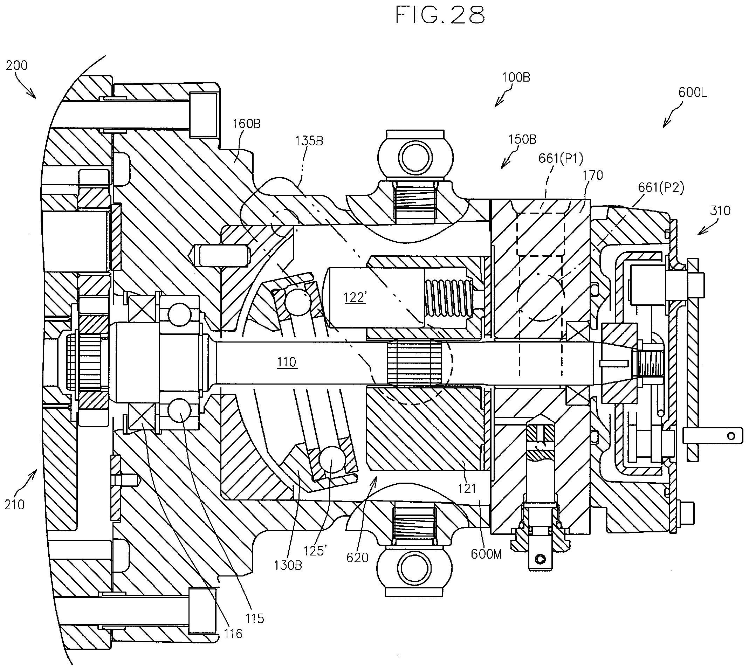

Fig. 28 shows a vertical sectional view of the left-side second wheel motor device 600L.

In the figure, the same reference numerals are denoted for the members same as in the first wheel motor device 500, and the description thereof will be omitted.

The hydraulic motor unit 100B in the second wheel motor device 600 includes the second hydraulic motor main body 620, a motor case 150B, and the motor shaft 110, as shown in Fig. 28.

As shown in Fig. 28, the second hydraulic motor main body 620 includes the motor-side cylinder block 121 supported by the motor shaft 110 in a relatively non-rotatable manner, and a plurality of motor-side pistons 122' supported by the motor-side cylinder 121 in a relatively non-rotatable manner about the axial line and in a reciprocating manner along the axial line.

As shown in Fig. 28, the motor-side piston 122' of the second hydraulic motor main body 620 is of a shoeless type having a free end engaged to a corresponding swash plate 130B without a shoe (for example, by way of a thrust bearing 125'), thereby reducing the cost.

In the present embodiment, the second hydraulic motor main body 620 is configured so that the suction/discharge amount is manually and arbitrarily changed, thereby increasing or decreasing the driving speed of the second driving wheels 22L, 22R with respect to the driving speed of the first driving wheels 21L, 21R.

According to such configuration, it is possible to enhance the traveling stability and to prevent the tire from being abnormally worn by properly adjusting the driving speed of the second driving wheels with respect to the driving speed of the first driving wheels at the time of straight movement of the vehicle. Furthermore, it is possible to voluntarily change the driving speed of the second driving wheels 22L, 22R with respect to the first driving wheels 21L, 21R according to the operation amount of the steering member 5, thereby compensating the difference in the turning radius between the second driving wheel 22 and the first driving wheel 21 when the vehicle turns.

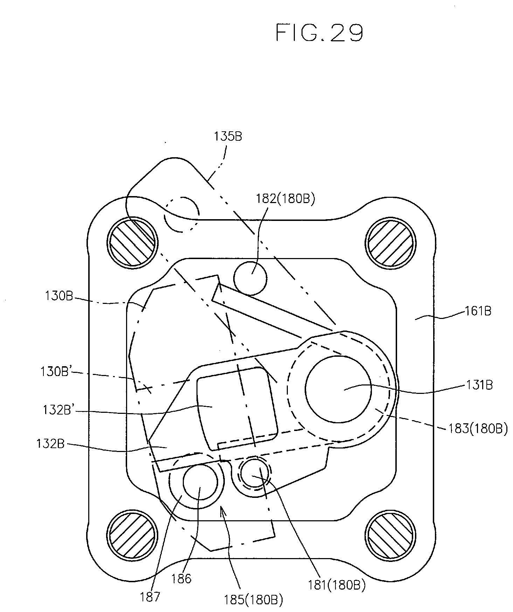

Specifically, in addition to the above configuration, the hydraulic motor unit 100B includes a movable swash plate 130B to which the free end of the motor-side pistons 122' are directly or indirectly engaged, the movable swash plate 130B changing the reciprocating range of the motor-side pistons 122' according to the slanting position; and a supporting shaft 131B (see Fig. 29 mentioned below) rotated about the axial line based on an external operation.

The movable swash plate 130B is of a cradle type in the present embodiment, but may be of a trunnion type.

Fig. 29 shows a detailed view of the vicinity of the supporting shaft 131B and the movable swash plate 130B.

The motor case 150B includes a motor case main body 160B and the motor-side port block 1170.

The motor case main body 160B is formed with an opening (not shown) at a side part. As shown in Fig. 29, a side cover 161B for closing the opening is detachably connected to the motor case main body 160B.

The supporting shaft 131B is supported by the side cover 161B so as to extend in a direction orthogonal to the motor shaft 110 and to be rotatable around the axis line.

The movable swash plate 130B is configured so as to swing about a swing center in response to a rotation about the axis line of the supporting shaft 131B. Specifically, the hydraulic motor unit 100B includes a swinging arm 132B for operatively connecting the supporting shaft 131B and the movable swash plate 130B, and a control arm 135B arranged at an operation end of the supporting shaft 131B, as shown in Fig. 29.

The swinging arm 132B has a proximal end supported by the supporting shaft 131B in a relatively non-rotatable manner and a distal end having an engagement part 132B' that is brought into a concave-convex engagement with a side part of the movable swash plate 130B.

In the present embodiment, the movable swash plate 130B is formed with an engagement groove 130B' at the side part, and the engagement part 132B is an engagement projection that is engaged into the engagement groove 130B'.

The control arm 135B has a proximal end supported by the supporting shaft 131B in a relatively non-rotatable manner and a distal end operatively connected to the steering member 5.

According to the configuration, when the control arm 135B is swung about the supporting shaft 131B in response to the manual operation of steering member 5, the supporting shaft 131B rotates about the axial line and the movable swash plate 130B is swung about the swing center by way of the swinging arm 132B.

The hydraulic motor unit 100B may be preferably provided with a reference-position returning mechanism 180B for holding the movable swash plate 130B at a reference slanting position when the operation force on the control arm 135B is released.

As shown in Fig. 29, the reference-position returning mechanism 180B includes a biasing member for biasing the movable swash plate 130B to a first side about the swing center, and a reference-position setting member defining a swinging end on the first side about the swing center of the movable swash plate 130B that is biased by the biasing member.

The biasing member is interposed, for example, between the supporting shaft 131B that is rotatable about the axial line and a coupling member (the swinging arm 132B in the illustrated embodiment) for operatively connecting the supporting shaft and the movable swash plate 130B so that the movable swash plate 130B slants about the swing center in response to the rotation of the supporting shaft about the axial line.

In the present embodiment, the biasing member includes a movable pin 181 arranged on the swinging arm 132B, a fixed pin 182 arranged on the side cover 161b, and a coil spring 183 winded around the supporting shaft 131B.

The coil spring 183 is arranged so that first and second ends are sandwiched by the fixed pin 182 and the movable pin 181.

That is, the coil spring 183 has the first end engaged with the fixed pin 182 and the second end engaged with the movable pin 181 so as to bias the swinging arm 132B to the first side (a counterclockwise direction in Fig. 29) about the axial line of the supporting shaft 131B.

In the present embodiment, the reference-position setting member engages the swinging arm 132B to define the swinging end on the first side about the swing center of the movable swash plate 130B that is biased by the biasing member, as shown in Fig. 29.

Specifically, a stopper pin 185 arranged on the side cover 161B so as to engage the swinging arm 132B is arranged as the reference-position setting member in the present embodiment.

The reference-position setting member is preferably configured so that the swinging end on the first side about the swing center of the movable swash plate is changed according to an external operation from outsides of the motor case 150B.

Specifically, the stopper pin 185 is an eccentric pin including a base part 187 supported by the motor case 160 so as to rotate about the axial line in response to the external operation, and an engagement part 186 that is rotated about the axial line of the base part 187 along with the base part 187 and engages the swinging arm 132B, the engagement part 186 being eccentric with respect to the base part 187.

According to such configuration, it is possible to adjust the position of the engagement part 186 by rotating the base part 187 about the axial line and fixing the same at an arbitrary rotation position. Therefore, the swinging end of the swinging arm 132B (i.e., the reference position of the movable swash plate 130B) can be easily adjusted.

By arranging the thus configured reference-position returning mechanism 180B, when the control arm 135B is swung to a second side about the axial line of the supporting shaft 131B against the biasing force of the coil spring 183, the movable swash plate 130B accordingly slants to a second side about the swing center. Therefore, the slanting position of the movable swash plate 130B can be easily changed according to the operation amount of the steering member 5.

Moreover, according to such configuration, the movable swash plate 130B is held at the reference slanting position when the operation force is not applied to the steering member 5. Therefore, the reference-position returning mechanism 180B also functions as a device for adjusting and fixing the suction/discharge amount of the second hydraulic motor main body 620 to a predetermined value irrespective of the operation amount of the steering member 5.

The control arm 135B is preferably removable with respect to the supporting shaft 131B. According to the configuration, the control arm 135B is removed in a case where the suction/discharge amount of the second hydraulic motor main body 620 is fixed.

### Sixth embodiment

Still another embodiment of the present invention will now be described with reference to the accompanying drawings.

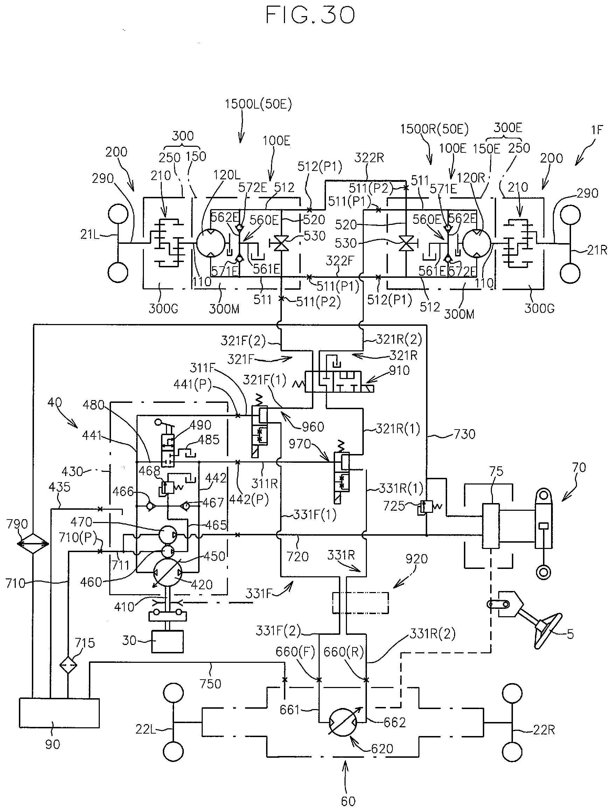

Fig. 30 shows a hydraulic circuit diagram of a working vehicle 1F to which a sixth embodiment of the present invention is applied.

The same reference characters are denoted for the same members as in the fifth embodiment, and thus the description thereof will be omitted.

The working vehicle 1E applied with the fifth embodiment is a full-time four-wheel-drive type vehicle in which the first axle-driving device 50E and the second axle-driving device 60 are constantly fluidly connected with respect to the hydraulic pump main body 420. On the other hand, the working vehicle 1F applied with the present embodiment is a two-wheel-drive/four-wheel-drive change-over type working vehicle in which the first axle-driving devices 50E can be switched between a driving state or a non-driving state.

Specifically, the working vehicle 1F includes, in addition to the configuration of the working vehicle 1E in which the first and second axle-driving devices 50E, 60 are constantly driven, a first-axle-side on/off valve 910 for selectively setting the first axle-driving device 50E to the driving state or the non-driving state.

In details, the first-axle-side forward-movement-high-pressure conduit 321F includes a first conduit 321F(1) having a first end fluidly connected to the pump-side forward-movement-high-pressure conduit 311F through the forward-movement front-rear wheel hydraulic differential lock mechanism 960, and a second conduit 321F(2) having a first end fluidly connected to the corresponding hydraulic fluid port in the first axle-driving device 50E.

The first-axle-side backward-movement-high-pressure conduit 321R includes a first conduit 321R(1) having a first end fluidly connected to the pump-side backward-movement-high-pressure conduit 311R through the backward-movement front-rear wheel hydraulic differential lock mechanism 970, and a second conduit 321R(2) having a first end fluidly connected to the corresponding hydraulic fluid port in the first axle-driving device 50E.

The first-axle-side on/off valve 910 is configured to selectively take a first axle driving position and a first axle non-driving position. Specifically, the first-axle-side on/off valve 910 fluidly connects a second end of the first conduit 321F(1) of the first-axle-side forward-movement-high-pressure conduit 321F to a second end of the second conduit 321F(2) and fluidly connects a second end of the second conduit 321R(2) of the first-axle-side backward-movement-high-pressure conduit 321R to a second end of the first conduit 321R(1) so that the first axle-driving device is set to the driving state when the first-axle-side on/off valve 910 is positioned at the first axle driving position. Further, the first-axle-side on/off valve 910 closes the second end of the first conduit 321F(1) of the first-axle-side forward-movement-high-pressure conduit 321F and closes the second end of the first conduit 321R(1) of the first-axle-side backward-movement-high-pressure conduit 321R so that the first axle-driving device 50E is set to the non-driving state when the first-axle-side on/off valve 910 is positioned at the first axle non-driving position.

However an electromagnetic switching valve is used as the first-axle-side on/off valve 910 in the present embodiment, a manual switching valve may be also used.

Since all of the hydraulic fluid discharged from the hydraulic pump main body 420 is supplied to the second hydraulic motor main body 620 when the first-axle-side on/off valve 910 is positioned at the first axle non-driving position, the speed of the rotational output of the second hydraulic motor main body 620 at the time when the first-axle-side on/off valve 910 is positioned at the first axle non-driving position is higher than that at the time when the first-axle-side on/off valve 910 is positioned at the first axle driving position. Accordingly, the first-axle-side on/off valve 910 also functions as a traveling speed change device.

Preferably, the first-axle-side on/off valve 910 is operatively connected to the forward-movement front-rear wheel hydraulic differential lock mechanism 960 and the backward-movement front-rear wheel hydraulic differential lock mechanism 970 so that both of the mechanisms 960, 970 are in the hydraulically differential state when the first-axle-side on/off valve 910 is positioned at the first axle non-driving position. According to such configuration, it is possible to effectively prevent an excessive hydraulic pressure from acting on the front-rear wheel hydraulic differential lock mechanisms 960, 970 at the time when the first-axle-side on/off valve 910 is positioned at the first axle non-driving position, thereby protecting the front-rear wheel hydraulic differential lock mechanisms 960, 970.

The first-axle-side on/off valve 910 is provided in the present embodiment as described above. Alternatively, it is possible that the first axle-driving device 50E is constantly driven, and a second-axle-side on/off valve is provided for selectively setting the second axle-driving device 60 to a driving sate or a non-driving state.

That is, the second-axle-side on/off valve having the same function as the first-axle-side on/off valve 910 may be positioned at an area 920 shown with the dashed line in Fig. 30.

Specifically, the second-axle-side forward-movement-high-pressure conduit 331F is divided into a first conduit 331F(1) having a first end fluidly connected to the pump-side forward-movement-high-pressure conduit 311F through the forward-movement front-rear wheel hydraulic differential lock mechanism 960, and a second conduit 331F(2) having a first end fluidly connected to the corresponding hydraulic fluid port in the second axle-driving device 60.

The second-axle-side backward-movement-high-pressure conduit 331R is divided into a first conduit 331R(1) having a first end fluidly connected to the pump-side backward-movement-high-pressure conduit 311R through the backward-movement front-rear wheel hydraulic differential lock mechanism 970, and a second conduit 331R(2) having a first end fluidly connected to the corresponding hydraulic fluid port in the second axle-driving device 60.

The second-axle-side on/off valve is configured to selectively take a second axle driving position and a second axle non-driving position. Specifically, the second-axle-side on/off valve fluidly connects a second end of the first conduit 331F(1) of the second-axle-side forward-movement-high-pressure conduit 331F to a second end of the second conduit 331F(2) and fluidly connects a second end of the second conduit 331R(2) of the second-axle-side backward-movement-high-pressure conduit 331R to a second end of the first conduit 331R(1) so that the second axle-driving device 60 is set to the driving state when the second-axle-side on/off valve is positioned at the second axle driving position. Further, the second-axle-side on/off valve closes the second end of the first conduit 331F(1) of the second-axle-side forward-movement-high-pressure conduit 331F and closes the second end of the first conduit 331R(1) of the second-axle-side backward-movement-high-pressure conduit 331R so that the second axle-driving device 60 is set to the non-driving state when the second-axle-side on/off valve is positioned at the second axle non-driving position.

The first wheel motor device 1500 is provided with the bypass valve 530E having a drain function in the fifth embodiment. On the other hand, the first wheel motor device 1500 is provided with the bypass valve 530 without the drain function in the present embodiment.

### Seventh embodiment

Still another embodiment of the fourth aspect of the present invention will now be described with reference to the accompanying drawing.

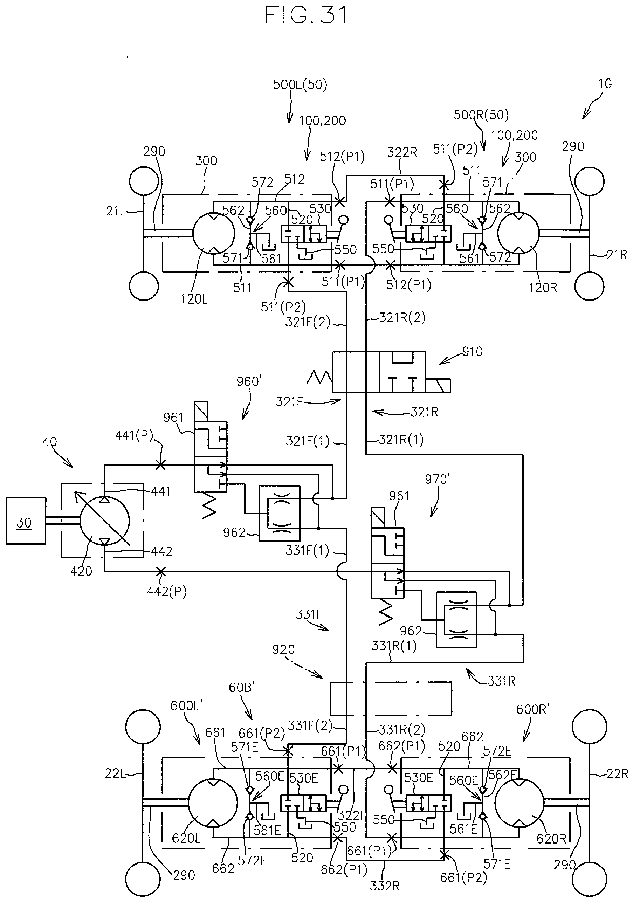

Fig. 31 shows a hydraulic circuit diagram of a working vehicle 1G to which a seventh embodiment of the present invention is applied.

The same reference characters are denoted for the same members as in the fifth or the sixth embodiment, and thus the description thereof will be omitted.

The working vehicle 1G mainly differs from the working vehicle 1F of the sixth embodiment in that the forward-movement front-rear wheel hydraulic differential lock mechanism 960 and the backward-movement front-rear wheel hydraulic differential lock mechanism 970 are changed to a forward-movement front-rear wheel hydraulic differential lock mechanism 960' and the backward-movement front-rear wheel hydraulic differential lock mechanism 970', respectively.

Specifically, the front-rear wheel hydraulic differential lock mechanism 960 in the fifth or the sixth embodiment includes a switching valve integrally provided with a fluid passage switching function and a flow dividing and combining function.

On the other hand, as shown in Fig. 31, the front-rear wheel hydraulic differential lock mechanism 960', 970' of the present embodiment includes a switching valve 961 for switching the fluid passage and a flow dividing and combining valve 962 for determining the flow dividing and combining ratio, the switching valve 961 and the flow dividing and combining valve 962 being separate to each other, whereby meeting various specifications of the working vehicle.

Specifically, in the working vehicle, the volumes of the hydraulic motor main body 120 for driving the first driving wheel 21 and the hydraulic motor main body 620 for driving the second driving wheel 22 are determined so that the peripheral rotational speeds of the first and second driving wheels 21, 22 at the time when the working vehicle travels straight are substantially the same to each other.

For instance, in one working vehicle (see Fig. 20) in which the diameter of the first driving wheel 21 and the diameter of the second driving wheel 22 are substantially the same, the motor volume of the hydraulic motor main body 120 for the first driving wheel and the motor volume of the hydraulic motor main body 620 for the second driving wheel are same to each other.

On the other hand, in the other working vehicle in which the diameter of the first driving wheel 21 and the diameter of the second driving wheel 22 are different, the motor volumes of the hydraulic motor main body 120 and the hydraulic motor main body 620 are differed to each other so that the peripheral rotational speeds of the first and second driving wheels 21, 22 at the time when the working vehicle travels straight are same to each other.

Therefore, the set value of the flow dividing and combining ratio differs for every working vehicle depending on the diameter ratio of the front and rear wheels and the motor volumes of the hydraulic motors for the front and rear wheels.

In this regards, the flow dividing and combining valve 962 is separate from the switching valve 961 in the present embodiment, as described above.

According to the configuration, it is possible to obtain the flow dividing and combining ratio suited for the various working vehicles having different specifications by changing replacing only the flow dividing and combining valve 962 while commonly using the switching valve 961, whereby enhancing versatility.

In the present embodiment, the working vehicle 1G includes a second axle-driving device 60B', as shown in Fig. 31.

The second axle-driving device 60B' includes a left-side second wheel motor device 600L' and a right-side second wheel motor device 600R'.

The second wheel motor devices 600L', 600R' differ from the second wheel motor devices 600L, 600R in that the self-suction fluid passage 560E and the check valve 571E, 572E are arranged.

According to the configuration where a self-suction configuration is arranged in the second axle-driving device 60B', it is possible to omit the drain conduit 750 and the drain connecting conduit 755.

The second wheel motor devices 600L', 600R' further include the bypass valve 530E in place of the bypass valve 530 in the second wheel motor device 600L, 600R.

In the fifth to the seventh embodiments, the explanation has been made with taking a case in which the first axle-driving device 50E and the second axle-driving device 60 are fluidly connected in parallel with respect to the hydraulic pump unit 40 as an example.

Alternatively, the first and second axle-driving devices 50E, 60 may be fluidly connected in series with respect to the hydraulic pump unit 40.

This specification is by no means intended to restrict the present invention to the preferred embodiments and the modified embodiments set forth therein. Various modifications to the wheel motor device, the working vehicle and the hydraulic drive working vehicle may be made by those skilled in the art without departing from the spirit and scope of the present invention as defined in the appended claims.

## Claims

1. A wheel motor device (500L, 500R) comprising a hydraulic motor main body (120) that is spaced apart from a hydraulic pump main body (420) operatively driven by a driving power source (30) and is fluidly connected to the hydraulic pump main body (420) via hydraulic fluid conduits so as to form a hydrostatic transmission (HST) in cooperation with the same, a speed reduction gear mechanism (210) for reducing a speed of a rotational output of the hydraulic motor main body (120), an output member (290) for outputting the rotational output whose speed has been reduced by the speed reduction gear mechanism (210) to a corresponding driving wheel (21), and a casing (300) for accommodating the hydraulic motor main body (120) and the speed reduction gear mechanism (210), wherein
the casing (300) has a motor space (300M) for accommodating the hydraulic motor main body (120) and a gear space (300G) for accommodating the speed reduction gear mechanism (210), the motor space (300M) being capable of storing fluid in a state of being liquid-tightly separate from the gear space (300G); and
the casing (300) is provided with hydraulic fluid ports (511(P), 512(P)), to which the hydraulic fluid conduits are connected, and a flow-in port (300M(in)) for introducing fluid into the motor space and a flow-out port (300M(out)) for discharging fluid outward from the motor space (300M).

2. A wheel motor device (500L, 500R) according to claim 1, comprising
a hydraulic motor unit (100) including the hydraulic motor main body (120), a motor case (150) that forms the motor space (300M), and a motor shaft (110) that supports the hydraulic motor main body (120) in a relatively non-rotatable manner;
a reduction gear unit (200) including the reduction gear mechanism (210) and a gear case (250) connected to the motor case (150) so as to form the gear space (300G);
the motor case (150) being formed with a pass-through hole (155) for allowing the motor shaft (110) to be inserted into the gear space (300G); and
an oil sealing member arranged between an inner circumferential surface of the pass-through hole (155) and an outer circumferential surface of the motor shaft (110).

## Patentansprüche

1. Radmotorvorrichtung (500L, 500R), umfassend: einen Hydraulikmotor-Hauptkörper (120), der von einem Hydraulikpumpen-Hauptkörper (420) beabstandet ist, der durch eine Antriebskraftquelle (30) angetrieben wird und mit dem Hydraulikpumpen-Hauptkörper (420) über Hydraulikfluidleitungen in Strömungsverbindung steht, so dass im Zusammenwirken damit eine hydrostatische Kraftübertragung (Hydrostatic Transmission, HST) gebildet wird, einen Untersetzungsgetriebemechanismus (210) zum Reduzieren einer Abtriebsdrehzahl des Hydraulikmotor-Hauptkörpers (120), ein Abgabeelement (290) zum Abgeben der Rotationskraft, deren Drehzahl durch den Untersetzungsgetriebemechanismus (210) reduziert wurde, an ein entsprechendes Antriebsrad (21), und ein Gehäuse (300) zum Aufnehmen des Hydraulikmotor-Hauptkörpers (120) und des Untersetzungsgetriebemechanismus (210),
wobei das Gehäuse (300) einen Motorraum (300M) zum Aufnehmen des Hydraulikmotor-Hauptkörpers (120) und einen Getrieberaum (300G) zum Aufnehmen des Untersetzungsgetriebemechanismus (210) aufweist, wobei der Motorraum (300M) in der Lage ist, Fluid in einem Zustand zu speichern, in dem er flüssigkeitsdicht von dem Getrieberaum (300G) getrennt ist; und
wobei das Gehäuse (300) mit Hydraulikfluidports (511(P), 512(P)) versehen ist, mit denen die Hydraulikfluidleitungen verbunden sind, sowie mit einem Zulaufport (300M(in)) zum Einleiten von Fluid in den Motorraum und einem Abflussport (300M(out)) zum Ablassen von Fluid aus dem Motorraum (300M).

2. Radmotorvorrichtung (500L, 500R) nach Anspruch 1, umfassend:
eine Hydraulikmotoreinheit (100), die den Hydraulikmotor-Hauptkörper (120) umfasst, ein Motorgehäuse (150), das den Motorraum (300M) bildet, und eine Motorwelle (110), die den Hydraulikmotor-Hauptkörper (120) in einer relativ nichtdrehbaren Weise stützt;
eine Untersetzungsgetriebeeinheit (200), die den Untersetzungsgetriebemechanismus (210) und ein Getriebegehäuse (250) umfasst, das mit dem Motorgehäuse (150) verbunden ist, um den Getrieberaum (300G) zu bilden;
wobei das Motorgehäuse (150) mit einem Durchgangsloch (155) ausgebildet ist, um die Motorwelle (110) in den Getrieberaum (300G) einführen zu können; und
ein Öldichtungselement, das zwischen einer Innenumfangsfläche des Durchgangslochs (155) und einer Außenumfangsfläche der Motorwelle (110) angeordnet ist.

## Revendications

1. Dispositif de moteur de roue (500L, 500R) comprenant un corps principal de moteur hydraulique (120) qui est espacé d'un corps principal de pompe hydraulique (420) entraîné de manière opérationnelle par une source de puissance motrice (30), et est connecté de manière fluide au corps principal de pompe hydraulique (420) via des conduites de fluide hydraulique de manière à former une transmission hydrostatique (HST) en coopération avec celui-ci, un mécanisme d'engrenage réducteur de vitesse (210) pour réduire la vitesse d'une sortie en rotation du corps principal de moteur hydraulique (120), un élément de sortie (290) pour délivrer la sortie en rotation dont la vitesse a été réduite par le mécanisme d'engrenage réducteur de vitesse (210) à une roue motrice correspondante (21), et un carter (300) pour recevoir le corps principal de moteur hydraulique (120) et le mécanisme d'engrenage réducteur de vitesse (210), dans lequel
le carter (300) présente un espace moteur (300M) destiné à recevoir le corps principal de moteur hydraulique (120) et un espace engrenage (300G) destiné à recevoir le mécanisme d'engrenage réducteur de vitesse (210), l'espace moteur (300M) pouvant stocker un fluide dans un état où il est séparé de manière étanche de l'espace engrenage (300G); et le carter (300) est pourvu d'orifices de fluide hydraulique (511(P), 512(P)) auxquels sont raccordés les conduites de fluide hydraulique, et d'un orifice d'entrée (300M(in)) pour introduire du fluide dans l'espace moteur, et d'un orifice de sortie (300M(out)) pour décharger le fluide de l'espace moteur (300 M) vers l'extérieur.

2. Dispositif de moteur de roue (500L, 500R) selon la revendication 1, comprenant
une unité de moteur hydraulique (100) comprenant le corps principal de moteur hydraulique (120), un carter de moteur (150) qui forme l'espace moteur (300M), et un arbre de moteur (110) qui supporte le corps principal de moteur hydraulique (120) de manière relativement non rotative;
une unité d'engrenage réducteur (200) comprenant le mécanisme d'engrenage réducteur (210) et un carter d'engrenage (250) relié au carter de moteur (150) de manière à former l'espace engrenage (300G);
le carter de moteur (150) est muni d'un trou traversant (155) pour permettre à l'arbre de moteur (110) d'être inséré dans l'espace engrenage (300G); et
un élément d'étanchéité à l'huile agencé entre une surface circonférentielle intérieure du trou traversant (155) et une surface circonférentielle extérieure de l'arbre de moteur (110).
